Europäisches Patentamt

European Patent Office

Office européen des brevets

(11) Publication number: **0 027 899**
**B1**

# (12) EUROPEAN PATENT SPECIFICATION

(45) Date of publication of patent specification: **08.01.86**

(21) Application number: **80105774.6**

(22) Date of filing: **25.09.80**

(51) Int. Cl.⁴: **G 06 F 3/12**, G 06 K 15/10

## (54) Printer subsystem with dual microprocessor control.

(30) Priority: **19.10.79 US 86484**
**19.10.79 US 86383**

(43) Date of publication of application:
**06.05.81 Bulletin 81/18**

(45) Publication of the grant of the patent:
**08.01.86 Bulletin 86/02**

(84) Designated Contracting States:
**BE CH DE FR GB IT LI NL SE**

(56) References cited:
**DE-A-2 825 185**
**FR-A-2 372 703**
**US-A-3 931 614**
**US-A-4 074 067**
**US-A-4 096 484**

**ELEKTRONIK, no. 12, November 1978, page 39,
Munich, DE. "TALLY Zeilendrucker T 3300"**

**IBM TECHNICAL DISCLOSURE BULLETIN, vol.
22, no. 1, June 1979, pages 269-271 New York,
U.S.A. D.O. HAYS et al.: "Standard printer or
I/O adapter control method and apparatus"**

(73) Proprietor: **International Business Machines
Corporation
Old Orchard Road
Armonk, N.Y. 10504 (US)**

(72) Inventor: **Boynton, William Warren
P.O. Box 799
Bronson Florida 32621 (US)**
Inventor: **Weber, Charles Joseph
784 NW 7 Street
Boca Raton Florida 33432 (US)**
Inventor: **Bare, Gary Thomas
117 Sea Islands Lane
Boca Raton Florida 33431 (US)**
Inventor: **Zimmerman, Lee Tyrrell
1322 SW 12 Avenue
Boca Raton Florida 33432 (US)**

(74) Representative: **Colas, Alain
Compagnie IBM France Département de
Propriété Industrielle
F-06610 La Gaude (FR)**

(56) References cited:
**IBM TECHNICAL DISCLOSURE BULLETIN, vol.
11, no. 2, July 1968, pages 132-133 New York,
U.S.A. A.M. PINE: "Typewriter testing device"**

Courier Press, Leamington Spa, England.

**Description**

Technical field to which the invention relates

This invention relates to a printer subsystem with microprocessor control and more particularly to printer control units for such subsystems. The printer subsystem is interconnected with a host system for receipt of command signals from such host system to perform various printing functions and of data signals to print characters of information on a form. Two microprocessors are incorporated in the printer subsystem for controlling the printing operations.

Relevant background art

It has been customary in such printer subsystems to rely heavily on the host system for operational and printing control of the printer unit. In some cases, a limited amount of control capability is incorporated in the printer subsystem itself. In those subsystems where local control is provided in the form of control logic or local processor control, such control logic or processor control ordinarily handles tasks in the printer subsystem in a sequential fashion resulting in somewhat slower response times and in some cases overloading of the control facility.

In other printer subsystems, asynchronous operations are performed between two microprocessors sharing a common storage where various printer control blocks are queued. Such subsystems are described in an article published in the IBM Technical Disclosure Bulletin of June 1979—Vol. 22, No. 1, p. 269, 270, 271 and entitled "Standard printer or I/O adapter control method and apparatus", by D. O. Hays, A. W. Maholick and N. N. Mize. A first microprocessor acts as a system adapter and loads received information in PCB (Printer Control Blocks). This microprocessor puts a printer to a PCB on a work queue which allows asynchronous operation to take place with the various PCB's being queued in a random access memory. A second microprocessor operating as a printer adapter accesses the work queue PCBs in the random-access memory.

In these previous printer subsystems, software and hardware means must be provided to handle and queue the PCB in asynchronous operation.

An arrangement for producing print signals for a print head having a slanted wire image configuration is disclosed in FR—A—2372703.

Disclosure of the invention

In accordance with the present invention as defined in claim 1, a printer subsystem is provided with two microprocessors, each being operable relatively independently of the other, being able to communicate with the other as the need arises and each having its assigned functions. Both of the microprocessors can operate concurrently to accomplish its assigned functions.

One of the microprocessors serves in a communications function to receive data and command information from a host system and to provide status information back to the host system, while the other microprocessor serves more directly to control the printer functions such as forms feed, ribbon feed, print drive, and the like.

First interconnecting means between the first microprocessor and the host system receive command and data signals from said host system and transmits status signals back to said host system representation of various conditions in the printer subsystem. Image generator means between the first and the second microprocessors are responsive to command and data signals received from the first microprocessor to produce control signals and character images signals for use by the printer unit during printing operations. Register means are also interconnected between the first and the second microprocessors, said register means being accessible by either microprocessor for entry of information pertaining to operation of the printer subsystem and for intercommunication purposes between the two microprocessors. Control and sense means between the printer unit and the second microprocessor transfer command and data signals from the second microprocessor to the printer unit and transfer station signals from the printer unit to the second microprocessor.

In a preferred embodiment, each of the microprocessors has some diagnostic capability in its assigned area of functional responsibility. The dual microprocessor control system herein is described in conjunction with a high speed wire matrix printer that is provided with print heads in which print wires are located in a slanted wire image configuration in relation to the print line.

This dual microprocessor control system allows functions in the printer to be handled concurrently.

It also enables the display of the firing and/or misfiring of the print wires.

Principles set forth herein are applicable to wire matrix printers, other print head structures and printers of a non-matrix character, as well.

Description of one way of carrying out the invention

For a better understanding of the present invention, together with other and further advantages and features thereof, reference is made to the description taken in connection with the accompanying drawings which illustrate only one specific embodiment.

## Brief description of the drawings

Referring to the drawings:

Figure 1 is a simplified system diagram for the printer subsystem.

Figures 2, 3 and 4 illustrate various systems in which the printer subsystem may be connected.

Figure 5 illustrates a stream of information between the host system and the printer subsystem.

Figure 6 illustrates significance of bits in the frames during a receive mode when information is transferred from the controller to the printer subsystem.

Figure 7 illustrates bit significance for the frames during a transmit mode when information is transferred from the printer subsystem to the controller.

Figure 8 illustrates the bit configurations for printer addressing.

Figure 9 shows command and data arrangements in the information stream.

Figure 10 is a chart illustrating a typical transfer of data to be printed.

Figures 11 and 12 illustrate representative operational and formatting commands.

Figures 13 and 14 illustrate frame layout for status reports during a Poll operation.

Figure 15 illustrates the printer console and a number of printer components as well as forms feeding.

Figure 16 illustrates an operator panel useful with the printer of Figures 1 and 2.

Figure 17 shows a mode switch for control of on-line, off-line conditions.

Figure 18 is an overhead view of the printer slightly from the rear of the unit showing the forms feed open.

Figure 19 illustrates a print wire block assembly and associated guide.

Figures 20 and 21 illustrate front and rear faces of the guide shown in Figure 14.

Figure 22 illustrates the arrangement of print wires in groups relative to a left margin in the printer unit.

Figure 23 illustrates printing of characters at 10 characters per inch and 15 characters per inch.

Figures 24 and 25 illustrate the print emitter and its operating scheme.

Figure 26 is a generalized block diagram of the printer control unit shown in Figure 1.

Figures 27 and 28 further illustrate the arrangement of dots to form characters and the relationship of the print wires to the various character locations.

Figure 29 is a block diagram of various circuit components used in the printer subsystem of Figures 1 and 2.

Figures 30A and 30B, when arranged as shown in Figure 31, comprise a block diagram of the printer control unit including a Communications Microprocessor (CMM) and a Control Microprocessor (CTM) as well as a number of elements in the printer unit.

Figure 32 illustrates a typical data transfer and printing operation in the printer subsystem.

Figure 33 is a generalized flowchart of the operations performed by the Communications Microprocessor (CMM) shown in Figure 30A.

Figure 34 is a generalized flowchart of the operations performed by the Control Microprocessor (CTM) shown in Figure 30B.

Figures 35A—35P, when arranged as shown in Figure 36, represent a printer control unit that is generally based on the printer control unit shown in Figures 30A and 30B but which does have differences in some of the details of implementation.

Figure 37 shows the assignment of the Read Only Storage and Random Access Memory modules in the Communications Storage of Figures 35L—35N.

Figure 38 is a flowchart illustrating the diagnostic operation for the wire fire mapping.

Figure 39 represents a possible printout of wire firing and misfiring somewhat modified to more clearly illustrate the operations involved in wire fire mapping.

## Description of printer subsystem and printer mechanisms

In order to best illustrate the utility of the present invention, it is described in conjunction with a high speed matrix printer, typically capable of printing in a high range of lines per minute on continuous forms. The particular printer subsystem described herein is associated with a host system or processor, responds to command and data signals from the host to print on the forms and in turn provides status signals to the host during operations.

The printer itself is an output line printer designed to satisfy a variety of printing requirements in data processing, data collection, data entry, and communications systems. It can be used as a system printer or a remote work station printer.

The following printer highlights are of interest

Print density of 10 or 15 characters per inch (25,4 mm) selectable by the operator or by the using system program;

Condensed print mode, 15 characters per inch saves paper costs and makes report handling, mailing, reproduction, and storage easier;

Line spacing of 6, or 8 lines per inch or any other line density selectable by the operator or by the using system program;

Incremental and reverse forms movement selectable by the using system program;

3

**0 027 899**

Sixteen selfcontained character sets selectable by the using system program with a base language selected by hardware jumpers;

Special graphics ability (special characters, graphs, plotting, etc.) selectable by the using system program;

Matrix printing technology;

Built-in diagnostics for problem determination by the operator;

Microproccessor control unit;

Maximum print line width—330,2 mm.

Maximum print positions for 10 characters per inch—132;

Maximum print positions for 15 characters per inch—198;

Adjustable forms width—76,2 to 450 mm.

Maximum forms length—76,2 to 317,5 mm.

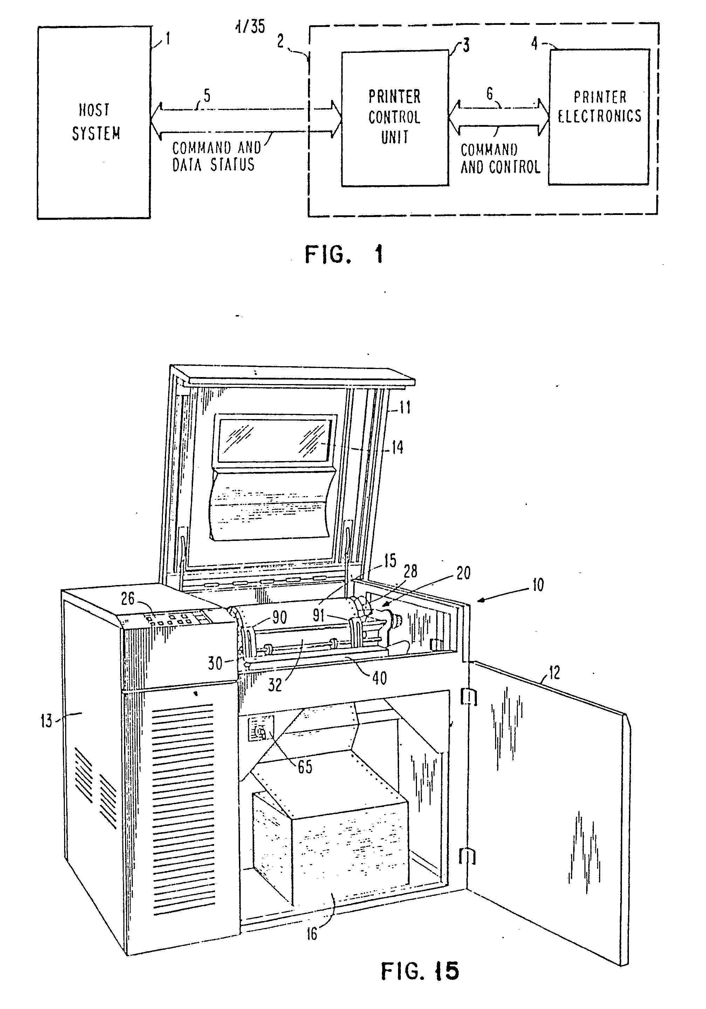

Fig. 1 illustrates a representative system configuration including a host system 1 and the printer subsystem 2 which includes a printer control unit 3 and printer electronics 4. Command and data signals are provided by the host system by way of interface 5, and command and control signals are provided from printer control unit 3 to the printer electronics 4 by way of bus 6. Status signals are supplied by printer control unit 3 to host system 1 by way of interface 5. Typically, the host system 1 generates information including commands and data and monitors status. Printer control unit 3 receives the commands and data, decodes the commands, checks for errors and generates status information, controls printing and spacing, and contains printer diagnostics. Printer electronics 4 executes decoded control unit commands, monitors all printer operations, activates print wires, drives motors, senses printer emitters, and controls operator panel lights and switching circuitry. It controls the tractor/platen mechanism, the ribbon drive, the print head (i.e., actuator group) carrier, the operator panel, and the printer sensors.

Printer attachment

The printer subsystem may be connected by an interface cable to a controlling device (controller). The printer can be connected to the controlling device itself, or to another printer (or work station unit) with additional cabling.

Controlling device

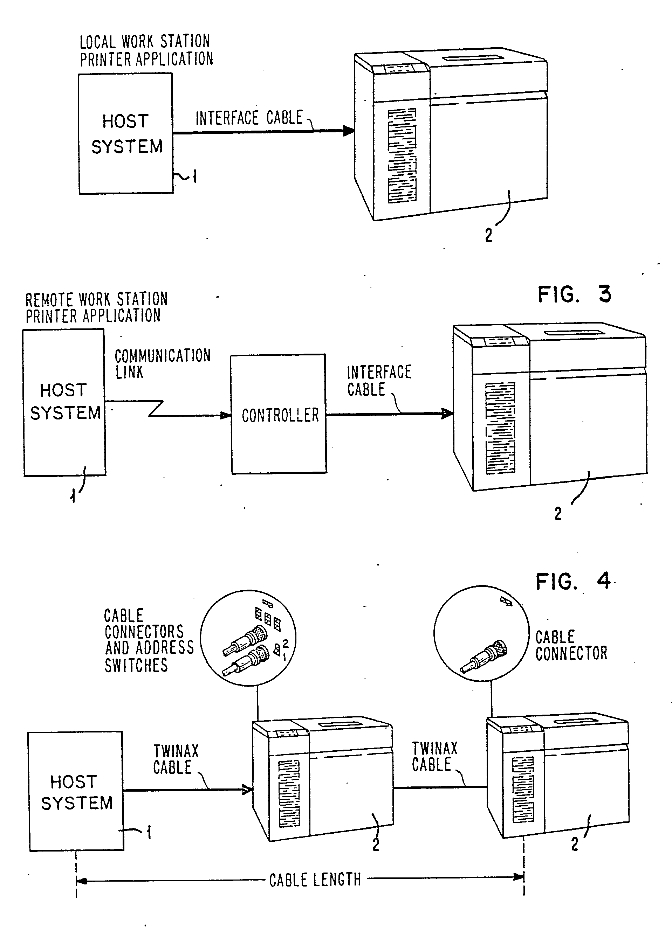

The controlling device to which the printer subsystem 2 is attached may be a host computer system 1, Fig. 2 or a controller at a remote work station, Fig. 3. In either case, all information transfers (exchanges) between the controlling device and the printer control unit are started from the controlling device by a command. Information transfers ordinarily are not initiated by the printer.

In some applications, the printer subsystem may be directly connected to a host computer system 1, as in Fig. 2. In such applications, all commands (operational and formatting) are supplied by the computer, along with the data to be printed. Response from the printer are sent directly to the computer from the printer control unit.

In other applications, Fig. 3, the printer subsystem 2 may be connected to a work station controller, which in turn is remotely connected to a host computer system 1 by a communication network—such as Systems Network Architecture/Synchronous Data Link Control (SNA/SDLC). In such applications, information (data) to be printed and printer formatting commands are transferred from the computer system to the work station controller. The work station controller then generates the operational commands and transfers all this information to the printer. Responses from the printer are sent to the work station controller then to the computer system by the communications network.

Cable through connector

The Cable Through Connector feature, Fig. 4, connects multiple printers or other work station units on the same interface cable line to the system or controller.

Units with this feature have address-setting switches and an additional cable connector. The customer assigns a unique address to each unit on the cable connector line and sets the address switches at installation time. The feature is not needed on the last unit on the line. The number of units that can be connected to the same line depends on the capability of the controlling device.

With this feature, the maximum cable length restriction is from the controlling device to the last unit on the line.

Audible alarm

The optional alarm produces a tone that alerts the operator to conditions that require operator attention.

Interface cable

The interface cable may be either coaxial or twinaxial. Representative maximum cable lengths from the controller to the last device on the interface are:

Coaxial cable—610 m

Twinaxial cable—1525 m

4

The type of cable selected depends on the requirements of the controlling device to which the printer subsystem is attached.

## Information transfer

### Data stream

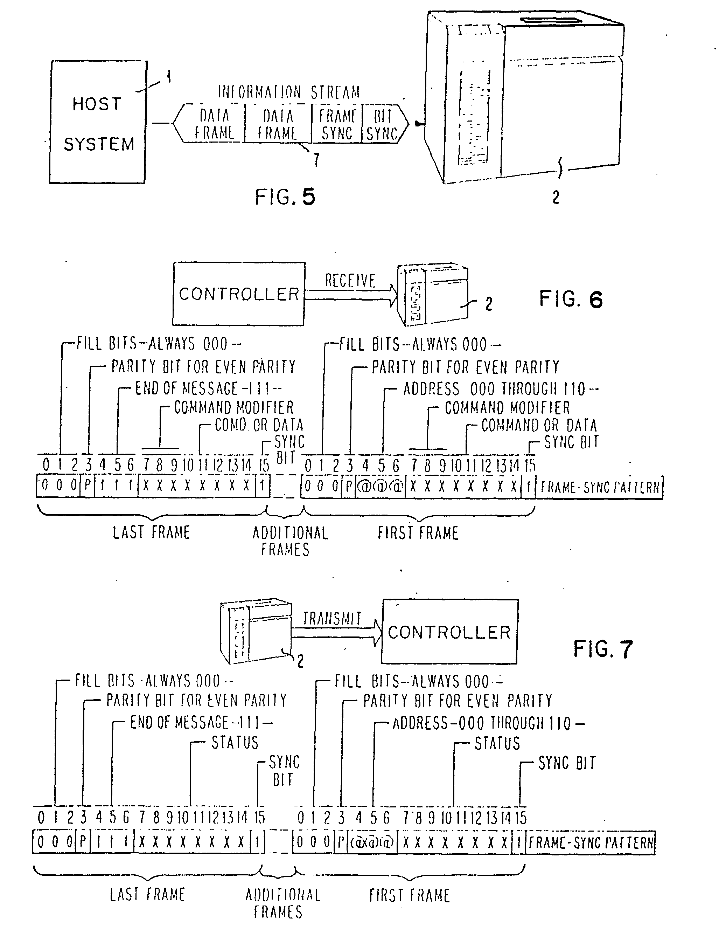

All information transferred between the controlling device and the printer subsystem is in the form of a serial "stream" of information bits 7, Fig. 5 contained in this stream are:

Bit synchronization patterns

Frame synchronization patterns

Data frames

The bit and frame synchronization (sync) patterns establish timing control between the controlling device and the printer. The data frame is the unit of information used to transfer all commands, data to be printed, and status information.

The data stream can flow in either direction on the interface cable—but only in one direction at a time (halfduplex). The controlling device always initiates the data stream flow for either direction. Only one device on the interface can be communicating with the controlling device at a time.

The data stream flows on the interface for each transfer of single or multiple frames of information. The cable carries no signal between information transfers.

In a typical information transfer from controller to printer, the information stream may be a mixture of operational commands, formatting commands, and data to be printed.

Blocks of up to 256 frames may be included in the information stream for a given transfer.

The information stream for any information transfer always begins with the bit-sync and frame-sync patterns, and ends with an end-of-message code in the last frame of the sequence. The end-of-message code causes turnaround on the cable, allowing status information to be transferred in the opposite direction on the cable on the next sequence.

### Information frame

The basic unit of information transfer is a 16-bit information frame. The information frame is used for transferring all commands, data, and status information between the controlling device and the printer. A Receive mode from controller to printer is illustrated in Fig. 6 and a Transmit mode from printer to controller is illustrated in Fig. 7.

The 16 bits of the information frame are assigned the following significance: Bits 0 through 2, the fill bits, always 000, are for timing control. Bit 3, the parity bit, is set to maintain an even bit count (even parity) in each frame.

Bits 4, 5, and 6 are the address bits for selecting a specific printer (or other work station unit) attached to the interface. Up to seven units can be addressed by combinations of these bits (000 through 110 are valid addresses). A bit combination of 111 indicates an end-of-message and causes line turnaround.

Bits 7 through 14 are for commands, data or status information. Bit 15, always on, is a synchronization bit.

### Printer addressing

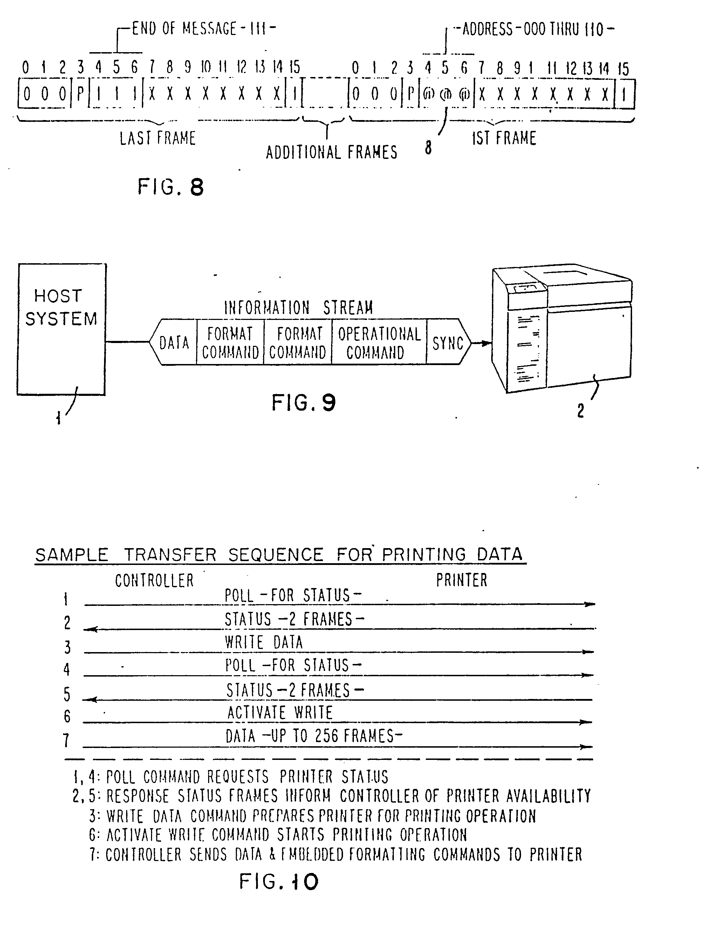

Printer addresses are coded in bits 4, 5, and 6 of the information frame 8, Fig. 8. The address for a single printer on the interface cable is 000. With the Cable Connector feature, addresses can range from 000 through 110. Addresses of printers attached with the Cable Connector feature are set with switches by the customer. A bit combination of 111 is used as an end-of-message indicator in the last frame of a transfer sequence and, therefore, cannot be used as a valid address.

The first frame following any signal turnaround on the cable is a command frame containing a valid printer address (000 through 110) for selecting a specific printer on the interface cable. Each successive frame following a command frame is then checked for the end-of-message code (111).

All response frames from the printer to the controlling device, except the end-of-message frame, contain the address of the selected printer.

### Printer responses

All information transfers between the controlling device and the printer are initiated from the controlling device by command frames. The printer, however, does transfer information to the controller on request. These transfers are called printer "responses".

In general, printer response frames are requested by the controller to determine the readiness (or "status") of a printer for accepting data from the controller. A variety of printer operational and error conditions are reported to the controller by means of printer response frames. These conditions are described in detail in the section below entitled "Status and error Information".

### Printer control unit

The printer control unit 3 connects the printer to the interface cable from the controlling device, controls the flow of information to and from the controlling device and controls all internal printer functions.

# 0 027 899

When data is received for printing, the printer control unit formats the data into print lines, using formatting commands (control codes) embedded in the data stream. Two printline format buffers are used so one line can be printed while the next line is being formatted. This comprises a "lookahead" function which allows bidirectional printing for maximum throughput.

Information codes

All 256 8-bit codes of the Extended Binary Coded Decimal Interchange Code (EBCDIC) are recognized by the printer control unit. In a data stream hexadecimal codes of 00 through 3F represent formatting commands, 40 through FE represent data (FF is always a blank character.)

All of these codes may be used to represent characters.

Operational commands

Operational commands, listed in Table I below, determine the printer functions to be performed, such as Write Data, Read Status, etc. (also, see Figs. 9 and 11). Fig. 11 illustrates a representative operational command: "Poll". Some operational commands require an additional command or data frame. In these cases, the next frame transmitted must contain that command or data frame. Operational commands are embedded in the data stream wherever reequired for proper control of the printer.

Operational command sequence

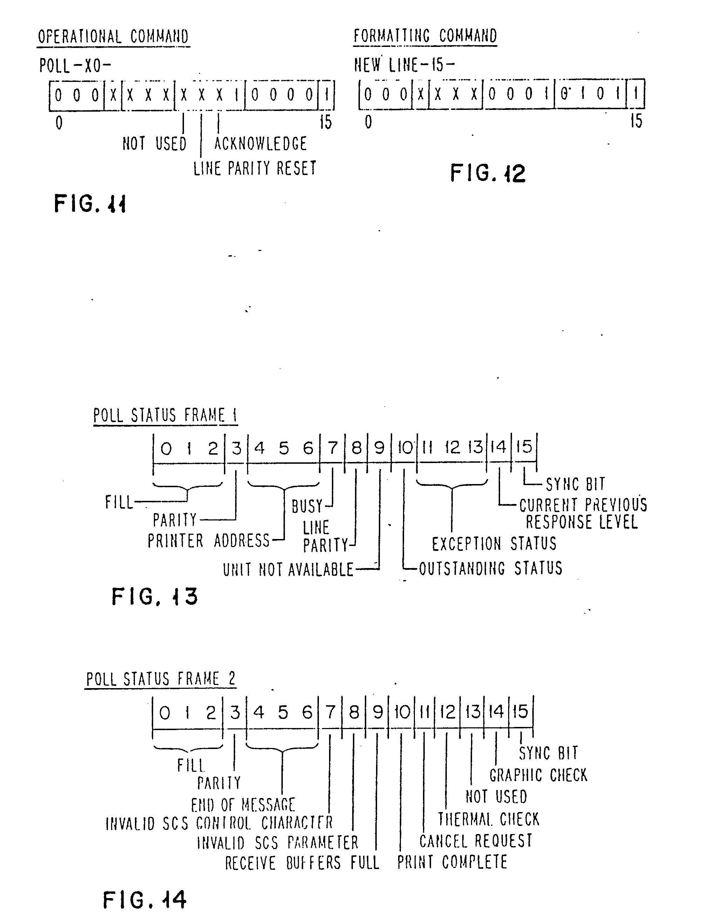

The diagram in Fig. 10 illustrates a representative sequence of events between a controlling unit and the printer subsystem to effect printing of data.

TABLE I
Operational command summary

| Command name | Hex code* | Function |
|---|---|---|
| Poll | X0 | Poll causes a one-frame status response from the printer until a Set Mode command is issued; thereafter, Poll initiates a two-frame status response. Bit 8 set to 1 resets line parity error indication. Bit 9 notifies the printer to send current status frames. |
| Read Device ID | 0C | Initiates the transfer of the ID (Identifier) frame from the printer to the controlling device. Must be followed by an Activate Read command. |
| Read Status | 88 | Initiates the transfer of one frame of outstanding status from the printer. Must be followed by an Activate Read Command. |
| Activate Read | 00 | Required to complete Read Device ID or Read Status operations. This command signals the hardware that data is to start a transfer and is not placed in the command queue. |
| Write Data | 1E | Causes the printer to store all data frames after the Activate Write. |
| Activate Write | 01 | Causes printing of data frames that follow this command. This command signals the hardware that data is to start a transfer. This is not placed in the command queue. |
| Write Control Data | 05 | Resets exception or outstanding status. |
| Set Mode | 13 | Must be issued before the printer accepts any other command except Poll and Reset. Followed by a data frame that defines the interval between frames. |
| Reset | 02 | Resets printer to a power-on reset condition. |
| Clear | 12 | Clears all print data buffers. |
| End-of-Queue (EOQ) | 62 | Marks end of command queue loading. |

*Bits 7 through 14 of a data frame

Formatting commands
Formatting command function

Formatting commands, shown in Table II below, control forms movement and line length. They are embedded in the information stream that follows the Write Data commands, Fig. 9. Also, See Fig. 12 which illustrates a representative formatting command: "New Line."

Some formatting commands require more than one frame. A code in the first frame identifies multiple frame commands. In some cases the code in the second or third frame further defines the total number of frames to be used. The formatting command codes are also referred to as "standard character string" (SCS) codes. SCS is an SNA control-character subset.

TABLE II
Formatting command summary

| Command name and abbreviation | Frame sequence (hex code/parameter) | | | | | | Description |
|---|---|---|---|---|---|---|---|
| | 1 | 2 | 3 | 4 | 5 | 6 | |
| Null (NUL) | 00 | | | | | | No Operation performed. |
| Carriage Return | 0D | | | | | | Moves the print position to the first position of the current line. |
| New Line | 15 | | | | | | Moves the print position to the first position of the next line. |
| Interchange Record Separator (IRS) | 1E | | | | | | Same as New Line. |
| Line Feed (LF) | 25 | | | | | | Moves the print position to the same horizontal position of the next line. |
| Form Feed (FF) | 0C | | | | | | Moves the print position to the first position of the next page. |
| Bell (BEL) | 2F | | | | | | Turns off Ready, turns on Attention and the audible alarm, and stops printing. |
| Absolute Horizontal Position (AH) | 34 | CO | NN | | | | Moves the print position to the horizontal position specified in the parameter frame. The parameter frame NN immediately follows the AH command. |
| Absolute Vertical Position (AV) | 34 | C4 | NN | | | | Moves the print position specified in the parameter frame. The parameter frame NN immediately follows the AV command. |
| Relative Horizontal Print Position (RH) | 34 | C8 | NN | | | | Moves the print position horizontally towards the end of the line from the current print position the number of columns specified in the parameter frame. The parameter frame NN immediately follows the RH command frame. |
| Relative Vertical Print Position (RV) | 34 | 4C | NN | | | | Moves the print position vertically towards the bottom of the page from the current print position the number of lines specified in the parameter frame. The parameter frame NN immediately follows the RV command frame. |

7

TABLE II continued
Formatting command summary

| Command name and abbreviation | Frame sequence (hex code/parameter) | | | | | | Description |
|---|---|---|---|---|---|---|---|
| | 1 | 2 | 3 | 4 | 5 | 6 | |
| Set Horizontal Format (SHF) | 2B | C1 | NN | HH | | | Sets the print line length to the value specified in the parameter frames. The parameter frames NN and HH immediately follow the C1 command frame. |
| Set Vertical Format (SVF) | 2B | C2 | NN | VV | | | Sets the page length to the value specified in the parameter frames. The parameter frames NN and VV immediately follow the C2 command frame. |
| Set Graphic Error Action (SGEA) | 2B | C8 | NN | GG | UU | | Sets the unprintable character option and defines the default graphic that is specified in the parameter frames. The parameter frames NN, GG, and UU immediately follow the C8 command frame. |
| Transparent (TRN) | 35 | NN | | | | | Permits the codes normally used as control characters to be used as printable characters. The parameter frame NN specifies the number of frames that follows the 35 command frame. |
| Subscript (SBS) Not available for single direction paper feed; | 38 | | | | | | Line feeds 1,41 mm to print subscript characters. |
| Superscript (SBS) Not available for single direction paper feed; | 09 | | | | | | Reverse line feeds down 1,41 mm to print superscript characters. |
| Set Character Distance (SCD) | 2B | D2 | 04 | 29 | P1 | P2 | Sets the character density to 10 or 15 characters per inch as specified in the P1 and P2 parameter frames. |
| Set Baseline Increment (SBI) Not available for single direction paper feed; | 2B | D2 | 04 | 15 | P1 | P2 | Sets the depth of one line of print to 0,176 mm |
| Set CGCS through Local ID (SCL) CGCS—Coded Graphic Character Set | 2B | D1 | 03 | 81 | P1 | | Loads 1 of 16 graphic character sets specified in the P1 parameter frame. |
| Absolute Move Baseline (AMB) Not available for single direction paper feed | 2B | D3 | 04 | D2 | P1 | P2 | Moves the print position forward in the vertical direction from the current print position to the new print position specified in the P1 and P2 parameter frames. |

8

TABLE II continued
Formatting command summary

| Command name and abbreviation | Frame sequence (hex code/parameter) | | | | | | Description |
|---|---|---|---|---|---|---|---|
| | 1 | 2 | 3 | 4 | 5 | 6 | |
| Relative Move Baseline (RMB) Not available for single direction paper feed; | 2B | D3 | 04 | D4 | P1 | P2 | Moves the print position forward or backward in the vertical direction from the current print position to the new print position specified in the P1 and P2 parameter frames. |
| Load Alternate Characters (LAC) | 2B | FE | NN | MM | | | Data allows customer designed fonts or characters to be loaded for printing. |
| Set Line Density (SLD) | 2B | C6 | NN | P1 | | | Selects vertical line density of 6 or 8 lines per inch or any distance in multiples of 0,35 mm up to 255. |

Status and error information
Poll response frames

Following a power-on reset (POR), the printer subsystem responds to controller polling with a single status frame, Fig. 13. The printer continues to respond to controller polling with a single status frame until the printer receives a Set Mode command.

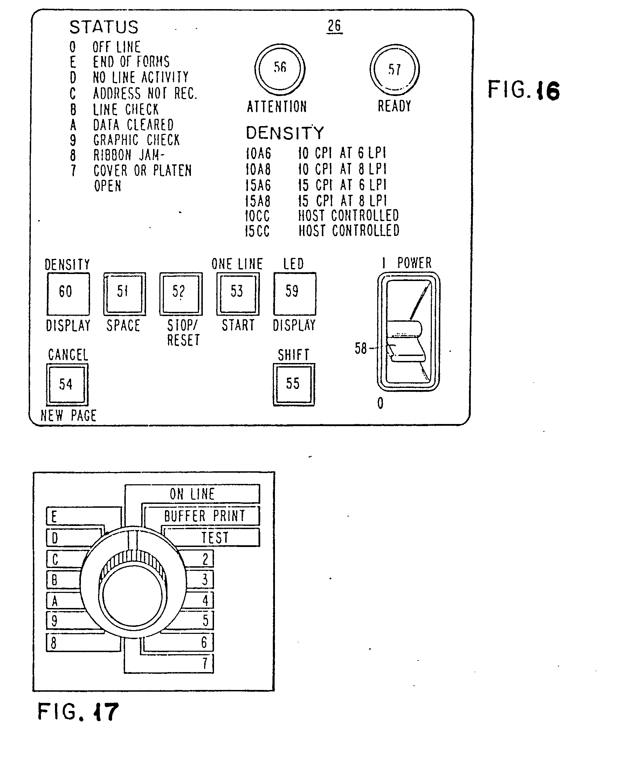

After receiving a Set Mode command, the printer responds to polling with two status frames, the second of which is shown in Fig. 14.

Status information described in frame 1, Fig. 13, is the same in either case.

Bits 0, 1, 2—Fill
These bits are always set to 000 and are used for timing control.

Bit 3—Parity
This bit is used to maintain an even bit count (even parity).

Bits 4, 5, 6—Printer address
These bits are used for selecting a specific printer attached to the interface. Up to seven printers can be addressed by the combinations (000 through 110). A bit combination of 111 indicates an end-of-message and causes line turnaround.

Bit 7—Busy
0=Not busy when operational command queue is empty.
1=Busy when operational command queue is not empty or an activate command is received.

Bit 8—Line parity
0=No line parity error is detected in a received frame.
1=Line parity error is detected in a received frame.

Bit 9—Unit not available
0=Unit available (the Ready light is on).
1=Unit not available.

Bit 10—Outstanding status
0=No outstanding status.
1=Outstanding status (available by using the Read status command).

Bits 11, 12, and 13 indicate a variety of exception status conditions. Until the exception status is reset, only Poll, Set Mode, and Reset commands are processed. The Write Control Data Command (if the exception status is not power-on transition) is also processed. The power-on transition exception status is reset by the Set Mode command. The exception status conditions are reset by the Write Control command (see "Write Control Data").

9

| Bit 11 | Bit 12 | Bit 13 | Meaning |
|--------|--------|--------|---------|
| 0 | 0 | 0 | No exception status exists. |
| 0 | 0 | 0 | Activate lost—caused by a line parity error following a Write Data, Read Status, or Read Device ID. |
| 0 | 1 | 0 | Invalid activate command—caused when a Write Activate follows a Read Status or Read Device ID or, a Read Activate following a Write Data. |
| 0 | 1 | 1 | Reserved. |
| 1 | 0 | 0 | Invalid command—caused when a command is outside the operational command set or more than 240 microsecond interframe interval has been specified. |
| 1 | 0 | 1 | Input queue or input buffer overrun—caused when more than 16 commands and associated data frames or more than 256 data frames have been sent. |
| 1 | 1 | 1 | Power-on transition—causes only status frame 1 to be sent in response to a Poll command. |

Bit 14—Current/previous response level

When bit 14 goes from 0 to 1 or 1 to 0, the using system determines that the response frame is current status. When bit 14 is unchanged from the previous response, the using system determines that the response frame is previous status. Any change in the response frame changes bit 14 from its previous state. Bit 14 is set to 0 after power-on.

Bit 15—Sync

A synchronization bit that is always set to 1. Frame 2 contains information shown in Fig. 14.

Bit 0 through 6—Same as poll status frame 1

Bit 7—Invalid SCS (standard character string) control
    0=No Invalid SCS Control Code is detected.
    1=Invalid SCS Control Code is detected. Reset by a Reset or Clear command.

Bit 8—Invalid SCS (standard character string) parameter
    0=No Invalid SCS parameter is detected.
    1=Invalid SCS parameter is detected. Reset by a Reset or Clear command.

Bit 9—Receive buffers full
    Used by the using system to determine when data can be sent to the printer.
    0=Receive buffers are not full.
    1=Receive buffers are full.

Bit 10—Print complete
    The print complete bit is set to 0 when the printer detects an Active Write command. The print complete bit is set to 1 by Power-on reset, a Clear command, a Reset command, or when all input data is printed.
    0=Printing is in progress.
    1=Printing is completed.

Bit 11—Cancel request
    The Cancel request bit is set to 1 when the operator presses the Cancel key on the Operator Panel. This bit is reset by the next Poll command (with Acknowledge bit set to 1), a Reset or Power-On reset.
    0=No cancel request.
    1=Cancel request.

Bit 12—Not used

Bit 13—Not used

# 0 027 899

Bit 14—Graphic check

This bit set to 1 indicates that an undefined character has been detected in the data stream. This bit is reset by the next Poll command (with Acknowledge bit set to 1), a Reset or Power-On reset.

0=No graphic error is detected.

1=Graphic error is detected.

Bit 15—Same as Poll status frame 1

Read status response frame

One response frame is sent for every Read Status command. The response frame, sent only after the Activate Read command is received, contains a hex code that defines the status condition within the printer.

The hex code corresponds to the last two digits of the error code that may be available as a system error message (depending on the using system). The first digits of these hex codes are also automatically displayed on the printer operator panel 26 (Fig. 16) when the error occurs.

The defined conditions are:

| Hex code | Error condition |
|---|---|
| 11 | Printer controller error |
| 12 | Cable adapter error |
| 31 | Head drive problem |
| 32 | Margin emitter not detected |
| 34 | Turnaround emitter not detected |
| 35 | Print emitter not detected |
| 36 | Head busy (cannot be reset) |
| 37 | Printer control unit |
| 38 | Overcurrent |
| 41 | Forms drive problem (undetermined area) |
| 42 | Forms busy (cannot be reset) |
| 43 | Forms emitter B not detected |
| 44 | Forms emitter A not detected |
| 45 | Run latch failure (printer control unit) |
| 46 | Printer control unit |
| 47 | Overcurrent |
| 48 | Emitter sequence wrong |
| 80 | Ribbon jam |
| 81 | Ribbon jam (diagnostic mode) |
| 82 | Ribbon problem |
| 83 | Head Image Generator error |

Fig. 15 illustrates various components of the printer all of which are housed in the console 10. Various access panels or covers such as those designated 11, 12, and 13 are provided. Top cover 11 has a window 14 that enables an Operator to observe forms movement during operation of the printer and when the cover is closed. Forms (documents) 15 are provided from a stack 16 and can be fed in one embodiment upwardly or downwardly as viewed in Fig. 15 by means of a forms feed assembly 20 which includes one or

11

more sets of forms tractors such as the upper set comprising tractors 90 and 91. A forms guide 28 guides the forms after printing to a takeup stack, not shown but positioned below the printing machanism and to the rear of the printer console. The printer incorporates a print assembly 30 that is positioned generally in a horizontal relationship with respect to forms 15 at a print station 32. Print assembly 30 is more clearly visible in other views. This is also true of the printer ribbon drive assembly 40 which is located in closer proximity to the front of the printer. Printer control unit 3 and its associated microprocessors are generally located behind the side cover 13.

The printer includes an operator panel 26 (shown in greater detail in Fig. 16) that consists of several operator control keys (pushbuttons 51—55 and 60), two indicator lights 56, 57, a power on/off switch 58, and an operator panel display 59. By using various combinations of the keys in conjunction with the shift key 55 the operator can:start or stop printing and view the last line printed, set print density, position the forms up or down one page or one line at a time, move the forms incrementally up or down for fine adjustment, and start or stop the diagnostic tests when selected by a mode switch, to be described.

The indicator lights on the operator panel display notify the operator that: the printer is ready to print data from the using system (indicator light 57), the printer requires attention (indicator light 56), the current print density setting (operator panel display 59), errors, if any, have been detected, and the results of the diagnostic tests (indicator panel display 59).

A 16-position mode switch 65 is located behind the front door 12 and is shown in greater detail in Fig. 17. The on-line position permits printing to be controlled by the using system. All other positions are off-line and do not allow printing to be initiated from the using system.

The first two switch positions are used by the operator to select these modes:

Online

The normal operating position. With the switch in this position, the printer accepts commands from the using system. The operator panel display 59 indicates any detected error conditions.

Buffer print

An additional on-line position which prints the EBCDIC values (hexadecimal codes) sent from the host and the associated character images. No control characters are interpreted. This feature allows the user to view the data stream sent to the printer.

Test

For off-line checkout and problem determination. In test mode, when Start key 53 is pressed, the Attention indicator 56 stays on and Ready indicator 57 is turned on until the diagnostic tests that are stored in the printer control unit are finished or the Stop key is presssd. If an error is detected, the printer stops and displays an error code in the operator panel display 59.

The remaining thirteen (13) positions of the mode switch designated "2—9" and "A—E" are used by service personnel to select a variety of diagnostic tests to aid in off-line problem determination and confirmation of service requirements.

Overview of printer mechanisms

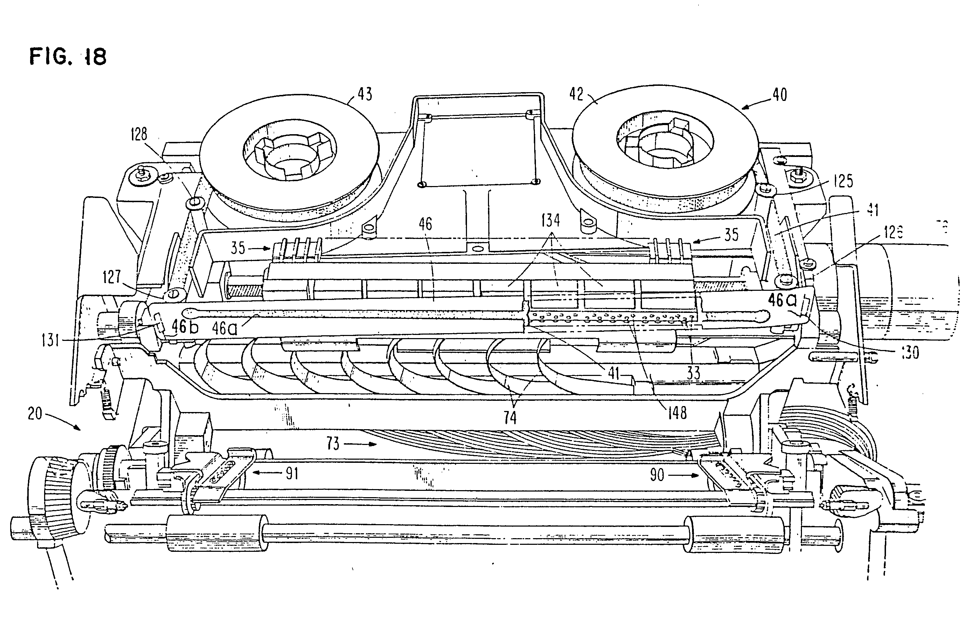

Fig. 18 is an assembly view of the printer including forms feed assembly 20, printer assembly 30, and ribbon drive assembly 40. Ribbon drive assembly 40 includes the two ribbon spools 42 and 43 which alternatively serve as supply and takeup spools. If spool 42 is serving as the supply spool, ribbon 41 will be supplied past posts 125 and 126, through the ribbon shield 46 past posts 127 and 128 and thence to the takeup spool 43. Shield 46, and ribbon 41, are illustrated slightly on the bias relative to horizontal which is their more normal relationship in the printer. Shield 46 has slits 46b and 46c at opposite extremities to permit easy mounting in the printer on print members 130 and 131 of the ribbon drive assembly. The ribbon drive assembly 40 is also positioned on a slight bias relative to horizontal to accommodate the bias of shield 46 and ribbon 41. In this condition aperture 46a assumes a horizontal relationship with respect to the print wires 33 and forms 15. Thus, in Fig. 18, the rightmost end of shield 46 is somewhat elevated in relation to the leftmost end in order that aperture 46a is maintained in a relatively horizontal position with respect to the print actuators in print mechanism 30. A few of the groups of print wires 33 are indicated at a breakaway section of shield 46. As previously noted, the print wires are reciprocated back and forth laterally in relation to a form, not shown in Fig. 18, in order to effect the printing of characters. The reciprocation is by means of drive mechanisms activated from motor 76. The activating signals for the actuators in print mechanisms 21 are supplied through cabling indicated at 73.

Actuator block, guide, and actuators

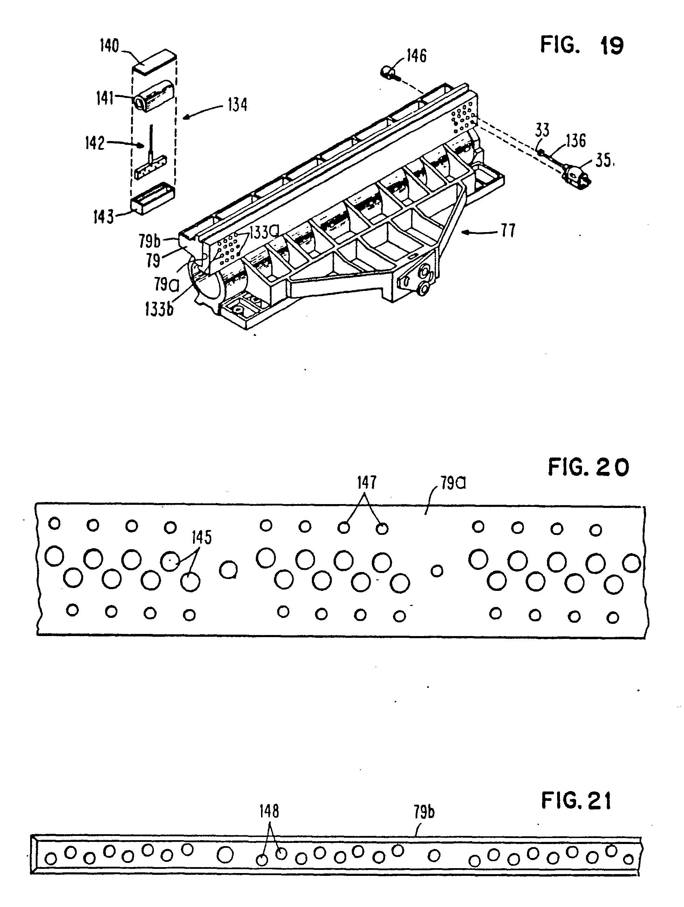

Enlarged views of the actuator block 77, guide 79, print wire actuators 35, lubricating assemblies 134, and various related mechanisms are shown in Figs. 19, 20 and 21. Referring to Fig. 19, this better illustrates the arrangement of apertures 133 in actuator block 77 which can accommodate eight print heads with eight print wire actuators. Apertures 133a are used to mount actuators 35 while apertures 133b allow passage of barrels 136 of actuators 35 through actuator block 77 and guide 79 up to the print line. A typical lubricating assembly 134 comprises a cover 140, felt element 141, wick assembly 142, and housing 143 that contains lubricating oil.

Fig. 20 illustrates a portion of face 79a of guide 79 while Fig. 21 illustrates a portion of face 79b of guide 79. Barrels 136 of actuators 35 pass through apertures 145 on face 79a of guide 79 and are retained by bolts such as bolt 146 passing through apertures 147 from the opposite side of guide 79. Individual actuator barrels 136 and print wires 33 project through apertures 148 Figs. 18 and 21.

Printing of characters, relationships of print wires, character locations and emitters

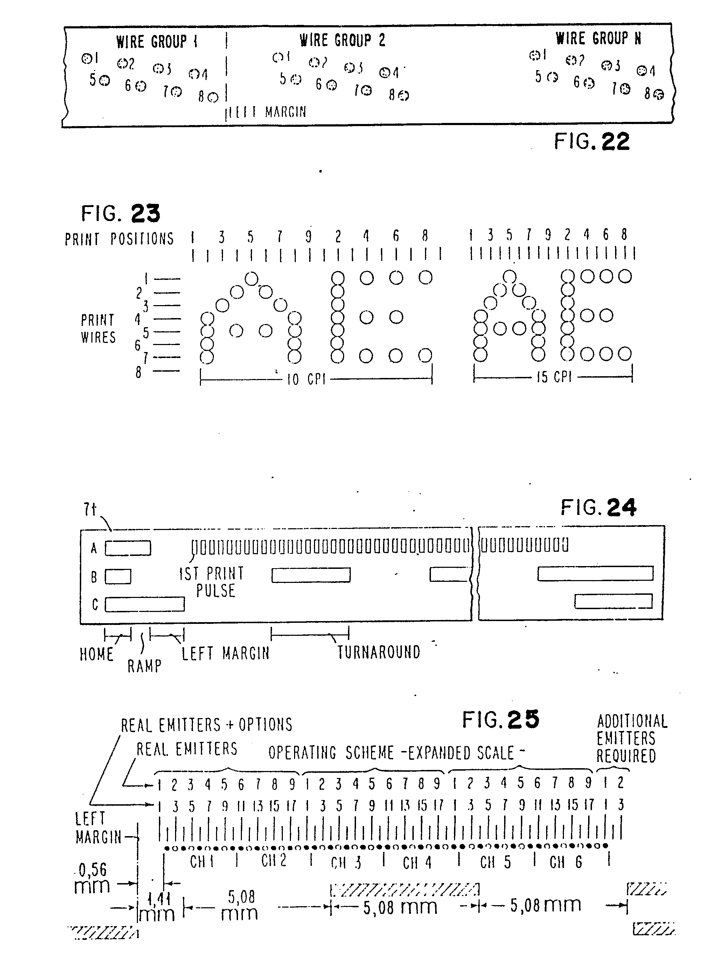

Characters that are printed are formed by printing dots on the paper. These dots are printed by wires that are mounted in groups of eight on a carrier bar that moves back and forth adjacent to the print line. Printing is bidirectional with complete lines of print formed right-to-left and left-to-right (see Figs. 22 and 23).

A character is formed in a space that is eight dots high by nine dots wide. As shown in Fig. 23, two of the nine horizontal dot columns (1 and 9) are for spacing between characters. Any one wire can print a dot in four of the seven remaining horizontal dot positions (2 through 8). The printer can print 10 characters per inch or 15 characters per inch.

Most of the characters printed use the top seven wires in the group to print a character in a format (or matrix) that is seven dots high and seven dots wide. The eighth (bottom) wire is used for certain lower case characters, special characters, and underlining.

The number of print wire groups varies according to the printer model, and typically can be 2, 4, 6 or 8 groups. Printing speed increases with each additional wire group.

There are 16 character sets stored in the printer control unit. Any of these sets may be specified for use by the using system program.

Fig. 24 is a representation of the emitter glass associated with the print mechanism 21 included in a print emitter assembly. Glass 71 is vertically positioned with respect to a sensor assembly and is mechanically attached to print mechanism 30 so that as the print heads, print actuators, end print wires move back and forth left to right and conversely, glass 71 also moves in the same manner with respect to the sensor assembly to indicate horizontal position of the print wires. Emitter glass 71 sections called "Ramp", "Home", and "Left Margin". These are coded sections, designated Track A, Track B, and Track C. Track B is sometimes referred to as the "Turnaround" track. "Home" is indicated by all three tracks being clear. "Ramp" is when Track A and Track C are clear, but Track B is opaque. "Left Margin" is when only Track C is clear, and Tracks A and B are opaque. Left Margin can be told from Right Margin because Track B is clear on Right Margin whereas Track B is opaque on Left Margin. For convenience, glass 71 is shown in a more normal representation with the left margin areas to the left and the right margin areas to the right. In actuality, the emitter glass 71 is physically located in the machine with the right-hand part in Fig. 24 toward the left and the left-hand part in Fig. 24 toward the right. This is due to the fact that the associated optical sensor is physically located at the rightmost area of the strip when the print mechanism is in home position, and glass 71 actually is moved past the optical sensor assembly from left to right as the print mechanism moves from left to right away from home position.

Fig. 25 illustrates the development of emitter pulses from the emitter strip shown in Fig. 24, the signals being termed "real emitters" when actually sensed from Track A. "Option" emitters (sometimes referred to as "false" emitters) are developed electronically in the printer control unit. The emitter tells the electronics when the wires are in a proper position to be fired to print the dots in correct locations. It essentially divides the print line into columnar segments, each one of which is available to the electronics to lay down a print dot. Track A, the basic track which controls the printing of dots has spacings of 0,56 mm. This corresponds to two print columns distance on the emitter in a normal print cycle and for ten characters per inch one option is inserted halfway in between.

Each emitter track actuates one pair of light emitting diode-photo transistor (LEDPTX) sensors within the sensor assembly. Track A provides print initiation pulses, Track B provides signals for turnaround (reversal of print motor 76 direction), and Track C indicates if the print heads are in either left or right margin.

To keep track of the print head position, the number of emitters of Track A are counted. The A sensor keeps increasing the count regardless of whether the print assembly moves to the right or left. In order to indicate the true position of the print assembly, provision is made electronically to convert this count so that the count increases when the print assembly moves in one direction and the count decreases when moving in the opposite direction.

System and control unit components

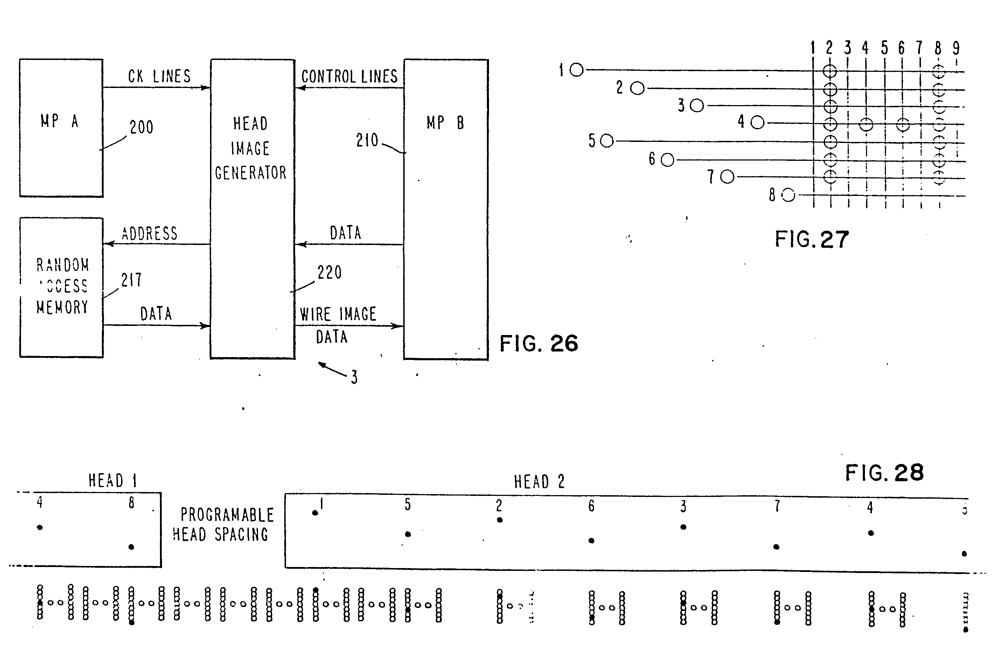

Fig. 26 is a highly diagrammatic block diagram of the general relationship of various system and control unit components including the two microprocessors 200 and 210 (also designated MPA and MPB), the Head Image Generator 220 and the random access memory 217 and indicates how the information is transferred that is generated by the Head Image Generator to print dots on the paper by actuation of the actuators.

Microprocessor 200 handles communications; microprocessor 210 handles the control of the subsystems. Microprocessor 200 sets up in memory 217 the count and the text buffer that is to be printed at a selected addressable location. The information is then passed over to microprocessor 210 or the buffer that is to be used. The count is passed to a signal generator (Head Image Generator 220) and also the address in memory 217 which is the test buffer to be printed. Head Image Generator (HIG) 220, knowing the buffer to be printed, accesses memory 217 and defines the dots for the characters to be printed at each of the successive columns assigned to each print head as the print carrier moves during printing. Signal generator HIG passes the data to the Control microprocessor 210 giving it all the dots to be printed at that particular time. This is represented in Fig. 28 which includes a portion of head 1 and all of head 2. Fig. 28 illustrates printing at ten characters per inch. A string of "H's" is assumed to require printing. The darkened dots of the "H's" represent the wires above them that will actually print that dot. For example, in print head 1, wire 4 prints the fourth dot down in the first column of the leftmost "H". This is the second slice of firing for that particular character with another three wire fires being required for wire 4 to complete the horizontal bar portion of the "H". The other seven wires in print head 1 fire at appropriate times to complete their assigned horizontal rows in that character. At head 2, wire 1 is over an "H"; there is no wire over the next "H"; and wire 5 is over the third "H". If printing was at fifteen characters per inch, there would be no wires over two characters between wires 1 and 5 of head 2, rather than just one character as illustrated.

The wire layout of "1 5 2 6 3 7 4 8" in Fig. 28 relates to the layout in Fig. 27 where it is shown how an "H" is laid out in relation to the actual wire slices.

Printer general block diagram

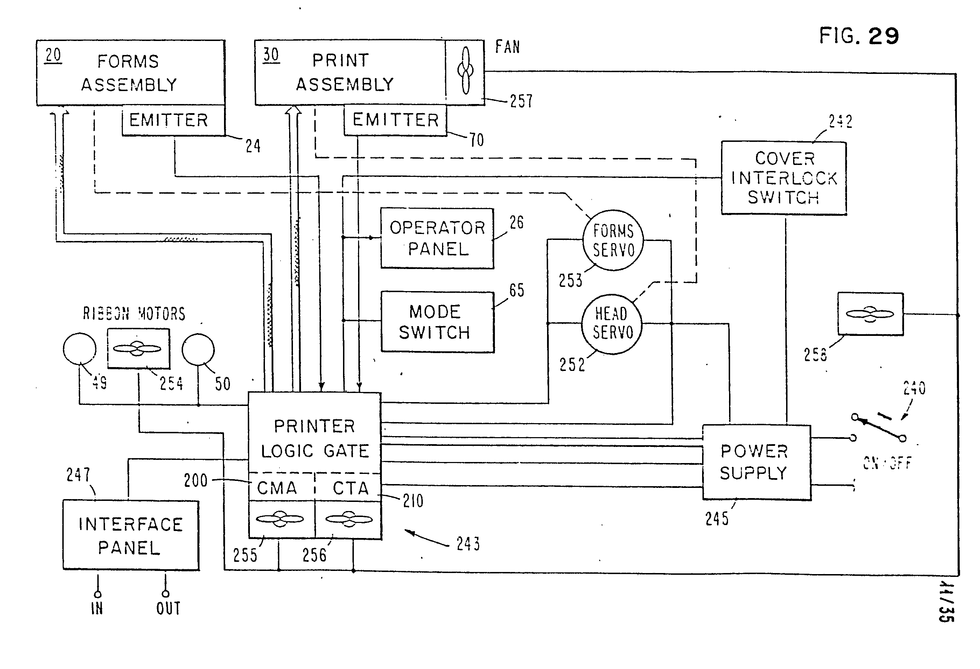

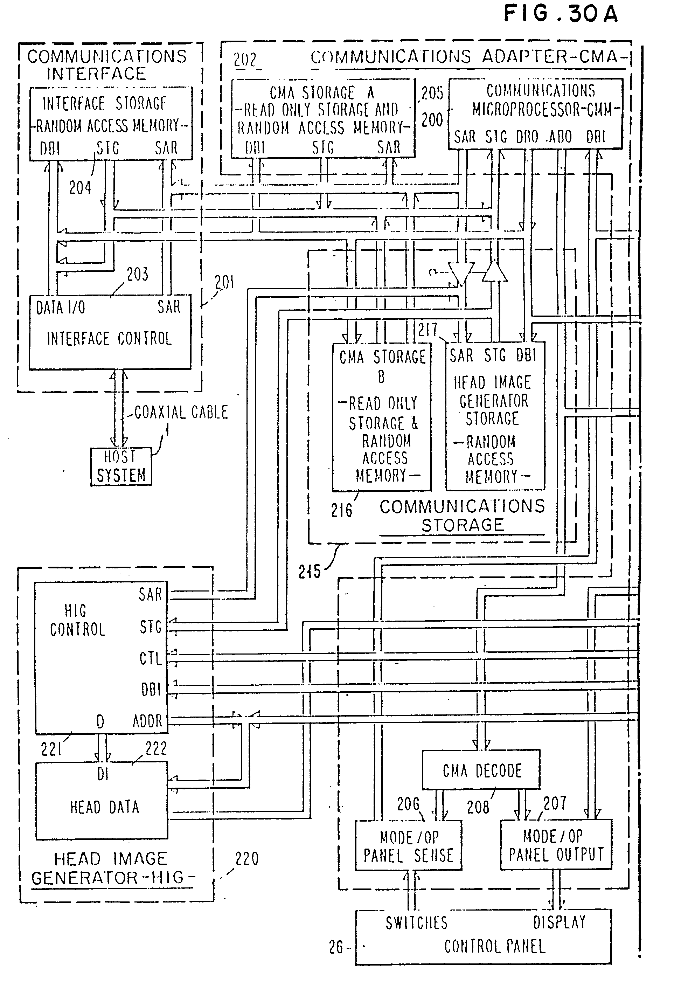

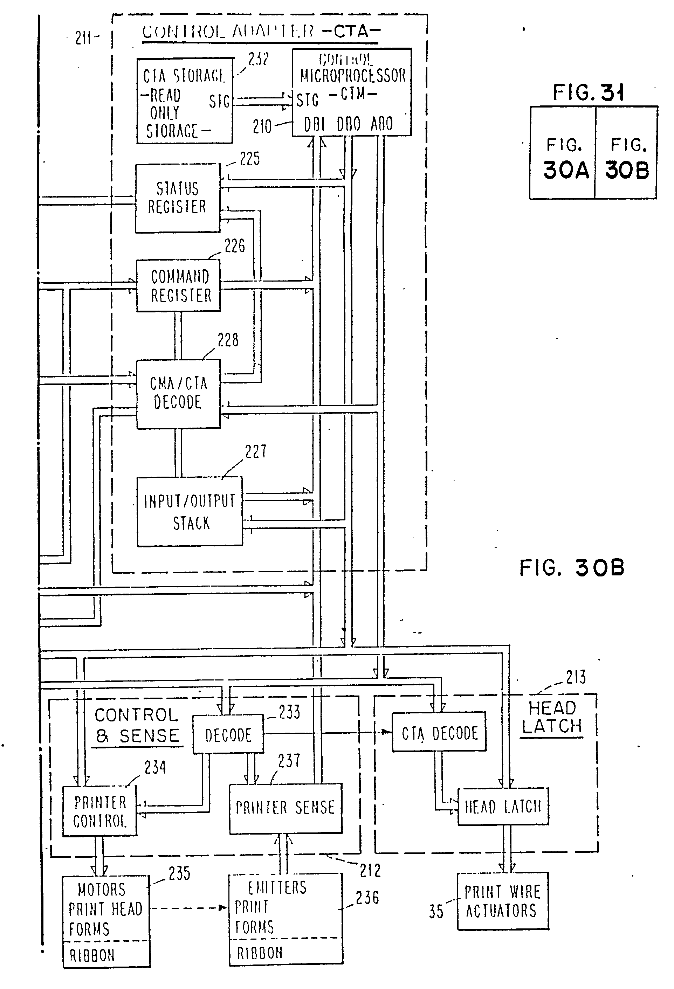

Fig. 29 illustrates various printer blocks of interest. A power supply 245 supplies the unit with all the power to drive and to control. The on/off switch 240 controls power supply 245 being on and off. From the power supply the cover interlock switch 242 enables and disables the 48-volt drive which controls much of the printer logic 243. Logic 243, once enabled, looks at operator panel 26 for information as to the operations to be performed. Mode switch 65 tells the logic which type of operation in testing procedures should be run. Print assembly 30 is controlled by the printer logic along with the forms assembly 20. Emitter devices 24 and 70 supply positional information to the printer logic. The printer logic also controls and talks with the interface panel 247 and passes information on the other parts of the printer. The ribbon motors 49 and 50 are controlled in an on/off fashion by printer logic 243 which accepts inputs from the ribbon assembly to determine when the end of ribbon has occurred. Head servo 252 is a control block that insures that the print head is in the proper position at the proper time for the actuators to fire. Forms servo 253 is a control block that moves the forms to desired locations. Fans 254—258 are used to control temperature within the machine. As indicated in connection with Fig. 26, printer logic 243 includes two microprocessor adapter blocks 200 and 210. The first one included is the Communications adapter CMA which accepts input and passes it to the second one which is the Control adapter CTA that actually controls the printer. These will be discussed in connection with Figs. 30a and 30b.

Microprocessor control—Printer subsystem

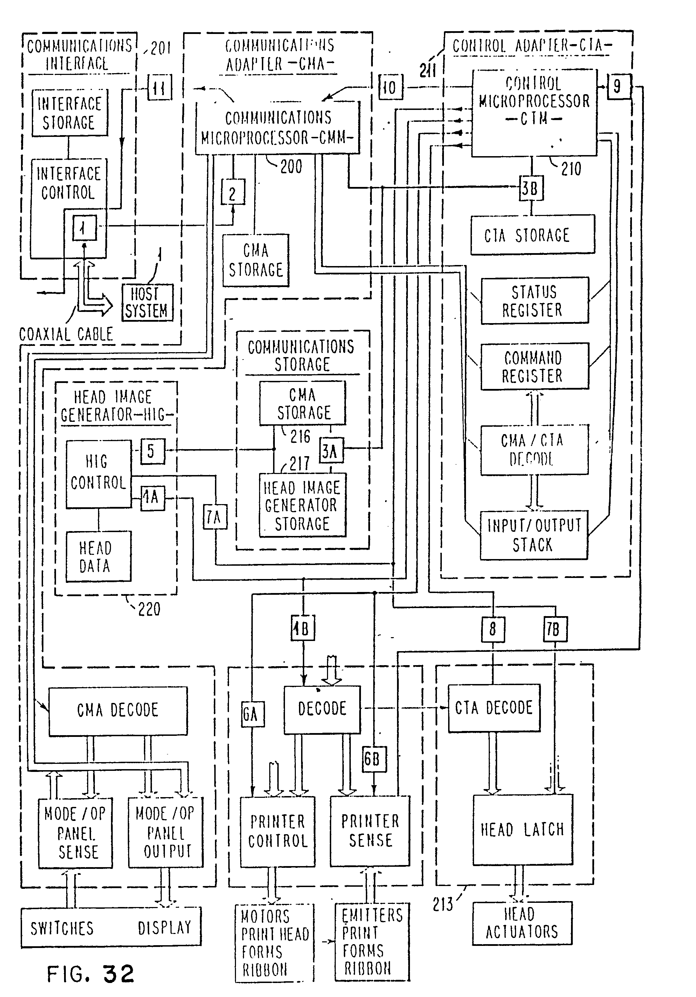

Two microprocessors are provided for the printer subsystem, each having its assigned functions and both can operate concurrently to accomplish the required functions. Figs. 30A and 30B join together as shown in Fig. 31 to illustrate the details of the Printer Control Unit 3 and Electronics 4, Fig. 1. Various abbreviations used herein are listed in Table III below:

TABLE III

| ABO | — Address Bus Out |
| CMA | — Communications Adapter Card |
| CTA | — Control Adapter Card |
| CTL | — Control |
| D | — Data |
| DI | — Data In |
| DBI | — Data Bus In |
| DBO | — Data But Out |
| HIG | — Head Image Generator |
| MODE/OP | — Mode/Operation |
| ROS | — Read Only Storage |
| SAR | — Storage Address Register |
| STG | — Storage Bus In |

There are actually seven main blocks comprising the Printer Control Unit representing seven printed circuit cards. The first block is the Communications Interface 201 between the host system and digital printer electronics. That interface communicates with the Communications Adapter (CMA) 202 which is a microprocessor card that takes the host information and compiles it into a form that can be used by the rest of the printer. The CMA includes Communications microprocessor CMM 200. From there, the information is passed on a signal generator (Head Image Generator 220) card for building images for the printer. There is another microprocessor card that is the Control Adapter Card (CTA) 211. The CTA includes Control microprocessor CTM 210. The Control Adapter handles the processed information from the Communications Adapter, controls all the mechanical elements of the printer, such as the motors, and receives emitter signals indicating positions of the mechanical elements. This Adapter handles communication with the actual hardware through the Control and Sense card 212 and the Head Latch card 213 that stores the data to be outputted to the wire actuators.

Within the Communications Interface are two blocks. One is the Interface Control block 203; the other is the Interface Storage block 204. The interface Control block 203 interprets the information coming from the host system in an analog signal form, processes it into digital form, and generates the necessary timing signals to be able to store this information in the Interface Storage 204. The Interface Storage 204 is a Functional Storage Unit (FSU) random access memory which is sized at one K (1K or 1024) bytes. All data and commands from the host system go into this Interface Storage; it acts as a buffer for the Communications Adapter 202. Within the Communications Adapter card, there are five blocks. There is the Communications Microprocessor 200 (CMM) and its corresponding storage 205 designated "A" which includes both random access memory and read only storage (ROS). There is a Mode/Op Panel and Sense block 206 that can read the panel 26, a Mode Op Panel Output block 207 to output displays to the panel, and Decode Logic 208 for these functions. The Communications Adapter 202 translates the information that the host has sent over through high-level or hand-shaking type procedures and translates it into much more simple terms such as characters to be printed or carriage returns, or line feeds—any other mechanical type control that needs to be performed. Its program is stored in the Read Only Storage (ROS) of the CMA "A" storage. There are 6K bytes in this ROS. The CMA also handles Hardware Operator commands involving printing the printer on-line, taking it off-line and displaying any type of status information through the display on the Mode Operator Panel 26.

The Communications Storage card 215 has two blocks entitled CMA Storage "B" designated 216 and Head Image Generator (HIG) Storage 217. Storage "B" block 216 contains up to 14K bytes of ROS storage in FSU (Functional Storage Unit) technology for the Communications Adapter microprocessor 200. The random access memory storage 217 has 3K bytes for the Head Image Generator and is where the Communications Microprocessor stores character images to be printed. The character images in this storage are used by the Head Image Generator to generate actual images for the slanted heads. Also, in the block of Random Access Memory are two text buffers and some scratch pad storage.

Because of the staggered slant geometry of the print head assembly and the multiple head configuration, a fairly complex Head Image Generator 220 (HIG) is required to convert conventional character dot format to a slanted format. HIG processes the character images as they would normally appear in a "straight-up" format, but slants them for the Head Latch block 213 to supply to the print wire actuators. This is done through hardware routines that are performed in the Head Image Generator 220. There are basically two blocks in the Head Image Generator, one block being the Control block 221 that actually performs the hardware routines to take the unslanted image and slant it. There is also a Data block 222 that is a small storage unit in which the Head Image Generator stores the slanted information currently being worked on. The Control Adapter 211 can then read this storage and output to the wire actuators through Head Latch 213. This is the slanted data.

The Control Adapter (CTA) 211 has six blocks within it. The Control Microprocessor (CTM) 210 receives inputs from various sensors, e.g., ribbon reverse/jam, forms jam, head position, linear encoder, forms position encoder, as well as print commands and data from CMM 200 and HIG 220 and generates print wire firing signals and various control signals to control the ribbon drive, print head drive, print wire actuators, and forms drive.

The Control Microprocessor (CTM) 210 has a ROS storage 232 that is 12K bytes of FSU ROS to contain its programs or routines. Certain communication registers including Status register 225 and Command register 226 allow the Communications Adapter 202 and the Control Adapter 211 to communicate with one another. Through these registers go commands such as Print commands, Forms commands, Carriage Returns, and the actual decoded messages that the host has sent over. An Input/Output stack 227 is used as a local storage, that is, it is a small random access memory for the Control Adaptor to store intermediate data and there is some associated decoding. The Decode block 228 handles the timing relationships for the Communications Adapter and Control Adapter to be able to talk to one another asynchronously.

The Control and Sense card 212 handles the information from the Control Adapter card 211 and interfaces with the actual printer electronics to control by way of Decode block 233 and Printer Control block 234 the head motor, the forms motor, and the ribbon motors represented by block 235. Through blocks 236 and 237 it senses the positional state of printer electronics and mechanics such as the print emitters, forms emitters, etc.

The Head Latch card 213 is another interface card from the Control Adapter that latches up the wire image data, the slanted data that is received from the Head Image Generator 220, and outputs it at the correct time to the print wire actuators so that the dots get printed in the correct place on the form.

A typical print operation is now described. It is assumed that a single print line is provided by the host with a Forms Feed and Carriage Return at the end which is a typical situation. This information comes over in a serial stream from the host as analog signals into the Communications Interface 201 which digitizes the analog signal and stores it in its Interface Storage 204 in the form of characters to be printed. A command informs the Communications Adapter 202 that this is a line to be printed and that it has Line Feed and Carriage Return commands. The Communications Adapter 202 seeing this information appear, will take the characters to be printed out of the Interface Storage 204 and put them into a selected text buffer in CMA Storage "B" on Communications Storage card 215. It then tells the Control Adapter 211 that it has information in a text buffer to be printed.

The Control Adapter, after receiving the information initially tells the Head Image Generator 220 (HIG) that there is data in the selected text buffer that needs to be slanted. Head Image Generator 220 then slants this information, while the Control Adapter card 211 starts the printer in motion; that is, it starts moving the print head carrier 31. It moves the carrier through commands given to the Control and Sense card 212, and it looks for print emitters, or emitters which tell the Control Adapter when to fire wires; it checks for these signals coming from the Control and Sense card. When these signals appear, the CTM retrieves the slanted wire information from the HIG and passes it to the Head Latch card 213 and fires the wires to print dots.

The Control Adapter 211 for each print emitter that it sees, asks the Head Image Generator for a new set of slanted data. This is outputted to the Head Latch card 213 and is repeated until the entire text buffer has been printed, that is, all the information that the host sent over. Once the Communications Adapter 202 has seen that this has taken place, that is, the printing has been done, it passes the Forms command to the Control Adapter 211. Control Adapter 211 decodes this command and gives a command to the Control and Sense card 212 to move forms a certain number of forms emitters. It senses these forms emitters through the Control and Sense card again.

This is further illustrated in Fig. 32. A typical operation is assumed to come from the host to the printer controller unit. [Steps (paths) are illustrated by numbers in small squares]. Path 1 represents receipt of the data and commands by interface 201. By path 2, the interface prepares it and passes it on to the CMA 202. CMA 202, essentially in two operations, strips off printable characters and by the path labeled 3A transfers the characters to the text buffers in CMA Storage 216. Initially, font information is stored in HIG Storage 217. At the same time essentially by path 3B, the CMA 202 supplies print commands to the CTA 211 to start the operation. Next are two operations 4A and 4B. CTA 211 initiates operation 4A to HIG 220 which simply says there is data in the text buffer at a certain address, begin HIG operations. At the same time, the path 4B is effective to tell the Control and Sense card 212 to start any of a number of possible operations of the printer, such as:to move the heads off the ramp, move the forms as necessary, do not move the forms, move the head to a certain absolute position or relative position, etc. Item 5 is a path from HIG 220, a flow from the HIG to the storage blocks 216 and 217 which essentially fetches the data and the font information, that is the hexadecimal representation of the data that is supposed to operate on to start its wire image generation. Path 6A represents verification by CTA 211 of electromechanical printer operations. This involves checking out the emitters, for example, timing out on the print emitters, etc. to determine that the printer is prepared to print and ready to fire reported back by path 6B.

Item 7 (two paths, 7A and 7B) represents fetching of data from the HIG 220 which is the head latch image that is transferred to the head latch card 213 and some checking is done on it at that point by the CTM.

Item 8 represents CTA 211 signalling the head latch block 213 to fire. This is a pedestal signal to fire the wires. Prior to that point, CTA 211 has to have received a print emitter at step 6B in order to issue the pedestal firing signal.

Step 9 represents a feedback signal from the Control and Sense Card 212 and from the head latch card back to CTA 211. CTA 211 will recheck the Control and Sense Card 212 verifying that the operation was performed that was expected to be performed.

Step 10 is communications from the CTA 211 to the CMA 202 indicating that the operation that the CMA initiated was accomplished without errors. If there were errors, CMA will be so advised. CMA 202 then compiles status or error information and presents it at Step 11 to the Interface 201 as a poll response to the host.

Communications microprocessor (CMM) operations

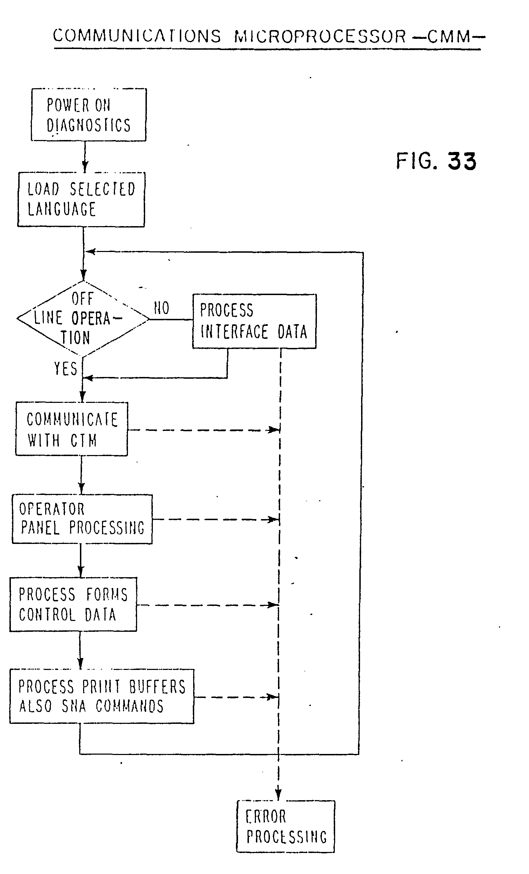

The Communications Microprocessor 200 (CMM) Flowchart, Fig. 33, represents its general operation and starts with the Power On Diagnostics being run. At the conclusion of the Power On Diagnostics, the selected language is loaded into the font Memory for processing and printing. A decision is now made as to whether the Mode Switch is in the off-line or on-line position. If it is in the on-line position, then the interface data is processed, or information coming from the host or going to the host, is processed and prepared. If an off-line operation was indicated, then this process is skipped. In any case, the chart continues to the next block no matter which off-line operation is processed. This block represents communication with the Control Microprocessor 210 (CTM). This allows the CMM to receive any error or information that needs to be passed to the host and it allows the CMM to pass data and commands such as data to be printed, forms, spacing, etc, on to the CTM. Next, the Operator Panel is accessed to determine whether the Start button, Stop button, or other buttons have been depressed for entry information from the Operator Panel. Next, the Process forms or Control data block is checked to determine the movement of forms resulting from commands sent to the CTM. Next is to Process the text buffers which includes SNA commands or the off-line routines. The CMM places them in the proper text buffer to be printed by the CTM and directs the CTM to pick this information up and place it on the paper as dots. All of these operations

# 0 027 899

have a means of communicating with the error processing routine. At the end of the operation, the CMM checks for on-line or off-line status and continues the process again.

Control microprocessor (CTM) operations

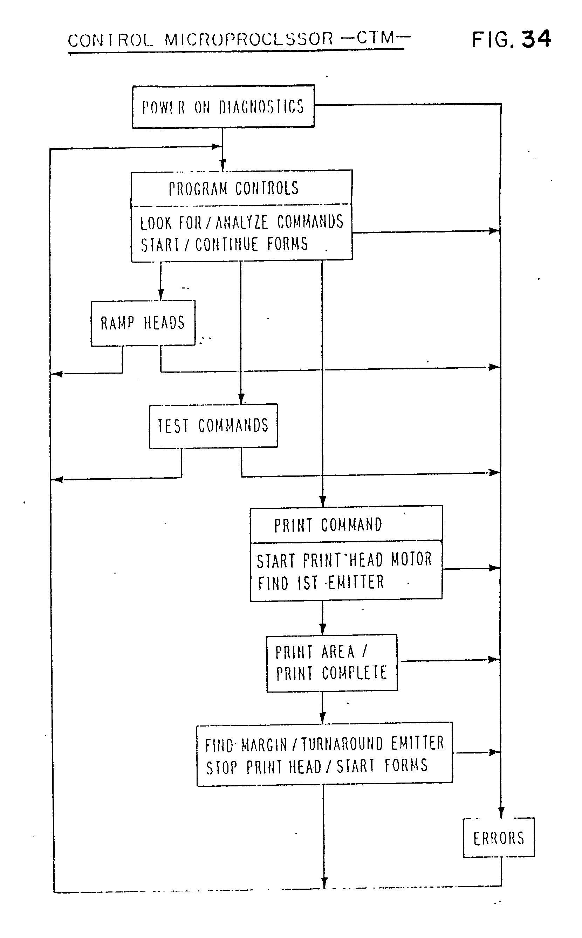

Fig. 34 is an overall block diagram of the Control Microprocessor 210 (CTM) operations. The CTM goes through Power On Diagnostics upon Power Up and then upon successful completion of that proceeds to Program Controls. The function of this is to look for and analyze commands from the Communications Microprocessor (CMM) and start or continue forms operation. When a command is determined, if it is a Print Command, CTM starts the print head motor and looks for the first print emitter. Upon finding the first print emitter, CTM goes into the Print block and stays in that area printing the line of data until it reaches Print Complete representing complete printing of the line. Then CTM goes into the margin operation to find the margins or a turnaround emitter. Once the margins or the turnaround emitter are determined, CTM stops the print head, starts the forms and returns to Program Control to look for and analyze further commands. If CTM receives additional commands from the CMM, upon completion of the forms operation, it starts the next print operation. Out of any of these blocks, if an error is detected, CTM exits and goes into an error operation to determine what and where the error is. It notifies the CMM of the error. The CMM, based on the type of error, will either retry the command or stop the operation of the printer and notify the host.

Detailed description of printer

Control unit—A detailed embodiment

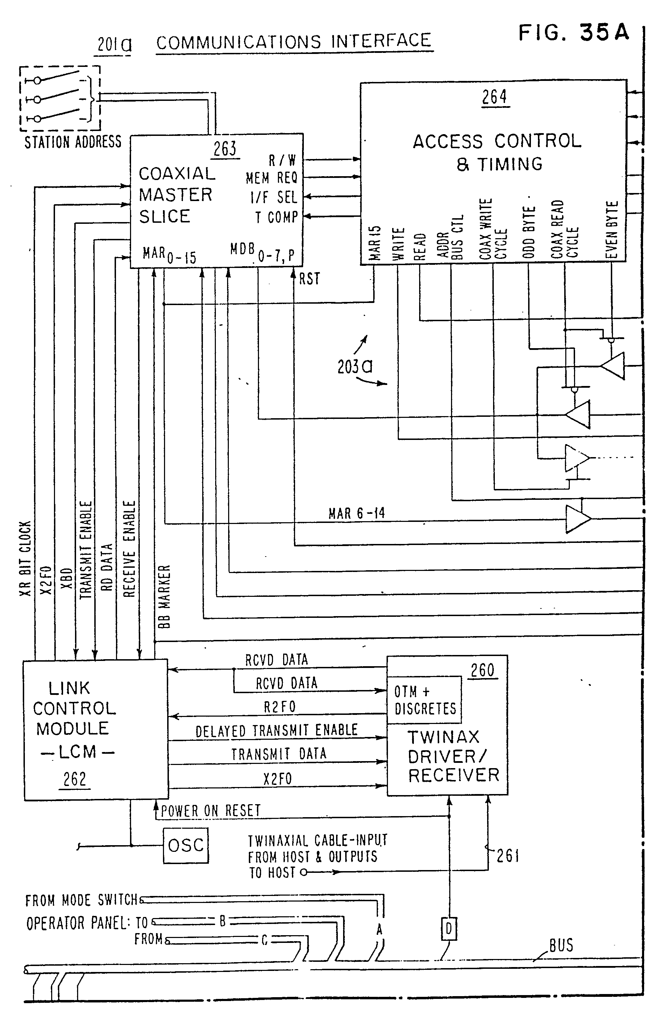

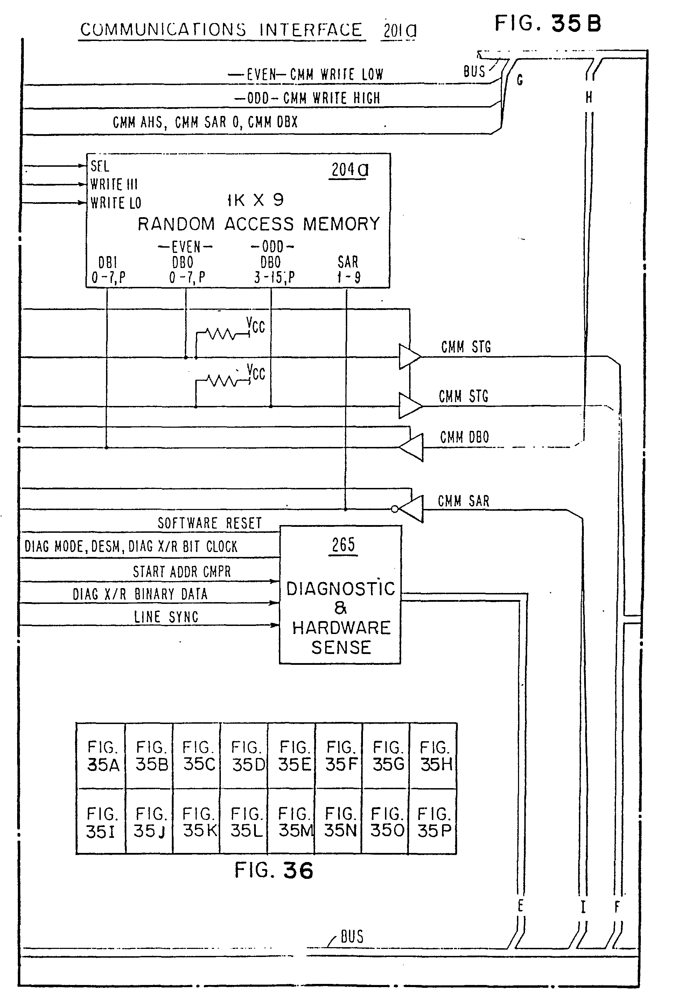

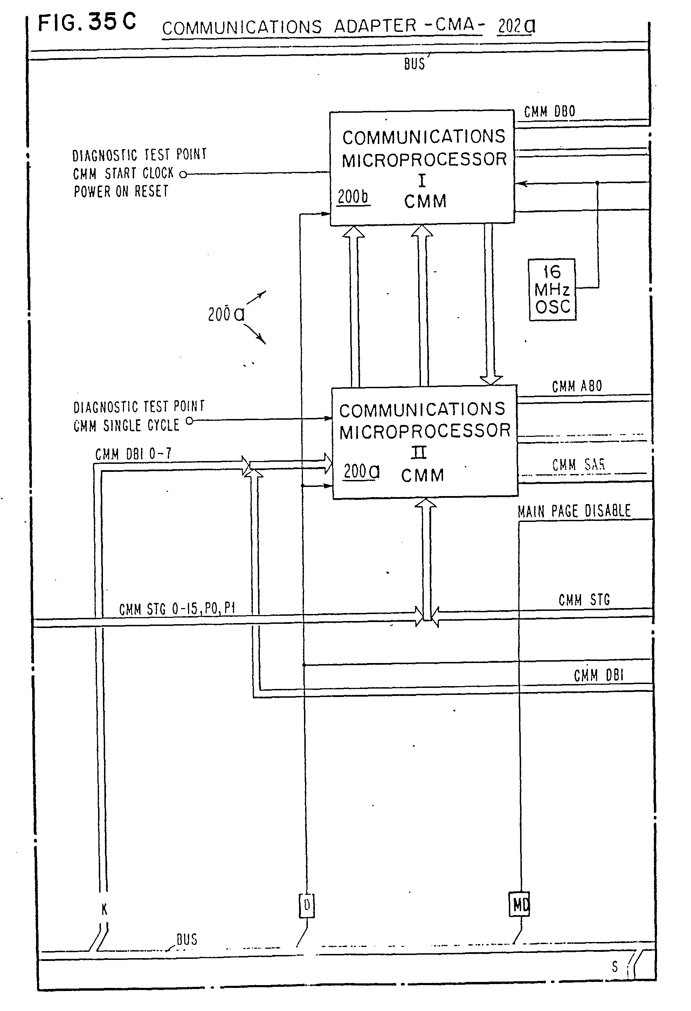

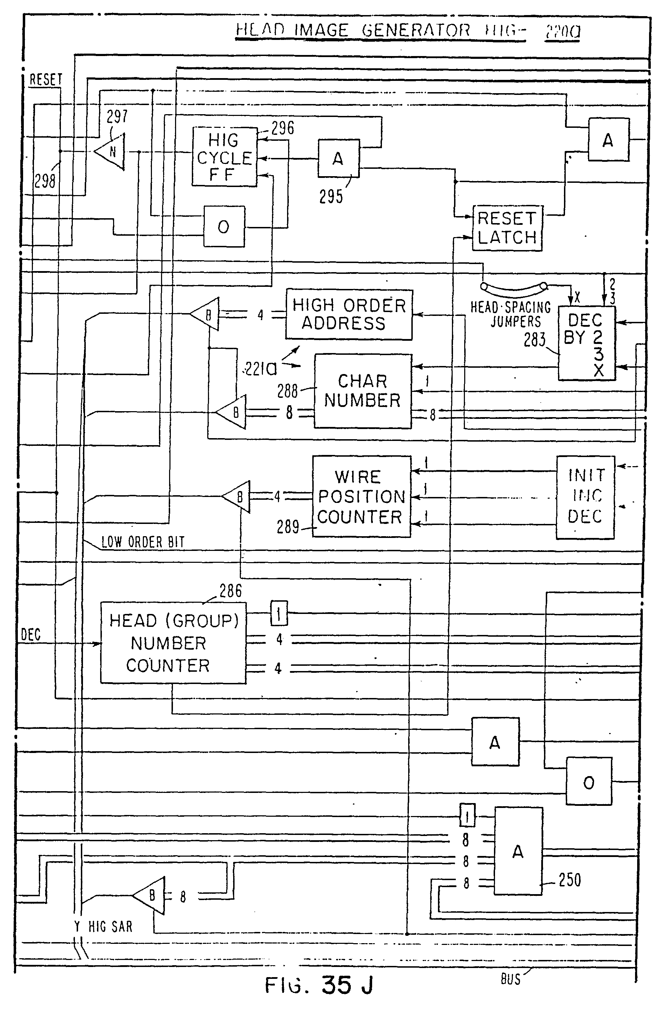

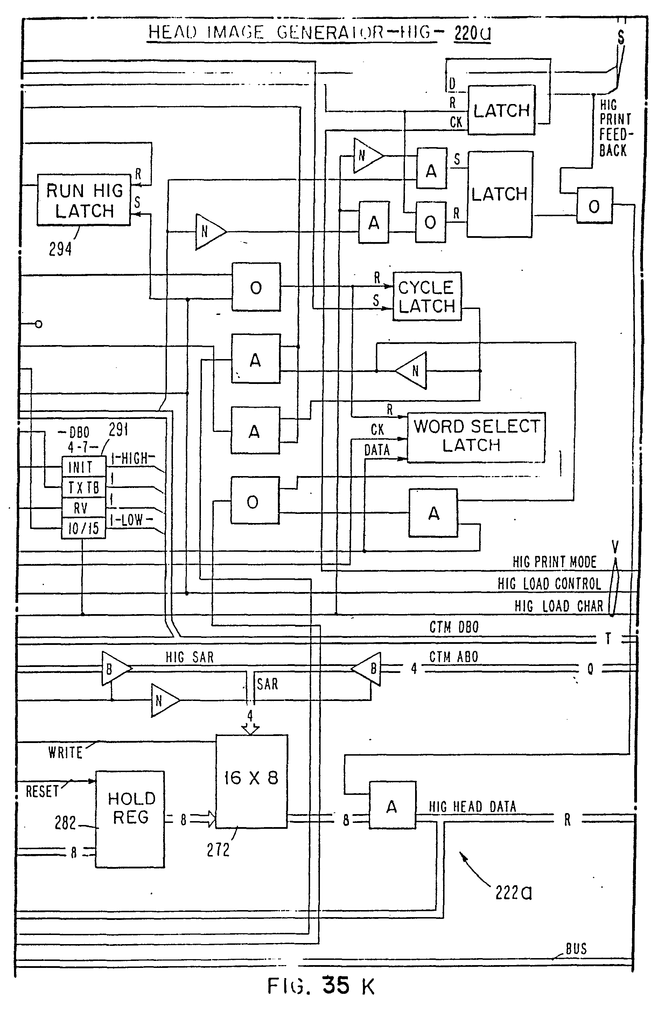

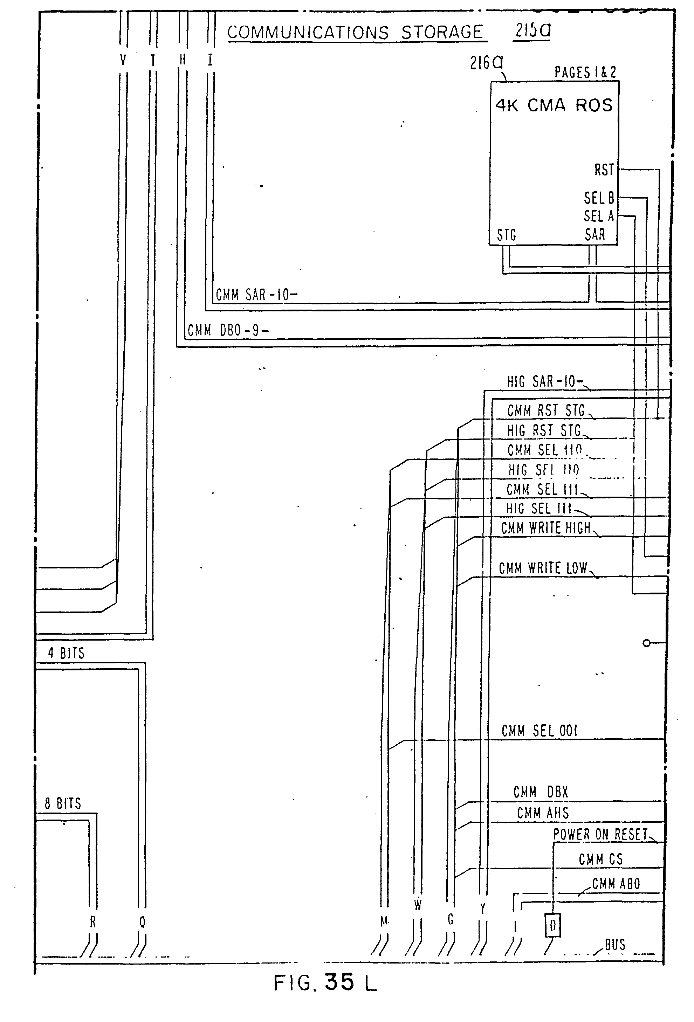

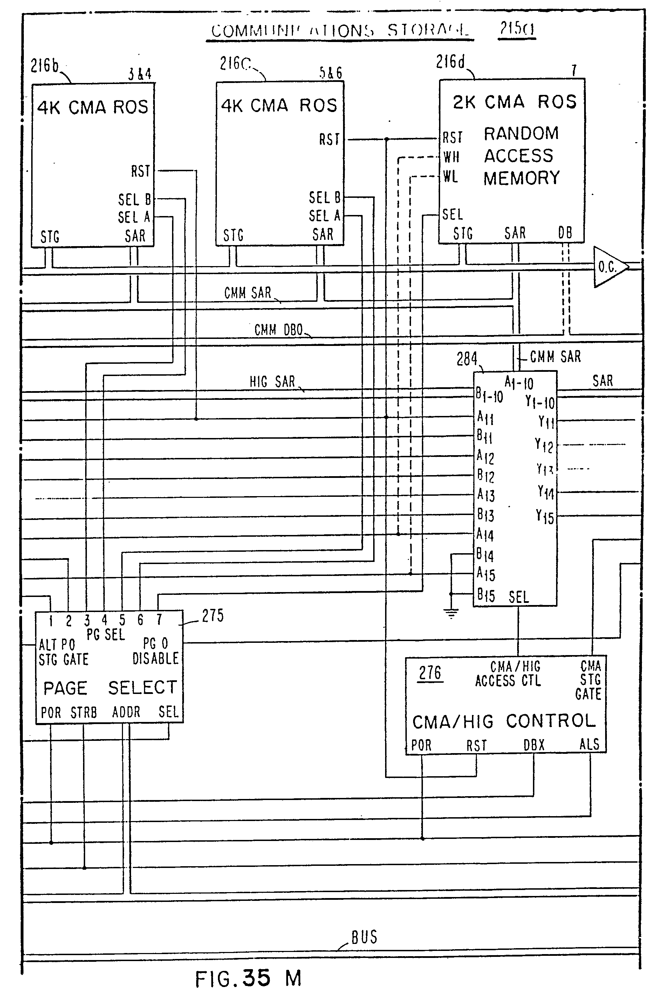

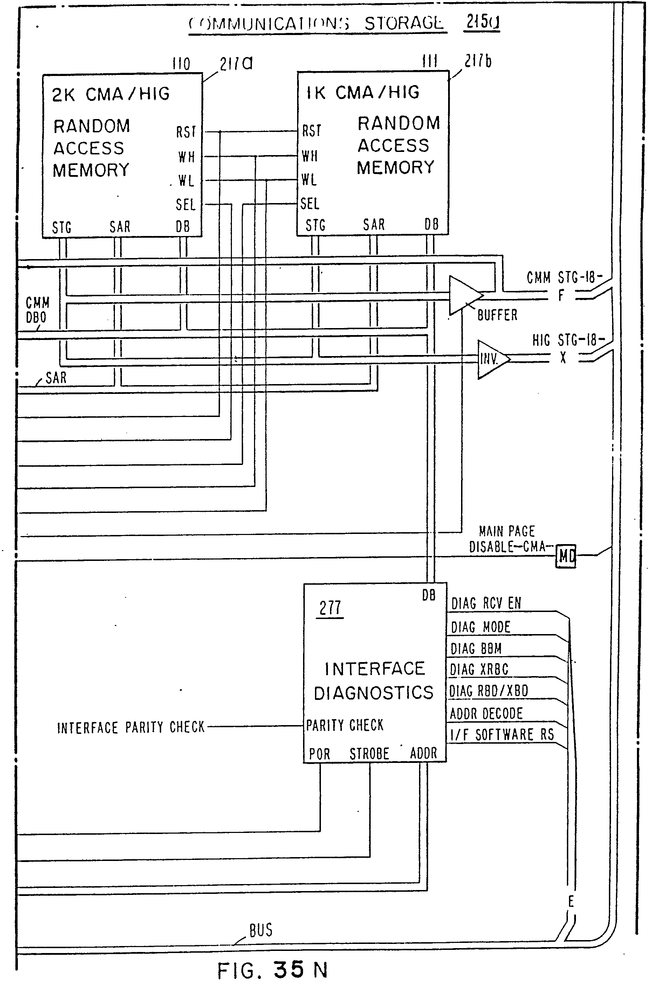

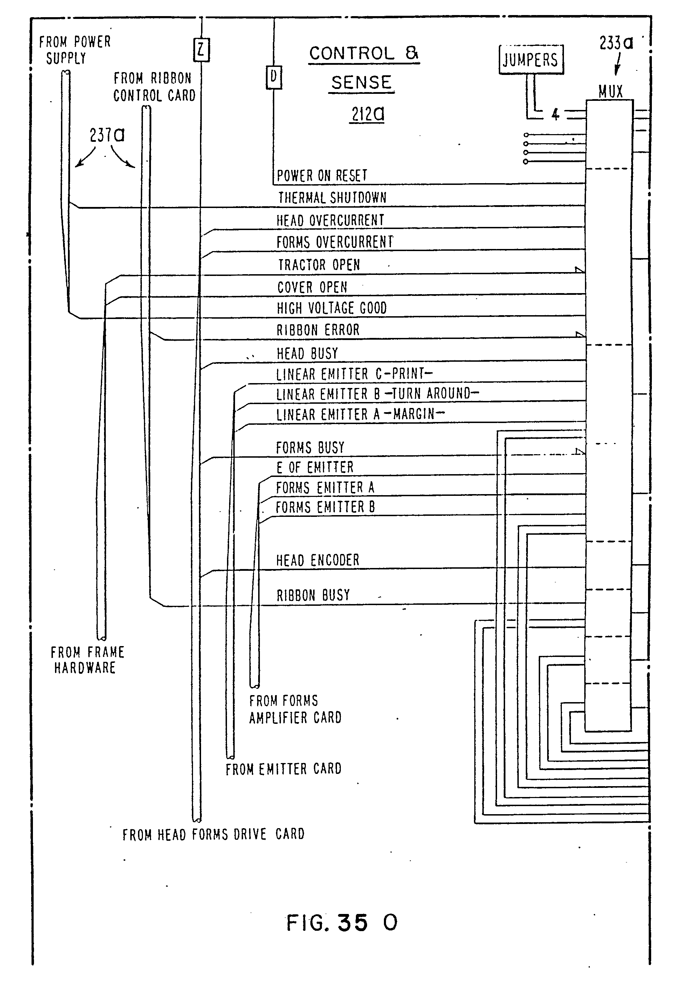

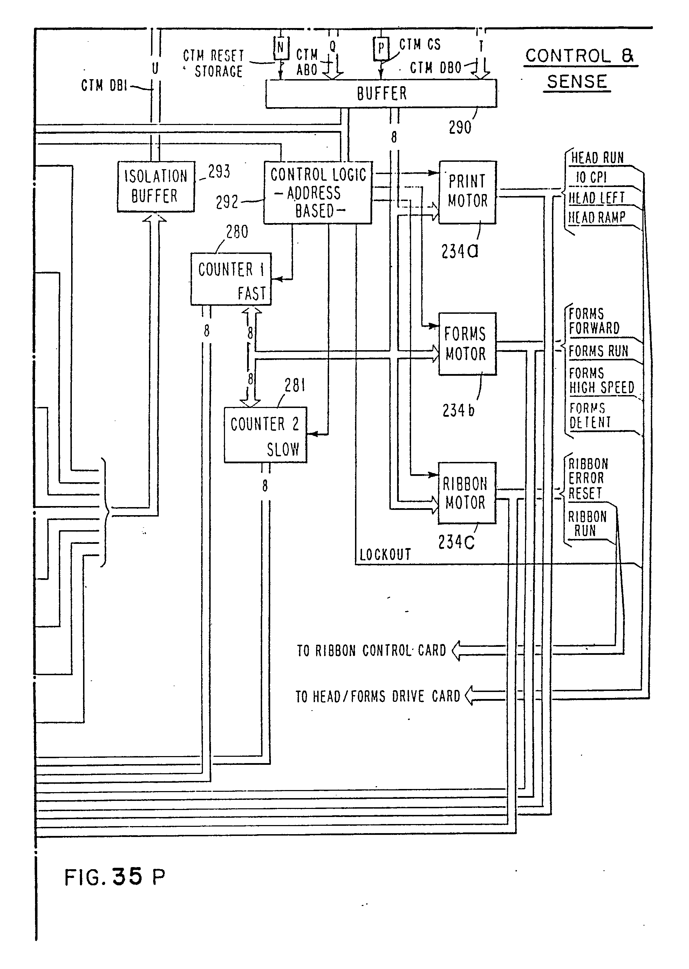

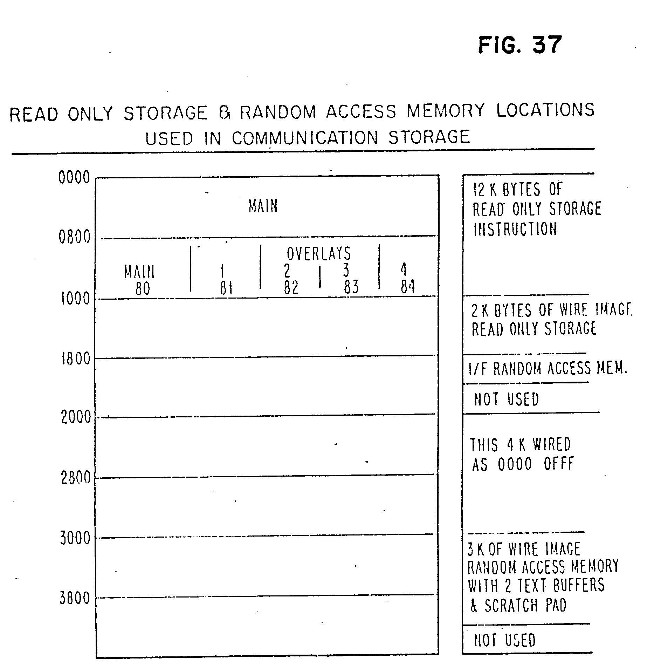

Figs. 35A—35P represent detailed circuits for a printer control unit useful in the printer subsystem described herein and which is generally based on the block diagrams of the printer control unit shown in Figs. 30A and 30B but which differs in some of the details of implementation. Figs. 35A—35P should be arranged as shown in Fig. 36 (on same sheet of drawings as Fig. 35B).

As with the version shown in a general way in Figs. 30A and 30B the printer control unit of Figs. 35A—35P is assumed to be arranged on seven printed circuit cards havng the same general headings as previously discussed in connection with Figs. 30A and 30B. Table IV lists the seven circuit card titles and their figure number locations.

### TABLE IV
. Printer control unit

| Figure numbers | | | Item |
|---|---|---|---|
| 35A, | 35B | | Communications Interface |
| 35C, | 35D | | Communications Adapter (CMA) |
| 35E, | 35F | | Control Adapter (CTA) |
| 35G, | 35H | | Head Latch |
| 35I, | 35J, | 35K | Head Image Generator (HIG) |
| 35L, | 35M, | 35N | Communications Storage |
| 35O, | 35P | | Control & Sense |

In addition, for convenience, reference numbers similar to those used in Figs. 30A—30B will be used in the present description with an appropriate suffix to indicate that there are some differences in the circuit components and arrangements between the two embodiments described.

The circuit groups are used mainly when the related circuit lines are located on drawings that are located some distance away within the collection of drawings 35A—35P. When circuit data or control lines are located in such a manner that they readily interconnect when the drawings are lined up as shown in Fig. 36, then the circuit group designations are not used since the circuit connections may be readily seen by such arrangement.

Abbreviations used

A variety of abbreviations are used in the drawings particularly in Figs. 35A—35P, and these abbreviations are set forth in Table V below:

17

**0 027 899**

TABLE V

| Abbreviation | Definition |
| --- | --- |
| ABO | Adress Bus Out |
| ADDR W ADD | Address |
| ADDR | Address Bus |
| AHS | Address High Storage |
| ALT | Alternate |
| ATTN | Attention |
| B | Buffer (no invert) |
| BB | Bit—Byte |
| CH | Check |
| CHAR | Character |
| CK | Clock |
| CLK | Clock |
| CMA | Communications Adapter |
| CMD | Command |
| CMPR | Compare |
| COAX | Coaxial |
| CPI | Characters Per Inch |
| CS | Control Strobe |
| CTA | Control Adapter |
| CTL or CNTL | Control Microprocessor |
| CTM | Cycle |
| DB | Data Bus |
| DBBM | Diagnostic Bit Byte Mark |
| DBI | Data Bus In |
| DBO | Data Bus Out |
| DBX | Data Bit "X" |
| DEC | Decode |
| DET | Detect |
| DIAG | Diagnostic |
| DR | Driver |
| ENBL or EN | Enable |

TABLE V (continued)

| Abbreviation | Definition |
|---|---|
| EOF | End of Forms |
| FF | Flip Flop |
| FMS | Forms |
| GTE | Gate |
| HI | High |
| HIG | Head Image Generator |
| HL | Head Latch |
| H/W | Hardware |
| I/F | Interface |
| INC | Increment |
| INIT | Initialize |
| INV | Inverter |
| K | 1000 |
| LANG | Language |
| LD | Load |
| LO | Low |
| LTH or LTCH | Latch |
| MAR | Memory Address Register |
| MDB | Memory Data Bus |
| MEM REQ | Memory Request |
| MHZ | Megahertz |
| MPLX or MUX | Multiplex |
| MTR | Motor |
| N | Inverter/Buffer |
| NO | Number |
| O.C. | Open Collector |
| P CHECK | Parity Check |
| PG | Page |
| POR | Power On Reset |
| POS | Position |
| R2FO | Two Times Receive Clock |

TABLE V (continued)

| Abbreviation | Definition |
|---|---|
| RBD | Receive Binary Data |
| RCV | Receive |
| RCVD | Received |
| RD | Read |
| REG | Register |
| ROS | Read Only Storage |
| RST | Reset |
| RV | Reverse |
| R/W | Read/Write |
| SAR | Storage Address Register |
| SEL | Select |
| SING | Single |
| SPD | Speed |
| SS | Sense Strobe |
| ST | Start |
| STAT | Station |
| STG | Storage |
| SW | Switch |
| SYNC | Synchronization |
| SYS | System |
| T COMP | T Complete |
| TXTB | Text Buffer |
| WH | Write High |
| WL | Write Low |
| WR | Write |
| X2FO | Two Times Transmit Clock |
| XBD | Transmit Binary Data |
| XMIT | Transmit |
| X/R | Transmit/Receive |
| XRBC | Transmit/Receive Bit Clock |

Circuit terminology

To the extent that they are the same as the block diagram in Figs. 30A—30B, the same reference numerals will be applied to those circuit modules in Figs. 35A—35P. However, a number of additional circuit elements are shown in Figs. 35A—35P not previously discussed before in connection with Figs. 30A and 30B.

In contrast with the circuit diagram of Figs. 30A and 30B where individual cables are shown interconnecting the various blocks, Figs. 35A—35P have a single bus structure which accommodates all cabling in the printer control unit shown in those figures. This is simply designated by the term "BUS". The inclusion of the single bus structure in Figs. 35A—35P is done for convenience in presentation of the printer control unit described therein, it being understood that a single bus structure in actual hardware would not necessarily be as desirable as separate cabling or buses as may be required to route the wiring to the different components of the printer subsystem.

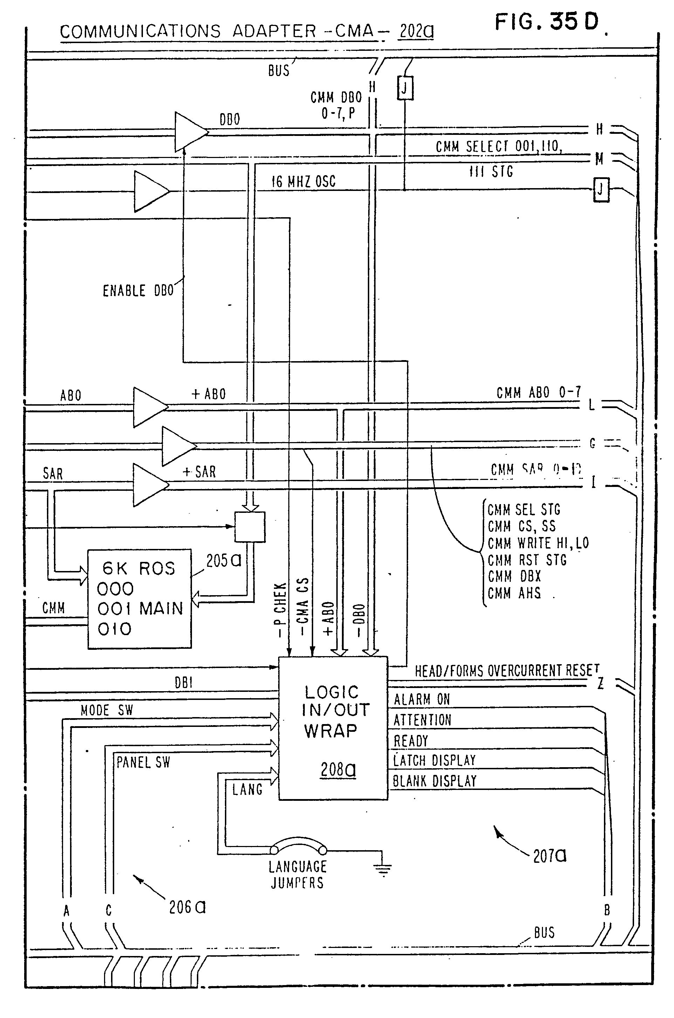

Also as a convenience, groups of circuit connections for data and/or control signals that are somewhat related have been arranged into circuit groups A—Z in Figs. 35A—35P. Thus, the cabling designated "B". To Operator Panel, in Fig. 35A is routed through the primary bus and is found connected to the logic in/out wrap block in Fig. 35D. Some of the circuit groups may be found on more than one sheet of the drawings. The circuit groups, their definitions, and locations in the figure numbers is indicated in the following Table VI.

TABLE VI

Circuit interconnections—Figs. 35A—35P

| Circuit group | Definition | Found in figure No. | | |
|---|---|---|---|---|
| A | From Mode Switch | 35A, | 35D | |
| B | To Operator Panel | 35A, | 35D | |
| C | From Operator Panel | 35A, | 35D | |
| D | Power On Reset | 35A, 35G, 35O | 35C, 35I, | 35E 35L |
| E | Interface Diagnostics | 35A, | 35N | |
| F | CMM Storage | 35B, | 35C, | 35N |
| G | CMM Write Low<br>CMM Write High<br>CMM Address High Storage (AHS)<br>CMM Storage Address Register 5SAR=<br>CMM Data Bit X (DBX) | 35B, 35I, | 35E 35L | |
| H | CMM DBO | 35B, | 35D, | 35L |
| I | CMM Storage Address Register (SAR) | 35D, | 35L | |
| J | 16 MHz Oscillator | 35D, | 35E, | 35I |
| K | CMM Data Bus In (DBI) | 35C, | 35E | |
| L | CMM Address Bus Out (ABO) | 35D, | 35E, | 35L |
| M | CMM Select 001, 110, 111 STG | 35D, | 35L | |
| MD | Main Page Disable | 35C, | 35N | |
| N | CTM Reset Storage (RST STG) | 35E, | 35P | |
| O | CTM Error | 35E, | 35G | |
| P | CTM Control Strobe | 35E, | 35G, | 35P |
| Q | CTM Address Bus OUT (ABO) 0—7 | 35E, | 35L, | 35K |

TABLE VI (continued)
Circuit interconnections—Figs. 35A—35P

| Circuit group | Definition | Found in figure no. | | |
|---|---|---|---|---|
| R | HIG Head Data 0—7 | 35E, | 35K, | 35L |
| S | HIG Error<br>HIG Print Feedback | 35E, | 35K | |
| T | CTM Data Bus Out (DBO) 0—7 | 35F,<br>35K, | 35H<br>35L, | 35P |
| U | CTM Data Bus In (DBI) 0—7 | 35F,<br>35P | 35H | |
| V | HIG Load Character No.<br>HIG Load control<br>HIG Print Mode<br>Head Latch (HL) Enable | 35F,<br>35L | 35G, | 35K |
| W | HIG Select 110<br>HIG Select 111<br>HIG Reset Storage | 35I, | 35L | |
| X | HIG Storage | 56I, | 56N | |
| Y | HIG Storage<br>Address Register (SAR) | 56I, | 56L | |
| Z | Head/Forms Overcurrent and Reset | 35D, | 35O | |

Data flow and communications—Printer control unit

As mentioned, the printer control unit is divided into two primary sections, one being the control section and one the communications section. In the control section, most of the operations performed are on an Input/Output (I/O) basis. On the other hand, the communications side of the printer control unit, that is, Communications Interface 201a, Communications Adapter 202a, Communications Storage 215a, and the Head Image Generator 220a all perform communications on a memory basis, that is through a memory module. In this regard, Communications Adapter 202a can request information form the Communications Interface 201a, and the Communications Interface thereupon searches through its memory 204a, Fig. 35B, looking for that information and presents it back to the Communications Adapter. The Head Image Generator 220a operates somewhat in the same manner. It can request information from the Communications Storage Random Access Memory (217a and 217b, Fig. 35N) and is timesharing the memory with the Communications Adapter.

The Communications Interface 201a shares its memory with the Communications Adapter 202a in a more asynchronous manner; that is, the Communications Interface accesses its buffer Random Access Memory 204a at a higher speed than the Communications Adapter accesses it and is not synchronized with it in any way except when the Communications Interface requests some information from this memory. At that moment, the Communications Interface syncs up with the Communications Adapter until the information has been passed. Then, the Communications Interface reverts back to its own speed and its own synchronization to interface with this buffer. With regard to the Head Image Generator 220a, there is a more synchronous type of information transfer. The Head Image Generator is synchronized with every memory cycle that the Communications Adapter takes, whether or not it is to the Head Image or the Wire Image or Text Buffers in Memories 217a, 217b, Fig. 35N. Just prior to the Communications Adapter 202a taking any memory cycle, the Communications Storage 215a detects if the Communications Adapter 202a is going to the Wire Image memory or Text Buffer memory or whether it is not. If the Communications Adapter 202a is not going to these memory locations, it passes control to the Head Image Generator to use if the Head Image Generator needs it, at which time the Head Image Generator will take two memory cycles, then stop and wait to see if the Communications Adapter will require these memories on its next memory cycle. If the Communications Adapter card does require these memories including text buffers and wire images, then the Communications Storage 215a allocates them to the Communications Adapter and locks out the Head Image Generator for one Communications Adapter storage access interval.

Printer control unit circuit blocks and operation
Communications interface

The Communications Interface 201a, Figs. 35A and 35B, consists of six major blocks. The first block is the Discrete Interface 260 between the host input on twinaxial cable 261 and the digital portion of the card. This discrete hardware consists of drivers and receivers of an analog nature that receive and buffer the analog signals coming from the host and that drive the analog signals going back to the host on cable 261. Out of this driver-receiver network the signals that are obtained are phase encoded. These go to the Link Control Module 262. Link Control Module 262 decodes the encoded data, that is, separates out the clock and the data information into separate lines that can now be used by the Coaxial Master Slice block 263. Master Slice block 263 is a digital control block that controls the writing of information to Random Access Memory 204a and that controls the receiving and transmitting of data to and from the host. It obtains all its inputs from Link Control Module 262. It receives input from Random Access Memory 204a and supplies outputs to the Random Access Memory 204a. The Access Control and Timing block 264 exists to interface this Random Access Memory between the Coaxial Master Slice and the Communications Microprocessor on a time-shared basis. Random Access Memory 204a has 1K bytes of storage and is a buffer for information coming over from the host system and is written to and read by the Coaxial Master Slice block 263. It can also be written to and read by the Communications Microprocessor 200a. The Diagnostic Hardware and Sense block 265 controls diagnostic hardware within Coaxial Master Slice 263 that can be used at card tasks and also may be used in on-line operations within the printer (note connection by way of the Bus and cable group E to Fig. 35N).

Communications adapter

The Communications Adapter 202a, Figs. 35C and 35D, has four major blocks within it. Two blocks 200b and 200c comprise the microprocessor 200a. The microprocessor obtains its program from the FSU Read Only Storage (ROS) Module 205a, Fig. 35D. There are six K bytes of program storage on this module. Microprocessor 200a fetches its instructions from this ROS storage and communicates with the Communications Interface 201a and the Control Adapter 210a in the Communications Storage card through the Logic Input/Output 208a. This has on it diagnostic hardware so the card is able to self-diagnose and also contains the logic required to output information to the operator's panel and receive information from the printer subsystem.

There are several major cables on the Communications Adapter card that cross card boundaries and that are of interest. The Storage Address Register (SAR) lines are memory address lines that originate from the Communications Adapter card. The CMA goes to its own memory 205a and also addresses the Communications Storage card 215a memories and the Communications Interface memory 204a. The Data Bus Out (DBO), Cable H, is the bus on which all information to memory travels. It originates on the Communications Adapter 202a, travels to block 208a on that card, travels to Memories 217a and 217b on the Communications Storage card 215a, Fig. 35N, and to Memory 204a on the Communications Interface card 201a, Fig. 35B. The Communications Storage Cable F, Figs. 35B and 35C, as examples, has many sources, but just one control source, the Communications Adapter card. This is the output of all storage. The output of the Communications Storage card, Fig. 35N, drives this cable. Also the output of the Communications Interface Memory 204a drives this cable. The Address Bus Out (ABO) cable L, Fig. 35D, from the Communications Adapter card supplies input/output addresses to Communications Storage 215a and to Control Adapter 211a.

Also emanating from the Communications Adapter by way of cable B are various control type signals that go to the operator panel such signals as turning the Attention light on and turning the Ready light on, latching the display, blanking the display, turning the alarm on. There are also inputs from the operator panel by way of cable C so that the Communications Adapter card can tell when an operator panel button has been pushed. It also can sense by way of cable A the Mode switch for various diagnostic routines that are to be run on the printer.

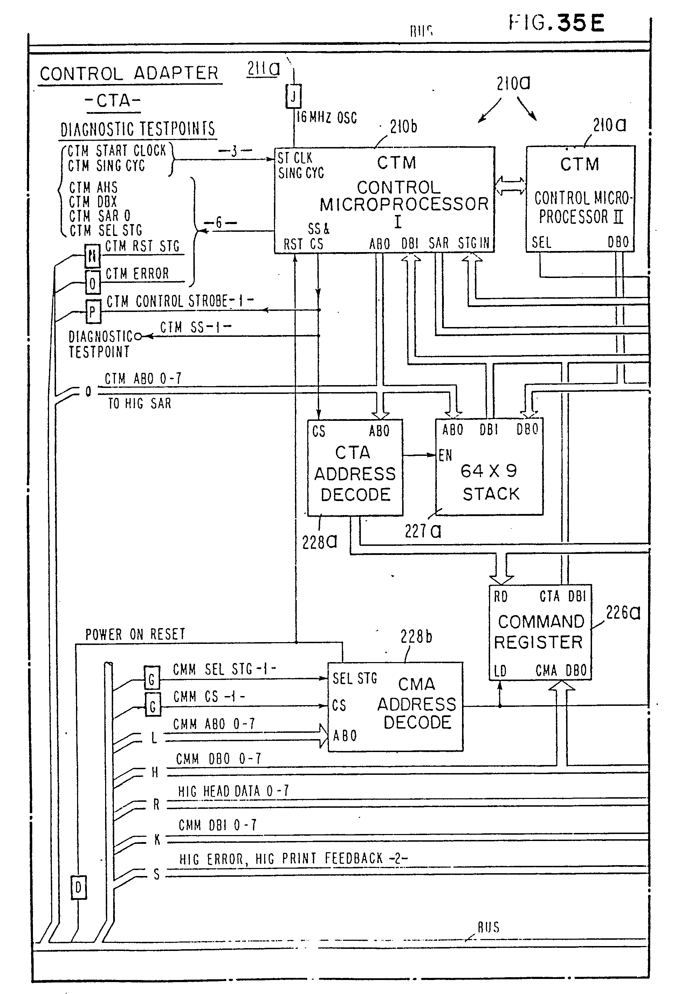

There are also some general control type signals; that is, Select Storage, Control Storage, Write High and Low Storage, Reset Storage, Data Bit X and Address High Storage (AHS) signals that emanate from the Communications Adapter by way of cable G that aid in the control of the memory read and write operations. These signals go to Communications Interface 201a, Communications Storage 215a and also to the Head Image Generator 220a. The Data Bus In (DBI) cable K has many sources, but only one control and that is the Communications Adapter 202a. This is the input line for I/O devices to pass information to the Communications Adapter. It is driven by the Control Adapter 211a, Fig. 35E, and various other devices on the Communications Adapter itself.

Control adapter

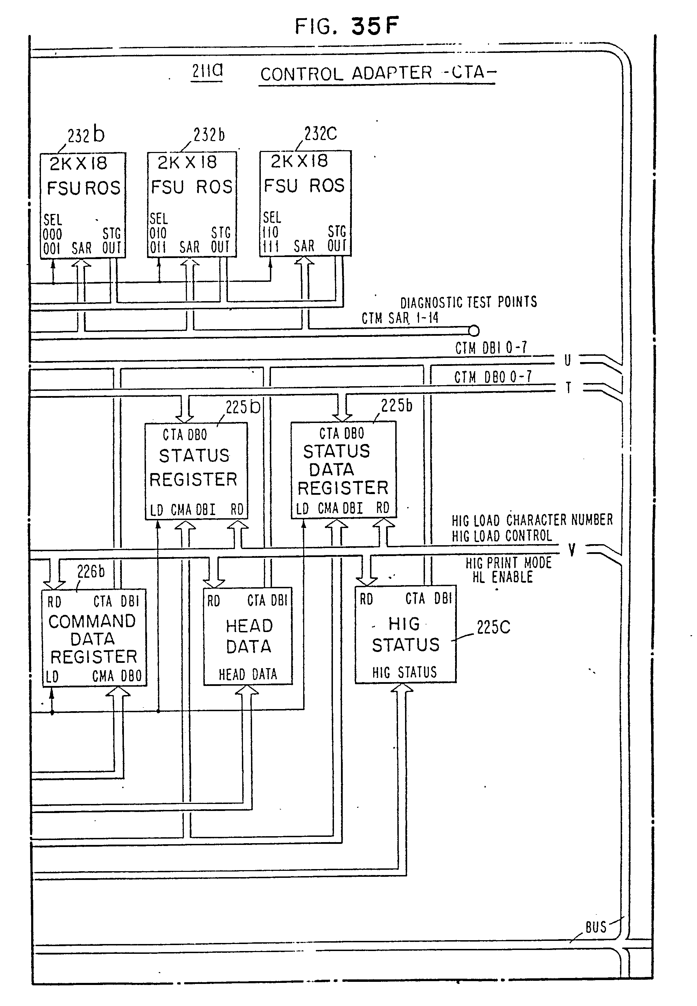

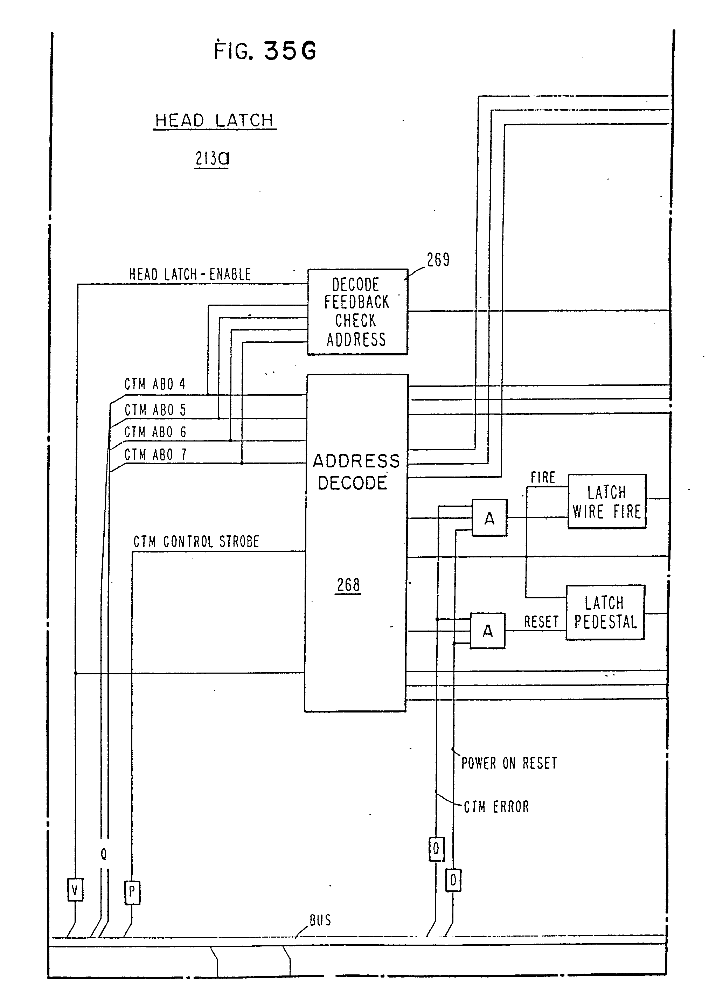

The Control Adapter 211a, Figs. 35E and 35F, includes a microprocessor 210a comprising blocks 210b and 210c. It has 12K bytes of FSU Read Only Storage (ROS) modules 232a—232c that are dedicated to program and data that do not change. Within the card there exists communications registers 226a, 226b, 225a, 225b, and 225c that allow the Communications Adapter 202a, Figs. 35C and 35D, to talk to the Control Adapter 211a or to pass on information as to commands, such as print commands anf forms commands. The status registers for the Control Adapter enable it to store information concerning printer status—if there has been an error out in the printer, a mechanical or an electrical error, or at what stage a command may be in. Controlling all of this are two address decode blocks 228a and 228b. Block 228a generates the signals to enable the use of the communications registers and allows the Control Adapter to use a small scratch pad memory 227a. Memory 227a has 64 locations by 9 bits wide (that includes parity checking). Block 228a enables the Control Adapter to input head data from the Head Image Generator (HIG) and to read the Head Image Generator status (225c) as to whether or not there has occurred a Head Image Generator error, which is a parity error. This may occur while the Head Image Generator is reading from the Communications Storage card 215a, Figs. 35L—35N, or in what is called a "print mode". This allows printing of every dot, whereas the Head Image Generator normally only prints every other dot. In summary, Decode block 228a controls the Communication Adapter's access to these communication registers. The Command Register 226a and Command Data Register 226b are the two registers through which commands pass from the Communications Adapter to the Control Adapter. The Status Register 225a and Status Data Register 225b pass the error codes or status information from the Control Adapter to the Communications Adapter. These registers have hand-shaking logic so that each processor can asynchronously talk or pass information from one to the other.

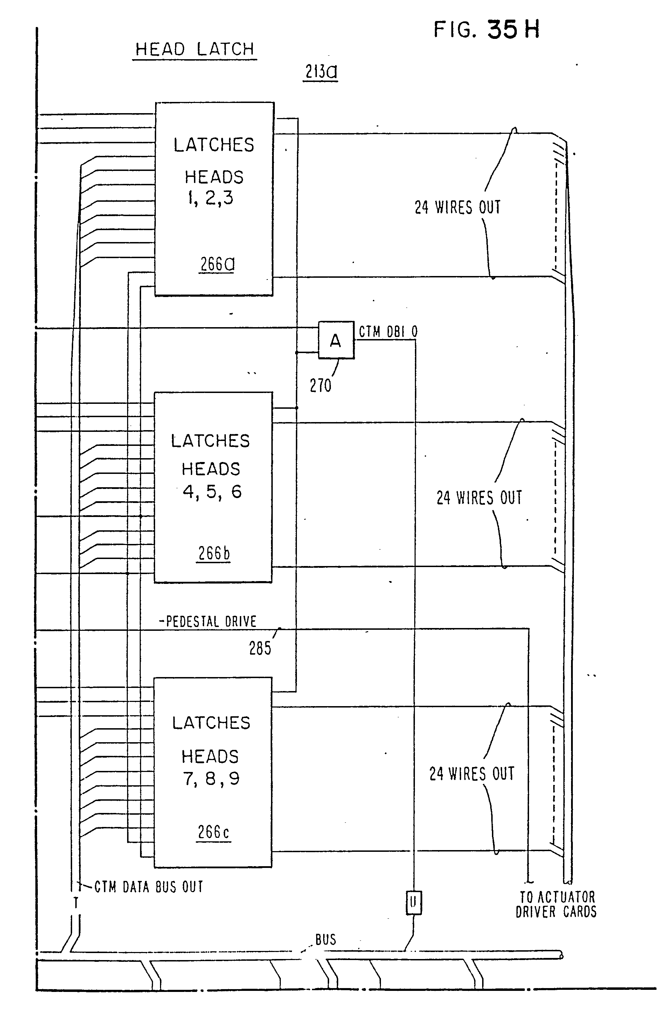

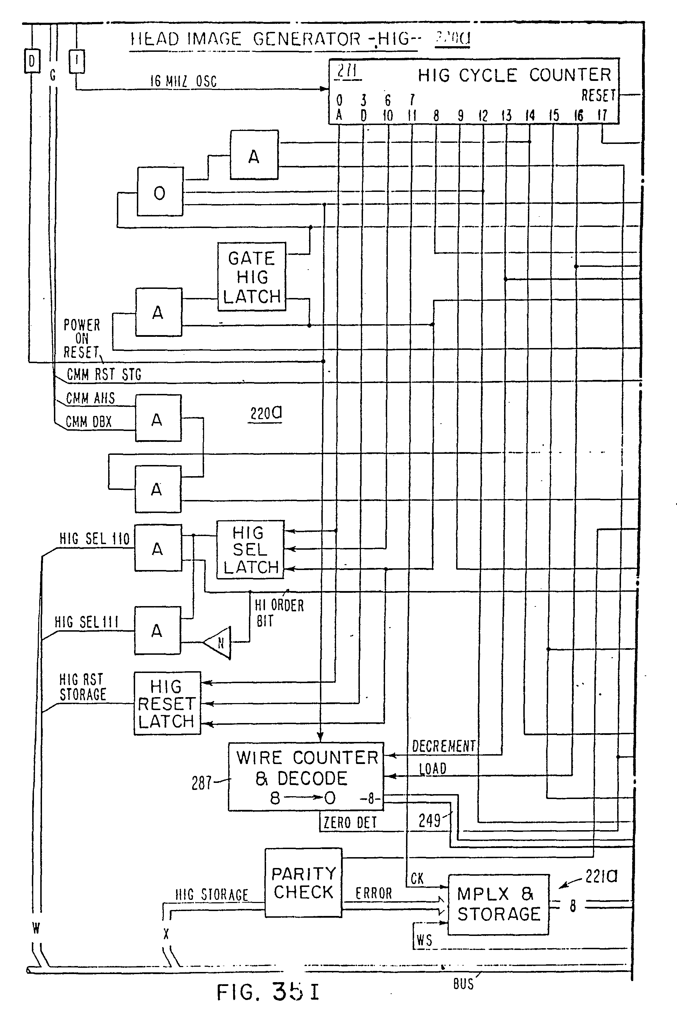

There are many cables originating and returning to Control Adapter 211a, Figs. 35E and 35F. There are Storage Address lines that are not used by any other card, but are for diagnostic purposes. These include Storage Address lines (See Fig. 35F, for example) going to the FSU ROS 232a—232c on the Control Adapter. Also, it is the Control Adapter Data Bus Out (DBO) cable T that contains the information going to output devices such as the Control and Sense card (Fig. 35P), Head Latch card (Fig. 35H), and the Head Image Generator (Fig. 35K). This cable is also used by devices on the Control Adapter card itself for purposes such as accessing the Communications Registers.

The Control Adapter Data Bus in (DBI), cable U, is a cable on which information is given to the Control Adapter by various cards such as the Control and Sense card (Fig. 35P) and the Head Latch Card (Fig. 35H). Also, devices on the Control Adapter card use it. The Control Adapter Address Bus Out (ABO), cable Q, carries the device address which the Control Adapter is presently working with.

Also present on the Control Adapter Card are various control signals on cable V that are routed to devices such as the Head Image Generator to tell the Head Image Generator which character it should start looking for in the Text Buffer or for loading control lines into the Head Image Generator for the ten or fifteen characters per inch or the head direction. Other signals going to the Head Latch card enable it to perform operations at the specific times it is supposed to. The CMM Select Storage, cable G, is a gating signal that is specifically used after the Control Adapter has received a Hardware Reset on cable D from the Communications Adapter and after activation of the Address Decode 228b by signals on cable L. The signal releases the Hardware Reset to the Control Adapter thus allowing it to start executing instructions at Address 0. Control Strobe coming from the Communications Adapter, cable G, is a gating signal that controls when data is written into the Command Register 226a and Command Data Register 226b and also controls which register is chosen depending upon the state of the Address Bus Out, cable L.

Head latch

The function of Head Latch 213a, Figs. 35G and 35H, is to interface between the Control Adapter 211a and the Actuator Driver cards. It contains three modules 266a—266c that contain registers in the form of latches. Control Adapter 211a receives the head data information from the Head Image Generator 220a, Figs. 35I—35K, and passes it directly to the Head Latch card 213a into the individual latches by cable 267.

The Address Bus Out, cable Q, coming into the Head Latch card, Fig. 35G, comes from the Control Adapter card. This is the address information to control which head is getting which head register within the head latch modules, Fig. 35H, which are provided information off of the Data Bus Out, cable T, coming from the Control Adapter also. There can be up to eight heads; so the procedure starts with head 1. Head 1 address is supplied to the head latch decode block 268 and head 1 wire data is provided on the Data Bus Out cable T. Data Bus Out Bit 0 is the information for wire 1; Data Bus Out Bit 1 is the information for wire 2 within the head selected on the Address Bus cable Q. A gating pulse called Control Strobe coming from the Control Adapter, cable P, tells the Head Latch modules when to latch the data information. Outputs go directly to the Actuator Driver cards and on command from Control Adapter 211a, the Head Latch card decodes the command by way of Decode block 268 to fire the actuators or not fire them so that the dots are printed in the proper character positions. There is, in addition, a Pedestal Drive signal on line 285 that is used to start all actuators at the same time.

For diagnostics, there is a feedback by way of cable U from the output of all of these latches controlled by blocks 269 and 270 so that all latches can be reset. This one feedback will tell if any latches are still on. From there, one latch is turned on at a time in this feedback check to be sure that one latch does come on.

Head image generator

The signal general or Head Image Generator 220a, Figs. 35F—35K, has many subblocks within it. Its major function is to take unslanted character information and slant it and distribute it across all heads to be able to print it in the slanted head and image format. It consists of a master HIG cycle counter 271, Fig. 35I, and it also has some internal registers and counters that keep control of which character it is dealing with and at what time and at what location in the printline it is generating the information for. HIG 220a accesses the Communications Memories (217a and 217b) twice for each single memory cycle that the Communications Adapter 202a will take. Thus, storage access is interleaved with the Communications Adapter. The HIG can only access this memory when the Communications Adapter is not going to access it.

24

# 0 027 899

It makes these decisions through logic on the Communications Interface, and the timing is controlled by the HIG cycle counter. Basically, the HIG pulls out information from the text buffer in Memories 217a or 217b first to find out what character it needs to look up the information, and then it will obtain information from the wire images in 217a or 217b. It takes this information, selects the one wire, or one bit worth of information, that it needs to load for a particular wire within a particular head and stores this in a small scratch pad Memory 272, Fig. 35K. Memory 272 is later read by Control Adapter 211a and outputted by Cable T to the Head Latches, Fig. 35H, for the wire actuators to be fired. There are two text buffers within Memories 217a and 217b on the Communications Storage card 215a. One buffer can be filled up with a print line from the Communications Adapter 202a and the Head Image Generator 220a can then start pulling characters from that one text buffer while the Communications Adapter stores characters in the other text buffer. Normally, this will alternate back and forth. While the Head Image Generator is reading from one text buffer, the Communications Adapter card is writing into the other text buffer. The Head Image Generator is informed by the Communications Adapter which text buffer to work on to build the slanted information and also what character density the printer is currently printing in, that is, ten characters per inch or fifteen characters per inch. Both the text buffer information and the characters-per-inch information is sent by the Control Adapter 211a to the Head Image Generator. One other piece of information that is necessary for the Head Image Generator is the number of heads or actually the character spacing between heads for each printer configuration. These are Head Spacing jumpers that are on the card that are prewired. They are in the "X" control line to block 283, Fig. 35J. Once these jumpers have been selected, then the Head Image Generator will always build character information, that is, slanted information, for the pre-wired number of heads and the particular distance between the heads. The HIG Head Data, cable R, carries slanted wire information coming from the Head Image Generator to the Control Adapter card. The HIG cable S contains two lines coming from the Head Image Generator which are the HIG Error and HIG Print Feedback.

## Communications storage

The Communications Storage 215a, Figs. 35L—35N, mainly consists of program storage in Read Only Storage (ROS) modules (216a—216d) and some Random Access Memory (217a, 217b) for scratch pad type information and control signals interfacing the Communications Adapter 202a with the Head Image Generator 220a. The layout of these modules is shown in Fig. 37. Modules 216a—216d have 14K bytes of storage. Memories 217a and 217b have 3K bytes of storage. The memory is paged and page select logic 275, Fig. 35M, can select any unit of 2K bytes out of the 14K bytes to be used at any one time, that is, not all of memory is available constantly.

The way the memory pages are selected is on an Address Bus Out (ABO) type configuration; that is, the first page of ROS has a particular address value assigned to it and when that address is present from the Communications Adapter card and the Communications Adapter card Control Strobe becomes active, it will select the particular page that is assigned to that address number. The Communications Adapter 202a keeps track of which page it is in, and advises when another page of memory is needed. The highest 2K bytes in ROS 216d store all font images that are available for use by the printer.

The Communications Adapter (CMA) HIG Control block 276, Fig. 35M, allows the HIG to access the wire image memories 217a and 217b that contain the unslanted character information and also the text buffers which have the characters to be printed. This is done by Select block 284, Fig. 35M, which selects the HIG storage address lines in this case and which otherwise selects the Communications Adapter Storage Address lines. It allows the HIG to select Memories 217a, 217b as needed without interfering with the Communications Adapter. The Communications Adapter can write or read from these memories at any time it is necessary, and the HIG is interleaved within these accesses with the Communications Adapter.

Interface Diagnostic block 277 allows the Communications Adapter to run diagnostics on-line or off-line, by way of cable E, Figs. 35N and 35A, any mode that it wishes, referring against the Communications Interface diagnostics, block 265, to determine if there are any problems.

Storage, cable X, carries data going to the Head Image Generator. This is the output from the wire image and text buffer memories 217a and 217b transferred to the Head Image Generator when the Head Image Generator requests information for its wire image operation. Input from the Head Image Generator to the Communications Storage card is by way of the HIG SAR cable Y, Figs. 35L and 35M, which are the Address Lines for Memory when HIG has access, and the HIG Select Storage lines, cable W, which informs the Communications Storage which of the two memories 217a or 217b the Head Image Generator needs to access.

## Control and sense

The major function of Control and Sense 212a, Figs. 35O and 35P, is to interface between the Control Adapter 211a and printer electronics listed in Fig. 35O. It performs control and sense functions in that it can read status information from the printer, from the power supply, from the mechanics (such as the covers) and also electrical information (such as linear emitters and forms emitters and busy signals or ribbon error). Such signals are fed through the Control and Sense card back to the Control Adapter card through the Multiplexer 233a. Control and Sense also handles command information from the Control Adapter going out to the electromechanical parts of the printer. These include commands telling the head to move, at what direction and what speed; telling the forms to move, at what direction and what speed; and also telling the ribbon to run or to reset an error condition. Within Control and Sense there are two interval timers 280 and 281. Timer 280 steps and counts on a three microsecond clock speed, for example, that is, at three microsecond intervals. It can be loaded from the Control Adapter, and it can be read by the Control Adapter. This is to aid in the Control Adapter's realtime functions, such as error detection of emitters (are they too soon or too late or are they just at the right time). It also aids in scheduling functions before it has to perform another function. The second counter 281 is a slower counter. It steps and counts at a millisecond rate, for example. It is for other functions such as timing the head off of the ramp.

Signals emanating from the Control and Sense card, Figs. 35O and 35P, go to two different cards. For the Head and Forms Drive card there exist signals to tell the electronics to turn the head on, the character per inch speed to run the head, in which direction, or if it is going on to the ramp, any information as far as forms to run, whether forms should be in high speed and in which direction. As to the ribbon control card, there exist basically just two signals. One advises the ribbon to run, the other to reset an error if the ribbon card reported one. Signals coming in and terminating at the Control and Sense card, Fig. 35O come from various sources such as the Frame Hardware and include Tractor Open or Cover Open. The emitter card presents signals from the Head location emitters. From the Head Forms Drive card comes feedback information on the head drive phases advising that the head is busy, Head Busy. Forms Busy advises that forms are in movement and Forms and Head Overcurrent occurs if mechanical binding or some failure has occurred. The overcurrent status is reported back to the Control Adapter. From the Forms Amplifier card are presented three signals to forms emitters and then there is one End of Forms (EOF) emitter which advises that the printer needs more paper. From the Ribbon Control card is reported Ribbon Error and/or Ribbon Busy if the ribbon is currently running. On the Control and Sense card, the Data Bus Out contains individual bits of information that are latched up and that go out to the electronics. As an example, for a particular Address Bus Out (ABO) address on cable Q indicating Print Motor 234a the corresponding data on cable T is entered in Buffer 290 to indicate head run information, character density information, head direction, or head ramp. The Control Logic 292 recognizes the occurrence of a Control Strobe Signal, cable P and controls the Print Motor block 234a to latch the information when it is all present. The same applies to the Forms Motor block 234b which has a different ABO address. The Control Logic operates in a similar way for blocks 234b and 234c.

Information coming back from the electronics cards is grouped according to an address on the ABO lines again. The Control Adapter presents a particular address on cable Q. This gates the information from either the Emitter card or the Head Forms Drive card or the Forms Amplifier card through Multiplexer 233a whichever device is specifically selected by the address on the Address Bus Out lines. This information is transferred through the Isolation Buffer 293 to the Control Adapter Data Bus in cable U so that the Control Adapter can read the status. The Address Bus Out lines, in this case, are not gated by any special signal, but become effective as soon as they are activated.

Figure 37 shows the layout of the Read Only storage (ROS) and Random Access Memory locations in the Communications Adapter.

On the left part addresses are shown as they would apply in the machine. These are four-digit hexadecimal (Base 16) addresses. The microprocessor uses the three low order digits. The first addresses are 0000 to 0800 which would indicate a 2K or 2048-byte segment of memory. This is executable code containing the main program entry point. From 0800 to 1000, there are multiple segments of code by the same address called "overlays". Each overlay is accessed by an OUT command with a number associated with it. There are five separate overlays that can be accessed within the addresses 0800 to 1000, the first overlay being the main overlay of 80; the second one, overlay 81; the third one, 82; the fourth one, 83; and the fifth one, 84. Only one of these overlays may be accessed at a specific time until another OUT command selects another overlay.

The addresses 1000 to 1800 are basically still addresses 000 to 800, but serve as data memory versus executable memory. This is where the 2K (2048) bytes of wire image ROS are placed. This is the compressed images used for printing and is where all 16 fonts, or representative images, are stored in the compressed mode to be uncompressed later into Random Access Memory. From 1800 to 1BFF is where the Interface Random Access Memory Buffers are located, Buffer 1 being at 1800, Buffer 2 at 1900. Each buffer is 256 bytes long. No memory is located in locations 1C00 to 3000. A select byte called the X-byte, if off, will select locations 0000 to 2000, and if on, will select locations 2000 to 4000. There are data bytes and instruction bytes in the machine, with the X-byte affecting both data and instructions. With this capability, the Interface Buffer is selected with the X-byte off; the Text Buffer is selected with the X-byte on. By internal wiring, any access to any memory in locations 2000 to 3000 will access locations 0000 to 1000. This prevents having to duplicate code when the X-byte changes. Otherwise, it would be necessary to have another Read Only Storage with exactly the same code in both places. By wiring one ROS as if it were in both places, the microprocessor executes this code independently of the X-byte.

Starting at 3000, there are 3K (3072) bytes of Random Access Memory in which the wire images are built from the 2K bytes of wire image ROS located at 1000. The addresses from 3000 to 38FF are the addresses used for all wire images. In effect, the subsystem is using three digits, which would be 000 to 8FF in this wire image random access memory. All images are stored as 9 slices. By using the first of the three digits to indicate the slice, the next two digits represent the EBCDIC or Extended Binary Coded Decimal

# 0 027 899

Interchange Code value of the characters as sent over by the host or other source. For example, if the first slice of the letter "C" is required, which is an EBCDIC C3, then the subsystem looks in location 0C3 for the first slice of the image 1C3 for the second slice of the image, etc. for the letter "C".

From 3B00 to 3FFF, no memory is used. This is basically the layout of memory, both Random Access and Read Only Memory for the Communications microprocessor.

## Detailed operation of head image generator

The Head Image Generator functions to generate wire images at high speeds for the printer previously described having the slanted serrated wire arrangement. A printer of this nature typically will have anywhere from two to eight print heads, each with a plurality of print wires, such as eight in number. Reference is again made to Figure 26 which depicts generally the relationship of the Head Image Generator 220 with respect to the two microprocessors 200 and 210 as well as a Random Access Memory 217. Memory 217 in a representative system is 3K bytes in size.

The Head Image Generator 220 interface with the two microprocessors and receives all its control data for initializing and loading the necessary information in order to start the cycles to create unique wire images for the slanted print wire head configuration.

In order to grasp the nature of the Head Image Generator (HIG) function, it is important to understand the transition from the traditional concept of matrix printing to the slanted group configuration. Conventionally, the print head is moved one step at a time horizontally across the character matrix with the option of firing all wires within each vertical slice of that character's image. Therefore, in order to print the character H (Fig. 27), the head carrier sweeps along the print line and leaves 7 dots on slices 2 and 8 and 1 dot on slices 4 and 6. Other characters such as those in Fig. 23 are handled in a similar fashion.

To describe the same character with the slanted group, there is a much wider sweep across the character. Instead of having all the wires within each character slice, each wire is two characters apart, as illustrated in Fig. 28. Therefore, the printer fires only one wire at a time within any given character.

To implement this function and considering Figs. 35A—35P, but especially considering Figs. 35I—35K, the Head Image Generator goes through two storage access cycles to generate each individual dot or option. In order to keep track of the different characters on a given line, wire matrix positions and number of groups, the Head Image Generator uses a diversity of counters. The final slanted wire image data corresponding to one machine wire fire is stored in the small memory 217a and 217b, Fig. 35N, and finally addressed by Control microprocessor 210a, Fig. 35E, to later command the firing of the wires.

## HIG initialization

First, the Communications Microprocessor 200a loads the information into text buffers contained. within the 3K memory area, Figs. 35N and 36. Control Microprocessor 210a has the task of loading the Head Image Generator with two bytes of information provided on the CTM Data Bus Out cable group T, Figs. 35F, 35J and 35K. The first byte goes to register 291, Fig. 35K, and contains information as to character density, head direction, and the number of groups found in that machine. The second byte loads the Head Image Generator with the rightmost character to be printed, which always corresponds to wire 8 of the rightmost group (the Head Image Generator works from right to left). The loading of these characters is controlled by load control and load character signals in the cable group V, Figs. 35F, 35K and 35J.

A signal on the Head Image Generator Load Control Line, cable group V, Fig. 35K, also sets the Run HIG Latch 294 and in turn through And circuit 295 in Fig. 35J sets HIG Cycle Flip Flop 296 which by way of the NAND circuit 297 and line 298 resets the HIG cycle counter 271, Fig. 35I, in readiness for a complete HIG operating cycle. After these two bytes are loaded, the HIG waits for the Communications Microprocessor 200a to allow it to start the memory cycles under control of Cycle counter 271, Fig. 35I and CMA"HIG Control 276, Fig. 35M.

The operating cycles of the Head Image Generator and the cycle counter are as follows:

27

# 0 027 899

Operating cycles
HIG cycle counter

| Cycle | Action |
|---|---|
| 1 or A | Both of these pulses turn "on" Random Access Memory Reset and Select to initiate the HIG memory cycles. |
| 3 or D | Both pulses turn off Random Access Memory Reset. |
| 6 or 10 | Pulses turn off Random Access Memory Select. |
| 7 or 11 | Pulses gate valid data to buffer to generate memory addressing. |
| 8 | Pulse sets the HIG to start second memory cycle. |
| 9 | Pulse gates wire image address to bus. |
| 12 | Pulse stores the masked bit in the Hold Register and decrements wire counter by one. |
| 13 | This pulse gates Text Address to bus by setting the HIG back to Memory cycle 1 and decrements character counter by 2, for 10 CPI and 3 for 15 CPI. |
| 14 | Pulse gates hold register to buffer or branch to start (0). |
| 15 | Pulse decrements group counter by "1" and resets Hold Register. |
| 16 | Pulse loads "8" in wire counter, decrements character counter by X (depending on group spacing and character density). |
| 17 | Assuming group counter equals zero, the pulse increments wire position counter if groups are moving to the right and decrements the counter if movement is to the right. Also, resets the rest of the logic. |

Memory cycles

The Head Image Generator cycles memories 217a, 217b using an oscillator pulse, cable J, Fig. 35I, and control lines from the Communications Microprocessor 200a, Fig. 35C, and decides whether or not a particular wire is fired for a given print option. In a first cycle, it fetches the EBCDIC value of the character in which the wire is positioned. This address is created from the character number on the print line.

In the second cycle, the Head Image Generator finds the corresponding wire image slice for that character. A vertical slice now has only one possible wire. Using a masking technique, one of the eight possible wires is selected and stored in the Hold Register 282, Fig. 35K, and transferred subsequently to the small stack 272, Fig. 35K.

The masking technique involves the decode portion of the wire counter and decode block 287, Fig. 35I, which supplies outputs on cable 249 to activate one of eight AND circuits in block 250 which in turn controls entry of the data representing each of eight wires in sequence and only one at a time into the Hold Register 282. The memory access cycles repeat until all wires in all of the groups are loaded in stack 272, Fig. 35K. Some clock pulses during these cycles are used for loading, incrementing, setting or resetting the logic in Figs. 35I—35K which constitutes the Head Image Generator.

HIG counters

From Fig. 28 it can be seen that to describe any of the print wires in the print head, such as print head 2, four pieces of information are needed. Referring to Figs. 35I and 35J, the Head Image Generator needs to know which group it is working with, Head or group counter 286; which wire within the group, wire counter portion of wire counter and decode block 287, Fig. 35I; to which character that wire is pointing to on the print line, character counter 288, Fig. 35I; and finally in which slice of that character is the wire positioned, wire position counter 289, Fig. 35J.

All counters, except the wire position counter, are loaded by Control Microprocessor 210a for every machine print option. The Head (group) counter 286 is loaded with the total number of print head groups and decremented by one after the wire counter decrements, from wire 8 down to wire 1 and gets ready to start on wire 8 of the adjacent print head (group). At the same time that the wire counter is decremented, the character counter is also decremented. As illustrated in Fig. 28, the distance between the wires is two characters, so every time the Head Image Generator moves from one wire to the next wire, the character counter is decremented by two. Also from Fig. 28, the space between wire 8 of one print head (group) and wire 1 of its adjacent group is four characters, so the character counter must be decremented by four between groups. Both decrements to the character counter are dependent on character density and group spacing. These are hardware programmable by use of the Head Spacing Jumper and block 283, Fig. 35J, and output 16 of the HIG cycle counter 271 as well as output 13 which controls decrementing of two (2) or three (3) characters and all other selected combinations of group spacings for the printer, depending on how many print heads it has.

Decrementing the counters in the manner described enables the Head Image Generator in stack 272, Fig. 35K, to obtain the information from wire to wire and from group to group until all wires are optioned, masked and stored for one machine print option.

28

# 0 027 899

Wire fire mapping diagnostics

Mode switch 65, Fig. 17, is positioned in an appropriate test location to initiate the wire fire mapping diagnostic tests.

During servicing of the printer subsystem, many times it is desirable to know which print wires are firing and which ones are misfiring. A quick printout is provided for this purpose.

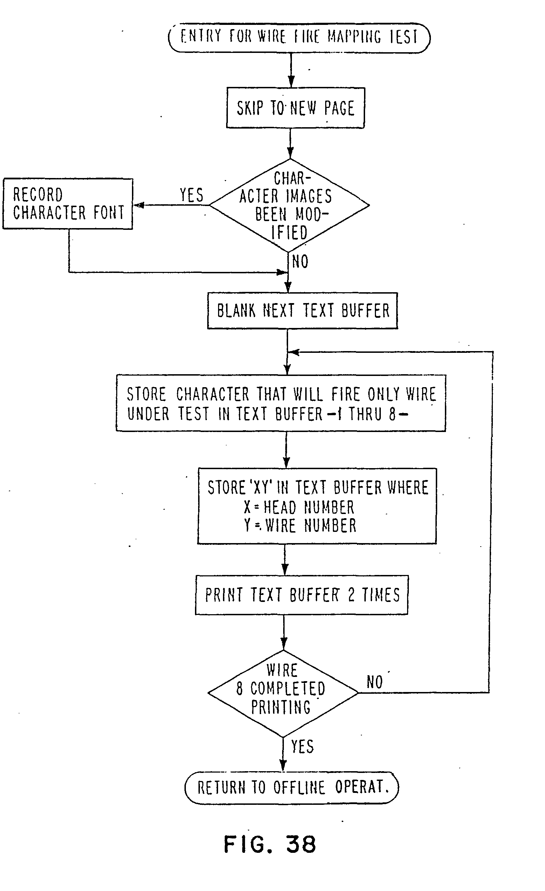

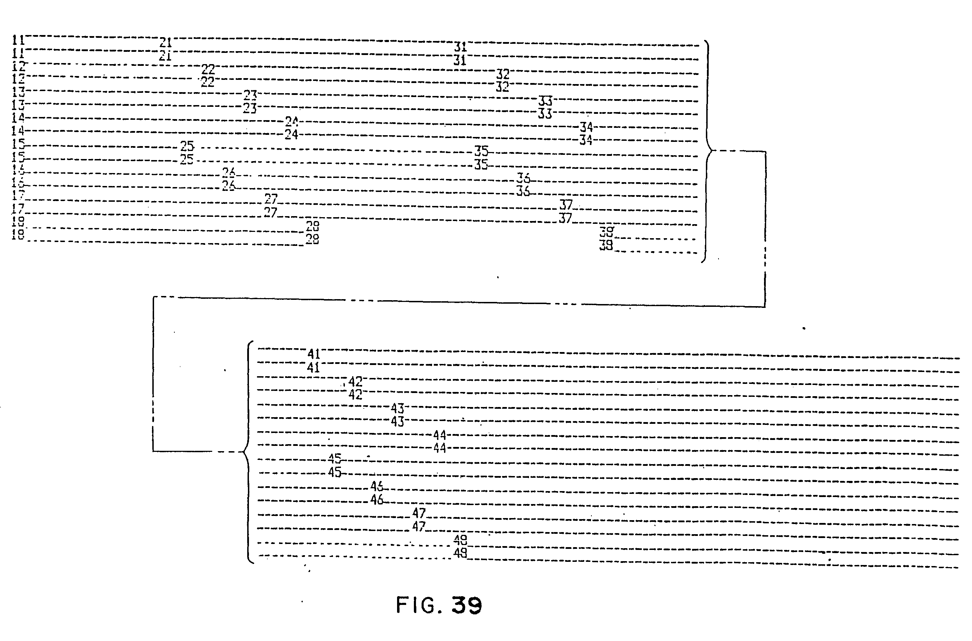

The operation is described in connection with Figs. 38 and 39. In Fig. 38, the operation starts by skipping to a new page in memory and then asks the question, "Have any of the character images been modified?". If the answer is "Yes", then the character font is reloaded; if "No", the operation continues down and blanks the next text buffer. In that text buffer a character that will fire only the wire under test is stored in that buffer; that is, one of the wires 1 through 8 for a particular print head. After the text buffer is loaded, the identifiers as to wire and head are stored on top of the buffer. As an example, an "XY" is stored where "X" indicates the head number and "Y" indicates the wire number. Thus, the start of this information indicates head and wire for printing purposes. The text buffer, as stored, is printed twice. A representative printout is shown in Fig. 39 for a printer unit having four print head groups of eight print wires each. The question is now asked, "Was wire 8 printed?". If the answer is "No", the operation goes back, increments to the next wire, stores the image for that particular wire and continues as previously. If the answer is "Yes", the operation has completed the mapping of wire fire test as printed by the printer and returns to the off-line operation.

The mapping printout that is received from the printer, Fig. 39, indicates the number of heads that the particular printer under test is presently using. Starting on the left, there is, for example, a one-one (11), followed by a two-one (21) and continuing across the page until the last head and wire (41) is indicated. If it is an eight-headed machine, the last will be an eight-one (81). Between these numbers appears a dashed line which is printed only by that wire under test. The first line, starting one-one (11), would have a short distance of dashes indicating that wire 1, head 1 is firing. If the dashes are missing that indicates that there is a problem with head 1, wire 1. The printout continues down the page from head 1, wire 1 to head 1, wire 2 to head 1, wire 3 and so on until it reaches head 1, wire 8. This goes across the page in a matrix type form that shows all wires and all heads at a glance. In the exemplary printout of the mapping of the wire fire test in Fig. 39, head 2, wire 8 is not firing. If head 2, wires 5, 6 and 7 did not fire then the following results would be noticed. The lower half of the following character images would be missing (27), (24), (28), and (31) as wires 5, 6 and 7 print these. Character images (25), (22), (26), (23), (35), (32), (36) and (33) would have portions missing to a lesser degree since wires 5, 6 and 7 help print those. The number in each line merely indicates the start of that particular wire and that particular head, and because the wires themselves are physically offset, some of the numbers are printed by one head and the rest of the numbers are printed by another head.

While a preferred embodiment of the invention has been illustrated and described, it is to be understood that there is no intention to limit the invention to the precise constructions herein disclosed and the right is reserved to all changes and modifications coming within the scope of the invention as defined in the appended claims.

Reference is made to copending applications EP—A—0027562 and EP—A—0027566 which disclose common subject matter.

Operation codes

A number of operation codes are utilized by the microprocessors. These are listed below.

ALU OP codes

—Mode Value—

REG TO REG 0__

DAR TO DAR 1__

REG TO DAR 2__

DAR TO REG 3__

MSK TO REG 4__

MSK TO DAR 5__

## 0 027 899

Function OP codes

| Add | A | _0_ |
|---|---|---|
| Add Carry | AC | _1_ |
| Move | M | _2_ |
| Clear (0) | CLR | _2_ |
| Subtract/Borrow | SB | _3_ |
| Subtract | S | _4_ |
| Compare | C | _5_ |
| Subtract Summary | SS | _6_ |
| Compare Summary | CS | _7_ |
| And | N | _8_ |
| Set Bit Off | SBF | _8_ |
| Test | T | _9_ |
| And Summary | NS | _A_ |
| Test Summary | TS | _B_ |
| Or | O | _C_ |
| Set Bit On | SBN | _C_ |
| Shift Right | SR | _D_ |
| Exclusive Or | X | _E_ |
| Shift Right Circular | SRC | _F_ |

Conditional branches

| Branch Not Carry, Branch High | BNC,BH | C_ODD |
|---|---|---|
| Branch Carry, Branch Less Than Or Equal | BC,BLE | D_EVEN |
| Branch Not Zero, Branch Not Equal, Branch True | BNZ,BNE,BT | E_ODD |
| Branch Zero, Branch Equal, Branch False | BZ,BE,BF | F_EVEN |

Unconditional branches

| Branch and Wait | BAW | C_EVEN |
|---|---|---|
| Branch | B | D_ODD |
| Branch and Link | BAL | E_EVEN |
| Branch Via Link | RTN | F001 |
| Return and Link | RAL | F201 |
| Branch Via DAR | BVD | F301 |

30

**0 027 899**

Select data address registers (DAR's) and storage (STG)

| | | |
|---|---|---|
| Select Memory Data Low | SDL | FC01 |
| Select Memory Data High | SDH | FE01 |
| Select Memory Inst Low | SIL | F481 |
| Select Memory Inst High | SIH | F489 |
| Select data Bit X Off | SXF | F441 |
| Select Data Bit X On | SXN | F445 |
| Select Main DARS | SMD | F501 |
| Select Aux DARS | SAD | F701 |

Input/output, load/store ops

| | | |
|---|---|---|
| Input From Device | IN | 68__ |
| Sense Device | SNS | 69__ |
| Output to Device | OUT | 78__ |
| Direct Input and Output | DIO | 7A__ |
| Load Registers | LDR | 89XY |
| Load Registers and DAR+1 | LDRP | 8BXY |
| Load DAR | LDD | 84XY |
| Load DAR and DAR+1 | LDDP | 86XY |
| Load Memory Indexed | LDI | 8AO__ |
| Memory to I/O Device | MIO | 8C__ |
| Memory to I/O Device and DAR+1 | MIOP | 8E__ |
| Load Link Register | LDL | 8000 E |
| Load Link Register and DAR+1 | LDLP | 8200 E |
| Load Absolute Address | LDA | 9__ |
| Store Registers | ST | A9XY |
| Store Registers and DAR+1 | STRP | ABXY |
| Store DAR | STD | A4XY |
| Store DAR and DAR+1 | STDP | A6XY |
| I/O Data to Memory | IOM | AC__ |
| I/O Data to Memory and DAR+1 | IOMP | AE__ |
| Store Memory Indexed | STI | AAO__ |
| Store Link High Order (Even Byte) | SLH | A000 |
| Store Link High Order and DAR+1 | SLHP | A200 |

Input/output, load/store ops (contd.)

| Store Link Low Order (Odd Byte) | SLL | A100 |
|---|---|---|
| Store Link Low Order and DAR+1 | SLLP | A300 |
| Store in Absolute Address | STA | B__ |

Microprocessor registers

Each of the microprocessors 200 and 210 has a number of internal registers that are used for various purposes such as work registers.

As a convenience, the register assignments are listed below.

Communications microprocessor registers

| WORK0 | EQU | R0 | Work Register |
|---|---|---|---|
| WORK1 | EQU | R1 | Work Register |
| WORK2 | EQU | R2 | Work Register |
| WORK3 | EQU | R3 | Work Register |
| WORK4 | EQU | R4 | Work Register |
| WORK5 | EQU | R5 | Work Register |
| WORK6 | EQU | R6 | Work Register |
| WORK7 | EQU | R7 | Work Register |
| WORK8 | EQU | R8 | Work Register |
| WORK9 | EQU | R9 | Work Register |
| WORKA | EQU | R10 | Buffer Indicator Register |
| WORKB | EQU | R11 | Work Register |
| WORKC | EQU | R12 | Work Register |
| POINT | EQU | R13 | Pointers Not in Load Mode |
| EBC | EQU | X'8' | Switch Set to Print EBCDIC |
| PASS2 | EQU | X'4' | Pass Count for Dummy Forms in SBI |
| DHOLD | EQU | X'2' | Hold LED Display |
| COVER | EQU | X'1' | Cover Platen Open Indicator |
| HOST1 | EQU | R13 | (Alternate (Use) Host Selected Switch |
| HARD1 | EQU | R14 | Hardware Country Selected Switch |
| LOAD1 | EQU | R15 | Random Access Memory Type of Load Switch |
| | | 0 | Nothing Loaded to Random Access Memory and IPL Mode |
| | | 1 | Multinational Loaded to Random Access Memory |
| | | 2 | Country Overlay of Multinational |
| | | 4 | Mode Switch Modification to Character Set |
| | | 8 | Modification to Character Set |

32

# 0 027 899

Control microprocessor registers (continued)

| | | | |
|---|---|---|---|
| DATA0 | EQU | D0,D0 Aux | Address Registers |
| DATA1 | EQU | D1,D1 Aux | Address Registers |
| DATA2 | EQU | D2,D2 Aux | Address Registers |
| DATA3 | EQU | D3 | Buffer Pointer DAR |
| DATA4 | EQU | D4 | Work DAR |
| DATA5 | EQU | D5 | Work DAR |
| DATA6 | EQU | D6 | Work DAR |
| DATA7 | EQU | D7 | Work DAR |
| DATA8 | EQU | D8 | Work DAR |
| DATA9 | EQU | D9 | Work DAR |
| BFNUM | EQU | D10 | Buffer Pointer Indicator |
| GECK | EQU | X'8' | In Graphic Error Mode Indicator |
| BFUSE | EQU | X'4' | Buffer Cleared Indicator |
| BFN2 | EQU | X'2' | Text Buffer 2 Indicator (0=1, 1=2) |
| RAMP | EQU | X'1' | Rest for Ramp Indicator |
| LSCON | EQU | D11 | Last Console Setting/F=In Load Mode |
| FMIND | EQU | D12 | Forms Indicator |
| PGUP | EQU | X'8' | Page Up for Display Indicator |
| D2LD | EQU | X'4' | Mask to Test for 2nd Data Load |
| CAN | EQU | X'2' | Cancel Button Held Indicator |
| TRANS | EQU | X'1' | In Transparent Mode Indicator |
| IND | EQU | D13 | Indicators |
| NEG | EQU | X'8' | Negative Skip Indicator |
| XSKIP | EQU | X'4' | More to Skip Indicator |
| PTHLD | EQU | X'2' | Print One Line and Hold |
| PTDON | EQU | X'1' | Print of One Line Done |
| PTRST | EQU | X'3' | Above Two Bits Together |
| CMCTL | EQU | D14 | Command Control Byte |
| D1LD | EQU | X'8' | Mask to Test for 1st Data Load |
| D2LD | EQU | X'4' | Mask to Test for 2nd Data Load |
| D3LD | EQU | X'C' | Mask to Test 1st and 2nd Data Load |
| RESN1 | EQU | X'1' | Mask to Test for 1st Resend |

33

# 0 027 899

Control microprocessor registers (continued)

| | | | |
|---|---|---|---|
| RESN2 | EQU | X'2' | Mask to Test for 2nd Resend |
| RESND | EQU | X'3' | Mask to Test for Either Resend |
| NOLD | EQU | X'F' | Mask to Test for No Command |
| MVADJ | EQU | D15 | Adjustment Control Byte |
| RLRD1 | EQU | X'9' | Roll and Ready Indicator Together |
| ROLLD | EQU | X'8' | Roll Display Indicator |
| CHGD | EQU | X'4' | Change to Next Sequence Indicator |
| ADJP1 | EQU | X'2' | Change Density Mask |
| RDY1 | EQU | X'1' | Software Ready Indicator |
| RAMIN | EQU | X'OFFB | End of Random Access Memory in ROS Slot |
| I00 | EQU | R0 | Input/Output Register |
| I01 | EQU | R1 | Input/Output Register |
| | | R2 | Work Register |
| | | R3 | Work Register |
| | | R4 | Work Register |
| PEMT | EQU | R5 | Indicator Previous Emitters |
| PHF | EQU | R6 | Print Head Flags |
| FRMST | EQU | X'1' | Forms Start Flag |
| DNSCH | EQU | X'2' | Density Change Flag |
| PARK | EQU | X'4' | Ramp Command Flag |
| PRCMP | EQU | X'8' | Printing is Complete |
| FLG1 | EQU | R7 | Indicator Flags |
| CD15 | EQU | X'1' | Character Density Equals 15 CPI |
| RV | EQU | X'2' | Print Head is Going Left (Reverse) |
| TXBUF | EQU | X'4' | Head Image Generator is to Use Text Buffer 2 |
| HIGST | EQU | X'8' | Head Image Generator is to Start Print Lines |
| FLG2 | EQU | R8 | Ribbon Flags |
| FBFLG | EQU | X'1' | Wire Feedback Flag |
| RBMON | EQU | X'2' | Ribbon Motor is On |
| FMSTM | EQU | X'4' | Forms Time Flag |
| TOK | EQU | X'8' | Turn Around is OK |
| WIPOS | EQU | R9 | Wire Position Counter |

34

Control microprocessor registers (continued)

| FECT | EQU | R10 | False Emitter Counter |
|------|-----|-----|------------------------|
| DIAGF | EQU | X'1' | Diagnostic Flag |
| FDRCT | EQU | X'2' | Direction of Forms Movement |
| FE2 | EQU | X'4' | False Emitter 2 |
| FE1 | EQU | X'8' | False Emitter 1 |
| PRERR | EQU | R11 | Printer Error Flags |
| | EQU | X'8' | Not Used |
| HHOME | EQU | X'4' | Head Home Flag |
| TEDGE | EQU | X'2' | Turnaround Edge Flag |
| HATNA | EQU | X'1' | Head Stopped At Turnaround Flag |
| CMDFL | EQU | R12 | Command Flags |
| PRCMD | EQU | X'1' | Print Command Flag |
| PRPND | EQU | X'2' | Print Command is Pending |
| FMCMD | EQU | X'4' | Forms Command Flag |
| TSCMD | EQU | X'8' | Test Command Flag |
| EMCT1 | EQU | R13 | Emitter Counters—Used to Determine |
| EMCT2 | EQU | R14 | Head Position by the Number |
| EMCT3 | EQU | R15 | of Emitters From Left Margin |
| MAIN/AUX | EQU | D0,D0 Aux | Address Registers |
| MAIN/AUX | EQU | D1,D1 Aux | Address Registers |
| MAIN/AUX | EQU | D2,D2 Aux | Address Registers |
| RM1 | EQU | D3 | Indicates Right Margin |
| RM2 | EQU | D4 | When the Emitter Counter |
| RM3 | EQU | D5 | Attains This Value |

End of forms indicators

| EOFI | EQU | D6 | End of Forms Indicators |
|------|-----|-----|-------------------------|
| LASTD | EQU | X'8' | Last Forms Direction, 1=Forward; 0=Reverse |
| LBUSY | EQU | X'4' | Busy History Indicator |
| FBSEQ | EQU | X'2' | Busy Sequence Flag |
| EOFER | EQU | X'1' | End of Forms Detected Indicator |
| FMCT1 | EQU | D7 | 16 Bit Forms AB Emitter Counter |
| FMCT2 | EQU | D8 | |
| FMCT3 | EQU | D9 | |
| FMCT4 | EQU | D10 | |
| SIGN | EQU | X'8' | Counter Sign Bit |

35

Emitter status register

| | | | |
|---|---|---|---|
| ESTAT | EQU | D11 | |
| LASTE | EQU | X'4' | Last End-of-Forms Emitter Value |
| LASTA | EQU | X'2' | Last Forms A Emitter Value |
| LASTB | EQU | X'1' | Last Forms B Emitter Value |
| | EQU | D12 | |
| FLECT | EQU | D13 | Forms Lost Emitter Counter |
| FMECT | EQU | D14 | Forms Missing Emitter Counter |
| PT1 | EQU | D15 | Program Timer 1/Forms Command Count |
| FLAST | EQU | X'8' | 8 or More Forms Commands Flag |

Equates—Communications microprocessor

The following equivalent expressions, that is, "equates", are used in connection with Communications microprocessor program listings. These are used by an Assembler to fill in a number for the English-type expressions.

| Name | Definition |
|---|---|
| ADRAM | Start of Data in Random Access Memory |
| CMDT1 | Data for Command Data #1 Latches |
| CMLAT | Data for Command Latches |
| D1LD | Mask to Test for 1st Data Load |
| D3LD | Mask to Test for 2nd Data Load |
| HDSP | Head Space for DA03 Routine |
| HEADS | Number of Heads Switch |
| OVLYM | Select Main Overlay Memory |
| OVLY3 | Select Overlay 3 Memory |
| PASS2 | Pass Count for Dummy Forms in SBI |
| RDYI | Software Ready Indicator |
| TBF15 | Data in Text Buffer 1 (15 CPI) |

Labels—Communications microprocessor

The following labels are used by the Communications microprocessor. These serve, for example, as pointers for addressing or for branching purposes.

| Labels | Labels |
|---|---|
| AGN | MODEX |
| BFBLK | NEWPG |
| BFILL | NLFWD |
| CONWI | OPPNL |

36

| Labels | Labels |
| --- | --- |
| FILL | RELOD |
| FRMEN | RTNMP |
| GETBF | SAVOV |
| HD2 | SDAT1 |
| HD4 | SVHDS |
| HD6 | TFRE1 |
| HD8 | TOCTL |
| LOWER | WIDTA |
| XCOMM | |

Program listings

Program listings (source statements) that relate to the flowcharts and operations described herein are presented below:

Set up bit to fire wires 1—8 which are stored in Hex locations 00—0F of wire image random access memory

| Label | Op code | Arguments | Comment |
| --- | --- | --- | --- |
| DA03 | EQU | | |
| | BAL | SAVOV | Save Pointer to Return This Overlay |
| | OUT | OVLY3 | Point to Overlay |
| | BAL | NEWPG | Set New Page |
| | T | X'8',LOADI | Reload Needed if Host Modified |
| | BF | CONWI | Go Continue Wire Setup if Not |
| | BAL | SAVOV | Save Pointer to Return This Overlay |
| | BAL | RELOD | Go Reload if Needed |
| CONWI | M | X'4',LOAD1 | Indicate Hardware Modified Random Access Memory |
| | M | X'0',WORK2 | Initial Count of Wires |
| | M | X'0',WORK3 | Initial Count of Frames |
| | M | X'0',WORK4 | Zero for Storing |
| | LDAR | ADRAM | Get Random Access Memory Address |
| | M | ADRAM,D2,4 | Set up Address in DAR's |
| | M | ADRAM,D1,3 | |
| | M | ADRAM,D0,2 | |
| | M | X'8',WORK0 | Set Bit to Print Wire |
| | M | X'0',WORK1 | Rest of Byte Blank |

Set up bit to fire wires 1—8 which are stored in Hex locations 00—0F of wire image random access memory
(continued)

| Label | Op code | Arguments | Comment |
|---|---|---|---|
| WIDTA | ST | WORK0,WORK1 | Store 2 Nibbles |
| | A | X'1',D0 | Point to Next Slice |
| | ST | WORK4,WORK4 | Store a Blank |
| | A | X'1',D0 | Point to Next Slice |
| | A | X'1',WORK3 | Count Frames |
| | C | X'7',WORK3 | Check for End of 2nd Frame |
| | BE | FRMEN | And Go Set up for Next Frame |
| | C | X'4''WORK3 | Check for End of 1st Frame |
| | BNE | WIDTA | Continue if Not |
| | STRP | WORK4,WORK4 | Store and Increment |
| | M | X'0',D0 | Point to Next Frame |
| | ST | WORK4,WORK4 | Store a Blank |
| | A | X'1',D0 | Point to Next Slice |
| | B | WIDTA | Go Do it Again |
| FRMEN | ST | WORK4,WORK4 | Point to Next Character |
| | A | X'1',D0 | Point to Next Slice |
| | STRP | WORK4,WORK4 | Store and Increment |
| | M | X'0',WORK3 | Set Count in Frame |
| | SR | WORK0,WORK0 | Move Bit Through Byte |
| | SR | WORK1,WORK1 | Move Bit Through Byte |
| | M | X'0',D0 | Point to Next Frame |
| | A | X'2',WORK2 | Point to Next Wire |
| | BNC | WIDTA | Go Set Next One |

38

Set up pointers to text buffers

| Label | Op code | Arguments | Comment |
|-------|---------|-----------|---------|
| | M | X'3',WORK8 | Set to Count Upper Wires |
| | M | X'0',DATA4 | Initial Space Values |
| | M | X'4',DATA5 | Initial Space Values |
| | M | X'1',DATA6 | Initial Space Values |
| | M | X'9',DATA7 | Initial Space Values |
| | LDA | HEADS | Find Number of Heads |
| | C | X'3',WORK0 | Check for 2 |
| | BH | HD2 | Go Get Value for these Heads |
| | C | X'5',WORK0 | Check for 4 |
| | BH | HD4 | Go Get Value for these Heads |
| | C | X'7',WORK0 | Check for 6 |
| | BH | HD6 | Go Get Value for these Heads |
| | B | HD8 | Go Get Value for 8 Heads |
| HD2 | A | X'8',DATA5 | Initial Value When Entered Here |
| | AC | X'1',DATA4 | 2nd Head X'2B' Next Head X'—' |
| | | | .. .. |
| HD4 | A | X'9',DATA5 | 13 28 |
| | AC | X'0',DATA4 | .. .. |
| | A | X'9',DATA7 | .. .. |
| | AC | X'0',DATA6 | .. .. |
| | | | .. .. |
| HD6 | A | X'6',DATA5 | 0A 1F |
| | AC | X'0',DATA4 | .. .. |
| | A | X'6',DATA7 | .. .. |
| | | | .. .. |
| HD8 | EQU | | 04 19 |
| VALU1 | M | X'0',DATA8 | Initial Data to X'00' and X'01' |
| | M | X'1',DATA9 | |
| | M | DATA4,WORK0 | Set Up to Save Displacement Value |
| | M | DATA5,WORK1 | |
| | STA | HDSP | |

# 0 027 899

Fill random access memory buffer (198) with image for one wire

| Label | Op code | Arguments | Comment |
| --- | --- | --- | --- |
| BFILL | EQU | | |
| | BAL | SAVOV | Save Pointer to Return this Overlay |
| | BAL | BFBLK | Go Blank and Get Buffer Address |
| | M | TBF15,D1,3 | Point to Data in Test Buffer (15 CPI) |
| | M | TBF15,D2,4 | Point to Data in Test Buffer (15 CPI) |
| FILL | M | X'0',WORK2 | |
| | M | DATA8,WORK0 | |
| | M | DATA9,WORK1 | |
| | STRP | WORK2,WORK0 | Store Alternate Images |
| | STRP | WORK2,WORK1 | For Each Wire |
| | C | X'D',D1 | Count for 63 (Low Order) |
| | CS | X'B',D2 | Count for 63 (High Order) |
| | BNE | FILL | |

Fill in head and wire number for start of each head

| Label | Op code | Arguments | Comment |
| --- | --- | --- | --- |
| | BAL | SAVOV | Save Pointer to Return this Overlay |
| | BAL | GETBF | Point to Start of Buffer |
| | M | TBF15,D1,3 | Point to Data in Test Buffer (15 CPI) |
| | M | TBF15,D2,4 | Point to Data in Test Buffer (15 CPI) |
| | M | X'F',WORK4 | Set Start of EBCDIC Number |
| | M | X'1',WORK5 | Set Number 1 for Start of Head |
| | STRP | WORK4,WORK5 | Store in First Column |
| | M | DATA8,WORK6 | Get Wire Number |
| | SR | WORK6,WORK6 | |
| | A | X'1',WORK6 | |
| | STRP | WORK4,WORK6 | Store it in Buffer |
| | A | X'2',DATA8 | Point to Next Image |
| | A | X'2',DATA9 | Point to Next Image |
| | A | X'1',WORK5 | Set for Second Head |
| | LDA | HEADS | Get Number of Heads |

40

# 0 027 899

Fill in head and wire number for start of each head (continued)

| Label | Op code | Arguments | Comment |
|---|---|---|---|
| | M | WORK0,WORK7 | Set for Counter |
| | S | X'1',WORK7 | Decrement |
| | LDA | HDSP | |
| | A | WORK1,D2 | Add Start of Next Head |
| | AC | WORK0,D1 | |
| AGN | STRP | WORK4,WORK5 | Store Next Head Number Start |
| | STRP | WORK4,WORK6 | Store this Wire Number |
| | A | X'1',WORK5 | Set for Next Head |
| | A | DATA7,D2 | Increment to Next Head |
| | AC | DATA6,D1 | |
| | S | X'1',WORK7 | Count Down |
| | BNZ | AGN | Do it Again if More Heads |
| | SBF | PASS2,POINT | Prepare Second Time Through Switch |
| TFRE1 | T | D3LD,CMCTL | Test for Command in Control Atom |
| | BF | SDAT1 | OK Now Load New Command |
| | BAL | SAVOV | Save Pointer to Return this Overlay |
| | OUT | OVLY3 | Point to Proper Overlay |
| | BAL | ATOM2 | Allow Load to Control Atom if Ready |
| | BAL | SAVOV | Save Pointer to Return this Overlay |
| | OUT | OVLYM | Point to Main Overlay Memory |
| | BAL | OPPNL | Go Check Operator Panel |
| | B | TFRE1 | Go Test for OK to Go Again |
| SDAT1 | EQU | | |
| | BAL | SAVOV | Save Pointer to Return this Overlay |
| | OUT | OVLYM | Point to Main Overlay Memory |
| | BAL | PTPRT | Go Check for Paper in Print Position |
| | T | D3LD,CMCTL | Test for Command to Transfer |
| | BT | TFRE1 | Go Wait if Stack Full |
| | T | RDYI,MVADJ | Test for Stop Button Pressed |
| | BF | MODEX | Return to Wait Loop if Stop |
| | M | X'F',WORK0 | Set to Print 198 (198+42=240) |

41

Fill in head and wire number for start of each head (continued)

| Label | Op code | Arguments | Comment |
|---|---|---|---|
| | M | X'0',WORK1 | |
| | STA | CMDT1 | And Set for Data Latches |
| | CLR | WORK0 | Prepare Print Command |
| | M | X'0',WORK0 | Set REG/DAR to Zero |
| | M | BFNUM,WORK1 | Set Buffer Indicator |
| | SBF | X'D',WORK1 | Remove All but Buffer Bit |
| | SBN | X'9',WORK1 | Set Print and 15 CPI Indicators |
| | STA | CMLAT | And Save the Status Latches |
| | SBN | D1LD,CMCTL | Indicate Data Ready to Transfer |
| | M | X'0',WORK0 | Set Up for Line Feed |
| | M | X'1',WORK1 | |
| | BAL | SAVOV | Save Pointer to Return this Overlay |
| | OUT | OVLY3 | Point to Overlay |
| | BAL | NLFWD | Go to Forms |
| | X | PASS2,POINT | Count Number of Lines Printed |
| | T | PASS2,POINT | Test for Second Pass |
| | BT | TFRE1 | If First Go Print Again |

Prepare to set up next buffer

| Label | Op code | Arguments | Comment |
|---|---|---|---|
| | C | X'0',DATA8 | Is Test Set Up Complete |
| | BE | RTNMP | Return to Mode Control or Routine 1 |
| | LDA | HDSP | Get the Head Space Value |
| | C | X'8',DATA8 | Check Which Wire We Are On |
| | BE | LOWER | Are We Starting Lower 4 Wires |
| | A | X'6',WORK1 | Set Head 2 to Start Position |
| | AC | X'0',WORK0 | |
| SVHDS | STA | HDSP | Save New Value |
| | B | BFILL | Go Set Next Line |
| LOWER | S | X'F',WORK1 | Set Head 2 to Start Position |
| | SB | X'0',WORK0 | |
| | B | SVHDS | Go Set Next Line |

42

## 0 027 899

**Claims**

1. Printer subsystem interconnected with a host system for receipt of command signals and data signals from said host system and transmission of status signals back to said host system, said printer subsystem including:

a printer unit which comprises a forms feed assembly, a ribbon drive assembly and a print assembly, said assemblies being operable to print characters on forms in said printer unit in response to data signals as well as perform other operations in connection with printing,

a communications adapter (202) incorporating a communications microprocessor (200) and being operable to translate command signals provided by said host system into control signals being able to be used by the subsystem and representative of printer actions required, such as print, carriage returns, line feeds, and the like, to process data signals provided by said host system in a form that can be used by the subsystem and to receive status signals,

interface means (201) interconnecting said communications adapter (202) with said host system (1) for receipt of said command and data signals from said host system and for transmission of status signals from said communications adapter back to said host system representative of various conditions in said printer subsystem,

a control adapter (211) incorporating a control microprocessor (210), and operable to receive status signals from various sensors in said printer unit, such as ribbon reverse/jam, forms jam, head position, linear encoder, forms position encoder, and the like, to receive data signals representing characters to be printed and to generate print firing signals and various control signals to control said forms feed assembly, said ribbon drive assembly and said print assembly in said printer unit;

control and sense means (212, 213) interconnecting said printer unit (235, 236, 35) with said control adapter (211) for transfer of command and image signals from said control adapter to said printer unit and for transfer of status signals from said printer unit to said control adapter; and

storage means connected to said communications adapter (202) and to said control adapter (211), this printer subsystem being characterized in that:

said storage means includes,

communications storage means (215) accessible by said communications adapter for storing data signal representing characters to be printed and further accessible by an image generator means (220) for conversion of said data signals to image signals for use by said printer unit, and

register means (225, 226) interconnected between said communications adapter (202) and said control adapter (211), said register means being operable to store command, data, image and status signals pertaining to operation of said printer subsystem and for direct, bidirectional transfer of control and data signals between said communications adapter and said control adapter,

and in that image generator means (202) is interconnected with said communications adapter (202) and said control adapter (211) and is responsive to control signals received from said control adapter to produce control signals and character image signals for use by said printer unit during printing operations, said image generator means being operable to convert data signals representing characters to be printed from said communications storage means to image signals in a format required to operate said printer unit, said image signals being provided to said printer unit via said control adapter,

whereby both said adapters are able to operate concurrently to accomplish the required functions and each of them is able to communicate with the other.

2. Printer subsystem according to claim 1 characterized in that it comprises:

means interconnecting said image generator means (220) with said communications microprocessor (200) said control microprocessor (210) and said communications storage means; wherein said host system (1) provides data signals to said communications microprocessor representative of characters to be printed, which data signals are stored in said communications storage means in a first format (in 217), and wherein said printer unit utilizes data signals in a second format that differs from said first format, and wherein

said image generator means (220) being operable to convert said data signals in said first format to data signals in the second format (in 212, 213) for use by said control microprocessor and by said printer unit.

3. Printer subsystem according to claim 1 or 2 characterized in that:

said communications storage means (215) includes space for accommodating at least two text buffers each of which is capable of accommodating an entire line of data to be printed, and

said communications adapter (202) enters data into said text buffers on an alternate line by line basis in such a way that a first text buffer can be filled up with a print line data from said communications microprocessor (200) and the image generator means (220) start pulling out characters from that first text buffer while said communications microprocessor stores characters in another text buffer, this operation alternating back and forth.

4. Printer subsystem according to claim 3, characterized in that said control adapter (211) is operable to access text buffer information in said communications storage means (215) in response to control signals from said communications adapter.

43

5. Printer subsystem according to any one of the preceding claims characterized in that it further comprises:

operator facilities (26), said facilities including entry means for entering control information indicative of operation of said printer unit on-line or off-line, and the like and display means for displaying condition information to an operator; and

means incorporated in said communications adapter (202) for accessing said operator facilities to determine entry of control information by an operator and further operable to provide signals for operating said display means (59) to indicate status of said printer subsystem.

6. Printer subsystem according to any one of the preceding claims characterized in that it further comprises:

emitter means (236) incorporated in said printer unit for indicating positional conditions of said forms feed assembly (235—20), said ribbon drive assembly (235—20), and said print assembly (235—30); and

means incorporated in said control adapter (211) for receiving emitter signals from said emitter means and for monitoring the position of said assemblies in said printer unit.

7. Printer subsystem according to any one of the preceding claims characterized in that it comprises wire matrix means (213, 35) incorporated in said print assembly for printing characters on a form in said printer unit by means of dot images.

8. Printer subsystem according to claim 7 characterized in that it further comprises print wires mounted in a slanted pattern (150) with respect to a print line or to a slanted serrated pattern (152).

9. Printer subsystem according to claim 7 or 8 characterized in that it incorporates a plurality of print heads, each of which comprises a plurality of print wires.

10. Printer subsystem according to claim 7, 8 or 9 characterized it further comprises:

selection means (65) to select a plurality of diagnostic test operations for said printer unit, including a wire fire mapping test operation,

storage means (217) for storing print wire images for test purposes; and

wire fire mapping means (202, 211, 220, 213) operable responsive to said selection means when the wire fire mapping test operation is selected for entering test data representative of a predetermined test pattern in said storage means and for supplying actuating signals to said print wire actuators (35) in accordance with said predetermined test pattern to display on a record medium the actual firing and misfiring condition of said print wire actuators and associated print wires.

11. Printer subsystem according to the preceding claims characterized in that it further comprises:

head/wire designation means (286, 287) incorporated in said wire fire mapping means for entering data in said storage means (217) that will actuate said print wire actuators (35) and associated print wires (33) to provide identifying indicia on said record medium indicative of the print heads and print wires in order that wire firings and misfirings may be readily diagnosed.

12. Printer subsystem according to claim 11 characterized in that said wire fire mapping means (202, 211, 220, 213) are operable to activate said print wire actuators (35) and print wires (33) in accordance with a sequential pattern to display the wire firings and misfirings in a matrix format arranged sequentially in accordance with the numbering of print heads and print wires utilized in the printer.

13. Printer subsystem according to claim 12 characterized in that the control means incorporated in said wire fire mapping means (202, 211, 220, 213) enter data in said storage means (217) pertaining to said print wires (33) on a sequential basis with data concerning a particular print wire being printed prior to the entry of data for the next succeeding print wire, said data including information to be printed, such as head number and wire number, said wire fire mapping means controlling the printing of the wire fire data in said storage means at least twice in order to enable quicker analysis of the wire fire mapping printout.

14. The printer subsystem according to claim 7 characterized in that said printer unit has a forms motor, a print motor and at least one ribbon motor, said forms and print motors having respectively associated emitter assemblies and wherein said control and sense means interfaces with said control adapter and said printer unit to control said forms motor, said print motor, and said ribbon motor and is further operable to sense the status of printer elements such as the print emitters, forms emitters, and the like.

**Revendications**

1. Sous-système d'imprimante interconnecté avec un système hôte pour la réception de signaux de commande et de signaux de données dudit système hôte et pour la transmission en retour de signaux d'état audit système hôte, ledit sous-système d'imprimante comprenant

une unité imprimante qui comprend un ensemble d'alimentation en papier, un ensemble d'entraînement du ruban et un ensemble d'impression, lesdits ensembles pouvant être actionnés pour imprimer des caractères sur du papier contenu dans ladite unité imprimante en réponse à des signaux de données ainsi que pour effectuer d'autres opérations en liaison avec l'impression,

un adaptateur de transmission (202) qui comporte un microprocesseur de transmission (200) qui peut fonctionner de manière à traduire des signaux de commande fournis par ledit système hôte en signaux d'exécution qui peuvent être utilisés par le sous-système et sont représentatifs d'actions que l'imprimante doit exécuter, telles qu'impression, retour du chariot, avance de ligne, et analogues, à traiter les signaux de

**0 027 899**

données fournis par ledit système hôte sous une forme qui peut être utilisée par le sous-système et à recevoir des signaux d'état,

des moyens d'interface (201) interconnectant ledit adaptateur de transmission (202) et ledit système hôte (1) pour la réception desdits signaux de commande et de données dudit système hôte et pour la transmission de signaux d'état provenant de l'adaptateur de transmission en retour audit système hôte, ces signaux d'état étant représentatifs de diverses conditions qui existent dans ledit sous-système d'imprimante,

un adaptateur de commande (211) qui comporte un microprocesseur de commande (210) et peut fonctionner de manière à recevoir divers signaux d'état en provenance de divers détecteurs contenus dans l'unité imprimante, tels que inversion/coincement du ruban, coincement du papier, position des têtes, signal du codeur linéaire, signal du codeur de position du papier, et analogues, à recevoir des signaux de données représentant des caractères à imprimer et à engendrer des signaux de déclenchement d'impression et divers signaux d'exécution pour commander ledit ensemble d'alimentation en papier, ledit ensemble d'entraînement du ruban et ledit ensemble d'impression dans ladite unité imprimante,

des moyens de commande et de détection (212, 213) interconnectant ladite unité imprimante (235, 236, 35) et ledit adaptateur du commande (211) pour le transfert de signaux de commande et d'image dudit adaptateur de commande à ladite unité imprimante et pour le transfert de signaux d'état de ladite unité imprimante audit adaptateur de commande; et

des moyens de mémoire connectés audit adaptateur de transmission (202) et audit adaptateur de commande (211),

ce sous-système d'imprimante étant caractérisé en ce que:

lesdits moyens de mémoire comprennent

des moyens (215) de mémoire des communications accessibles audit adaptateur de transmission pour la mise en mémoire de signaux de données représentant des caractères à imprimer et accessibles également à des moyens (220) générateurs d'image pour la conversion desdits signaux de données en signaux d'image en vue de leur utilisation par ladite unité imprimante, et

des moyens (225, 226) formant registres interconnectés entre ledit adaptateur de transmission (202) et ledit adaptateur de commande (211), lesdits moyens formant registres pouvant fonctionner pour mettre en mémoire des signaux de commande, de données, d'image et d'état relatifs au fonctionnement dudit sous-système d'imprimante et pour assurer le transfert direct bidirectionnel de signaux d'exécution et de données entre ledit adaptateur de transmission et ledit adaptateur de commande,

et en ce que lesdits moyens (202) générateurs d'image sont interconnectés avec ledit adaptateur de transmission (202) et avec ledit adaptateur de commande (211) et fonctionnent en réponse aux signaux d'exécution reçue dudit adaptateur de commande pour produire des signaux d'exécution et des signaux d'image de caractère en vue de leur utilisation par ladite unité imprimante pendant les opérations d'impression, lesdits moyens générateurs d'image pouvant fonctionner pour convertir les signaux de données représentant des caractères à imprimer provenant desdits moyens de mémoire des communications en des signaux d'image en un format requis pour faire fonctionner ladite unité imprimante, lesdits signaux d'image étant fournis à ladite unité imprimante par l'intermédiaire dudit adaptateur de commande,

de telle sorte que les deux adaptateurs sont capables de fonctionner simultanément pour remplir les fonctions requises et que chacun d'eux capable de communiquer avec l'autre.

2. Sous-système d'imprimante selon la revendication 1, caractérisé en ce qu'il comprend:

des moyens interconnectant lesdits moyens (220) générateurs d'image avec ledit microprocesseur de transmission (200), ledit microprocesseur de commande (210) et lesdits moyens de mémoire des communications; dans lequel ledit système hôte (1) fournit audit microprocesseur de transmission des signaux de données représentatifs de caractères à imprimer, signaux de données qui sont mis en mémoire dans lesdits moyens de mémoire des communications sous un premier format (dans 217), et dans lequel ladite unité imprimante utilise des signaux de données dans un second format qui diffère dudit premier format, et dans lequel

lesdits moyens (220) générateurs d'image peuvent fonctionner pour convertir lesdits signaux de données dans ledit premier format en signaux de données dans ledit second format (dans 212, 213) en vue de leur utilisation par ledit microprocesseur de commande et par ladite unité imprimante.

3. Sous-système d'imprimante selon la revendication 1 ou 2, caractèrisé en ce que:

lesdits moyens (215) de mémoire des communications comprennent un espace pour contenir au moins deux mémoires-tampons de texte dont chacune est capable de recevoir une ligne complète de données à imprimer, et

ledit adaptateur de transmission (202) entre des données dans lesdites mémoires-tampons de texte sur une base alternée ligne par ligne d'une manière telle qu'une première mémoire-tampon de texte peut être remplie des données d'une ligne d'impression provenant dudit microprocesseur de transmission (200) et les moyens (220) générateurs d'image commencent à extraire des caractères de cette première mémoire-tampon de texte pendant que ledit microprocesseur de transmission met en mémoire des caractères dans une autre mémoire-tampon de texte, cette opération alternant en va-et-vient.

4. Sous-système d'imprimante selon la revendication 3, caractérisé en ce que ledit adaptateur de commande (211) peut fonctionner pour accéder aux informations de mémoire-tampon de texte contenues

45

dans lesdits moyens (215) de mémoire des communications en réponse à des signaux d'exécution provenant dudit adaptateur de transmission.

5. Sous-système d'imprimante selon l'une quelconque des revendications précédentes caractérisé en ce qu'il comporte, en outre:

des moyens (26) à la disposition de l'opérateur, lesdits moyens comprenant des moyens d'entrée pour entrer des informations de commande indicatives d'opérations de ladite unité imprimante en ligne ou hors ligne et analogues et des moyens d'affichage pour afficher des informations de condition destinées à l'opérateur; et

des moyens incorporés audit adaptateur de transmission (202) pour accéder auxdits moyens à la disposition de l'opérateur afin de déterminer l'entrée d'informations de commande par un opérateur et pouvant, en outre, fonctionner pour fournir des signaux servant à actionner lesdits moyens d'affichage (59) afin d'indiquer l'état dudit sous-système d'imprimante.

6. Sous-système d'imprimante selon l'une quelconque des revendications précédentes, caractérisé en ce qu'il comprend, en outre:

des moyens émetteurs (236) incorporés à ladite unité imprimante pour indiquer des conditions de position dudit ensemble (235—20) d'alimentation en papier, dudit ensemble (235—20) d'entraînement du ruban et dudit ensemble d'impression (235—20); et

des moyens incorporés audit adaptateur de commande (211) pour recevoir des signaux d'émetteur provenant desdits moyens émetteurs et pour contrôler la position desdits ensembles dans ladite unité imprimante.

7. Sous-système d'imprimante selon l'une quelconque des revendications précédentes, caractérisé en ce qu'il comprend des moyens (213, 35) formant matrice de fils incorporés audit ensemble d'impression pour imprimer des caractères sur du papier contenu dans ladite unité imprimante au moyen d'images de points.

8. Sous-système d'imprimante selon la revendication 7, caractérisé en ce qu'il comprend, en outre, des fils d'impression montés dans une configuration inclinée (150) par rapport à une ligne d'impression ou dans une configuration inclinée en dents de scie (152).

9. Sous-système d'imprimante selon la revendication 7 ou 8, caractérisé en ce qu'il comporte plusieurs têtes d'impression dont chacune comprend plusieurs fils d'impression.

10. Sous-système d'imprimante selon la revendication 7, 8 ou 9, caractérisé en ce qu'il comprend, en outre:

des moyens de sélection (65) pour choisir plusieurs opérations de test de diagnostic pour ladite unité imprimante parmi lesquelles une opération de test de mappage des déclenchements des fils,

des moyens de mémoire (217) pour mettre en mémoire des images de fils d'impression à des fins de test; et

des moyens (202, 211, 220, 213) de mappage des déclenchements des fils qui peuvent fonctionner en réponse auxdits moyens de sélection lorsque l'opération de test de mappage des déclenchements des fils est choisie pour entrer des données de test représentatives d'une configuration de test prédéterminée dans lesdits moyens de mémoire et pour fournir des signaux d'actionnement auxdits actionneurs (35) des fils d'impression conformément à ladite configuration de test prédéterminée afin d'afficher sur un support d'enregistrement la condition effective des déclenchements et des non déclenchements desdits actionneurs de fil d'impression et des fils d'impression associés.

11. Sous-système d'imprimante selon les revendications précédentes, caractérisé en ce qu'il comprend, en outre:

des moyens (286, 287) de désignation de tête/fil incorporés auxdits moyens de mappage des déclenchements de fils pour entrer dans lesdits moyens de mémoire (217) des données qui actionnent lesdits actionneurs (35) de fil d'impression et les fils d'impression associés (33) de manière à produire sur ledit support d'enregistrement des signes d'identification indicatifs des têtes d'impression et des fils d'impression afin que les déclenchements et les non déclenchements des fils puissent être facilement diagnostiqués.

12. Sous-système d'imprimante selon la revendication 11, caractérisé en ce que lesdits moyens (202, 211, 220, 213) de mappage des déclenchements des fils peuvent fonctionner pour actionner lesdits actionneurs (35) de fil d'impression et les fils d'impression (33) en conformité avec une configuration séquentielle pour afficher les déclenchements et les non déclenchements des fils dans un format matriciel agencé séquentiellement conformément à la numérotation des têtes d'impression et des fils d'impression utilisée dans l'imprimante.

13. Sous-système d'imprimante selon la revendication 12, caractérisé en ce que les moyens de commande incorporés auxdits moyens (202, 211, 220, 213) de mappage des déclenchements des fils entrent dans lesdits moyens de mémoire (217) des données relatives auxdits fils d'impression (33) sur une base séquentielle, les données concernant un fil d'impression particulier étant imprimées avant l'entrée des données pour le fil d'impression immédiatement suivant, lesdites données comprenant des informations à imprimer, telles que le numéro de la tête et le numéro du fil, lesdits moyens de mappage des déclenchements des fils commandant l'impression des données de déclenchement des fils contenues dans lesdits moyens de mémoire au moins deux fois afin de permettre une analyse plus rapide de la sortie imprimée du mappage des déclenchements des fils.

**0 027 899**

14. Sous-système d'imprimante selon la revendication 7, caractérisé en ce que ladite unité imprimante comprend un moteur d'entraînement du papier, un moteur d'impression et au moins un moteur d'entraînement du ruban, des ensembles émetteurs étant respectivement associés auxdits moteurs d'entraînement du papier et d'impression et dans lequel lesdits moyens de commande et de détection établissent une jonction avec ledit adaptateur de commande et ladite unité imprimante pour commander ledit moteur d'entraînement du papier, ledit moteur d'impression et ledit moteur d'entraînement du ruban et peuvent, en outre, fonctionner pour détecter l'état d'éléments de l'imprimante, tels que les émetteurs d'impression, les émetteurs du papier et analogues.

**Patentansprüche**

1. Drucker-Teilsystem, das mit einer Zentraleinheit zur Annahme von Befehl- und Datensignalen aus der Zentraleinheit und zur Uebertragung von den Zustandssignalen zurueck zur Zentraleinheit verbunden ist, wobei dieses Drucker-Teilsystem folgendes einschliesst:

— eine Druckvorrichtung mit einem Vorlagenvorschub-Mechanismus, einem Farbbandantrieb-Mechanismus und einem Abruck-Mechanismus, wobei diese Mechanismen zum Abdruck der Zeichen auf den Vorlagen in der Druckvorrichtung im Ansprechen auf Datensignale und auch zur Durchfuehrung von anderen mit dem Abdruck zusammenhaengenden Vorgaengen betreibbar sind;

— eine Datenuebertragungsanschluss-Einheit (202), die einen Datenuebertragungs- Mikroprozessor (200) einschliesst, und zur Umsetzung der aus der Zentraleinheit stammenden Befehl-Signale in Steuersignalen, die von dem Drucker-Teilsystem verwendbar sind und notwendigen Druckvorgaengen wie Abdruck, Wagenruecklauf, Zeilenverschub und dergleichen darstellen, zur Verarbeitung der aus der Zentraleinheit stammenden Datansignale in einer von dem Teilsystem auswertbaren Form und zur Annahme der Zustandssignale betriebbar ist;

— Schnittstellen (201), die die Datenuebertragungsanschluss-Einheit (202) mit der Zentraleinheit (1) zur Annahme von den Befehl- und Datensignalen aus der Zentraleinheit und zur Ubertragung von den den einzelnen Betriebsbedingungen in dem Drucker-Teilsystem entsprechenden Zustandssignalen aus der Datenuebertragungsanschluss-Einheit zurueck zur Zentraleinheit verbinden;

— ein Steuerwerk (211), das einen Steuermikroprozessor (210) einschliesst, und zur Annahme von den aus den mehreren Abfuehlgliedern stammenden Zustandssignalen bezueglich Betriebsbedingungen in der Druckvorrichtung wie Farbband-Umschaltung/Verklemmung, Vorlagenverstopfung, Kopflage, linearer Codeumsetzer, Vorlagenpositionierung- Codeumsetzer und dergleichen, zur Annahme von den den abzudruckenden Zeichen entsprechenden Datensignalen und zur Erzeugung von den Abdruck ausloesenden Signalen und einzelnen Steuersignalen fuer die Steuerung des Vorlagenverschubs, des Farbbandantriebs und des Abdrucks in der Druckvorrichtung betreibbar ist;

— Steuer- und Abfuehlmittel (212, 213), die die Druckvorrichtung (235, 236, 35) mit dem Steuerwirk (211) zur Uebertragung von Steuer- und Bildsignalen aus dem Steuerwerk zur Druckvorrichtung und zur Uebertragung von Zustandssignalen aus der Druckvorrichtung zum Steuerwerk verbinden; und

— einen Speicher, der mit der Datenuebertragungsanschluss-Einheit (202) und dem Steuerwerk (211) verbunden ist,

— wobei dieses Drucker-Teilsystem dadurch gekennzeichnet ist,

— dass der Speicher folgendes einschliesst: Datenuebertragungs-Speicher (215), die von der Datenuebertragungsanschluss-Einheit zur Speicherung von den den abzudruckenden Zeichen entsprechenden Datensiganlen und auch von einem Bildgenerator (220) zur Umsetzung von diesen Datensignalen in von der Druckvorrichtung auswertbare Bildsignale selektiert werden koennen;

— Register (225, 226), die zwischen der Datenuebertragungsanschluss-Einheit (202) und dem Steuerwerk (211) verbunden sind, wobei sie zur Speicherung von dem Betrieb des Drucker-Teilsystems entsprechenden Befehl-, Daten-, Bild- und Zustandssignalen, und zur unmittelbaren Zweirichtung-Uebertragung von Steuer- und Datensignalen zwischen der Datenuebertragungsanschluss-Einheit und dem Steuerwerk betreibbar sind;

— und dass der Bildgenerator (202) mit der Datenuebertragungsanschluss-Einheit (202) und dem Steuerwerk (211) verbunden ist und auf aus dem Steuerwerk stammende Steuersignale zur Erzeugung von Steuersignalen und von der Druckvorrichtung waehrend der Abdruckvorgaenge verwendbaren Zeichenbild-Signalen anspricht, wobei dieser Bildgenerator zur Umsetzung von den abzudruckenden. Zeichen ensprechenden Datensignalen aus den Datenuebertragungs-Speichern in einem zum Betreiben der Druckvorrichtung geeigneten Format betreibbar ist, indem die Bildsignale ueber des Steuerwerk der Druckvorrichtung zugefuehrt sind;

— wobei beide Datenuebertragungsanschluss-Einheit und Steuerwerk zur Durchfuehrung der angeforderten Funktionen zusammen betreibbar sind, und miteinander mitteilen koennen.

2. Drucker-Teilsubsystem nach Anspruch 1, dadurch gekennzeichnet, dass es weiterhin einschliesst:

— Mittel zur Verbindung des Bildgenerators (220) mit dem Datenuebertragungs-Mikroprozessor (200), dem Steuermikroprozessor (210) und den Datenuebertragungs-Speichern, worin die Zentraleinheit (1) dem Datenuebertragungs-Mikroprozessor Datensignale zufuehrt, die den abzudruckenden Zeichen entsprechen, die in einem ersten Format (in 217) in den Datenuebertragungs-Speichern gespeichert sind, und worin die Druckvorrichtung Daten-signale in einem zweiten von dem ersten verschiedenen Format verwendet; und

— worin der Bildgenerator (220) zur Umsetzung von den Datensignalen mit dem ersten Format in Datensignale mit dem zweiten Format (in 212, 213) betreibbar ist, so dass sie von dem Steuermikroprozessor und von der Druckvorrichtung verwendbar sind.

3. Drucker-Teilsubsystem nach Anspruch 1 oder 2, dadurch gekennzeichnet, dass

— in den Datenuebertragungs-Speichern (215) Raum fuer die Unterbringung von mindestens zwei Textpuffern vorgesehen ist, wobei jeder Puffer eine ganze Zeile von abzudruckenden Daten enthalten kann; und

— die Datenuebertragungs-Einheit (202) den zwei Textpuffern abwechselnd in einer Zeilenbasis Daten derart zufuehrt, dass der erste Textpuffer mit einer Datenzeile aus der Datenuebertragungs-Einheit (200) gefuellt ist, und der Bildgenerator (220) dann die Zeichen aus dem ersten Textpuffer auszulesen beginnt, waehrend die Datenuebertragungs-Einheit die Zeichen in einem weiteren Textpuffer einspeichert, wobei diese Vorgaengen abwechselnd vorkommen.

4. Drucker-Teilsubsystem nach Anspruch 2, dadurch gekennzeichnet, dass das Steuerwerk (211) so betreibbar ist, dass es im Ansprechen auf aus der Datenuebertragungs-Einheit stammende Steuersignale Zugang zu der Textpuffer-Information in den Datenuebertragungs-Speichern (215) hat.

5. Drucker-Teilsubsystem nach einem der vorhergehenden Ansprueche, dadurch gekennzeichnet, dass es weiterhin einschliesst:

— Bedienungsvorrichtungen (26), wobei sie Eingabemittel fuer die Eingabe von Steuerinformation, die ueber den On-Line oder Off-Line Betrieb der Druckvorrichtung und dergleichen Aufschluss geben, und Anzeigemittel zur Anzeige der Zustandsinformation fuer einen Bediener einschliessen;

— in der Datenuebertragungs-Einheit (202) eingebaute Mittel, die den Zugang zu die Bedienungsvorrichtungen geben, um die Eingabe von Steuerinformation durch einen Bediener zu bestimmen, und weiterhin zur Lieferung von fuer das Inbetriebsetzen der Anzeigemittel (59) aufschlussgebenden Signalen betreibbar sind, wobei die Anzeigemittel den Zustand des Drucker-Teilsystems geben.

6. Drucker-Teilsubsystem nach einem der vorhergehenden Ansprueche, dadurch gekennzeichnet, dass es weiterhin einschliesst:

— in der Druckvorrichtung eingebaute Emitter (236), die Aufschluss ueber die Lage-Bedingungen des Vorlagenvorschub-Mechanismus (235—20), des Farbbandantrieb-Mechanismus (235—20) und des Abdruck-Mechanismus (235—30) geben; und

— in dem Steuerwerk (211) eingebaute Mittel zur Annahme von den aus den Emittern stammenden Signalen und zur Ueberwachung der Lage der in der Druckvorrichtung eingeschlossenen Mechanismen.

7. Drucker-Teilsystem nach einem der vorhergehenden Anspruche, dadurch gekennzeichnet, dass es eine in dem Abdruck-Mechanismus eingebaute Drahtmatrix (213, 35) zum Abdruck der Zeichen mittels Funktenmuster einschliesst.

8. Drucker-Teilsystem nach Anspruch 7, dadurch gekennzeichnet, dass es weiterhin-Draehte aufweist, die in einem Schraegmuster (150) mit Bezug auf einer Druckzeile oder einem schraegen Zackenmuster (152) angeordnet sind.

9. Drucker-Teilsystem nach Anspruch 7 oder 8, dadurch gekennzeichnet, dass es eine Vielzahl von Druckkoepfen aufweist, wobei jeder Druckkopf eine Mehrzahl von Druckdrahten enthaelt.

10. Drucker-Teilsystem nach Anspruch 7, 8 oder 9, dadurch gekennzeichnet, dass es weiterhin einschliesst:

— Auswahlmittel (65) zur Auswahl einer Mehrzahl von Diagnosenpruefvoraengen bei der Druckvorrichtung, einschliesslich einem Pruefvorgang mit einer Drahtbetaetigungs-Abbildung,

— einen Speicher (217) zum Speichern abgedruckter Punktmuster fuer einen Pruefzweck;

— Drahtbetaetigungs-Abbildungsmittel (202, 211, 220, 213), die im Ansprechen auf die Auswahlmittel betreibbar sind, wenn der Pruefvorgang der Drahtbetaetigungs-Abbildung selektiert ist, um in dem Speicher die dem Pruefprogram entsprechenden Pruefdaten einzuspeichern und den Druckdrahtbetaetigungselementen (35) Betaetigungssignale in Abhaengigkeit von dem vorbestimmten Pruefprogram zuzufuehren, so dass die effektiven und schiefgegangenen Ausloesverhaeltnisse der Druckdrahtbetaetigungselemente und der entsprechenden Druckdrahte auf einem Aufzeichnungsmedium lesbar sind.

11. Drucker-Teilsystem nach einem der vorhergehenden Ansprueche, dadurch gekennzeichnet, dass es weiterhin einschliesst:

— Kopf/Draht-Bezeichnungsmittel (286, 287), die in den Druckdrahtbetaetigungs-Abbildungsmittel zur Einspeicherung von Daten in dem Speicher (217) eingebaut sind, der die Druckdrahtbetaetigungselemente (35) und die entsprechenden Druckdrahte (33) so bewirken wird, dass sie eine Kennzeichnung auf dem Aufzeichnungsmedium aufzeichnen, die derartigen Aufschluss bezueglich der Druckkoepfe und Druckdraehte gibt, dass Diagnosen ueber die effektiven und schiefgegangenen Ausloesverhaeltnisse leicht ausgefuehrt werden koennen.

12. Druckter-Teilsystem nach Anspruch 11, dadurch gekennzeichnet dass Druckdrahtausloes-Abbildungsmittel (202, 211, 220, 213) zur Betaetigung der Druckdrahtbetaetigungselemente (35) und der Druckdrahte (33) in Abhaengigkeit von einem sequentiellen Ablauf so betreibbar sind, dass die effektiven und schiefgegangenen Druckdraht-Ausloesvorgaengen in einem sequentiellen Matrixformat der Zaehlung der in der Druckvorrichtung verwendeten Druckkoepfe und der Druckdrahte lesbar sind.

13. Drucker-Teilsystem nach Anspruch 12, dadurch gekennzeichnet, dass die in den Druckdrahtausloes-Abbildungsmittel (202, 211, 220, 213) eingebauten Steuermittel Daten in dem den Druckdrahten (33) entsprechenden Speicher (217) in einem sequentiellen Ablauf einspeichern, wobei die Daten fuer eine besondere Druckdraht vor der Zufuehrung von den Daten fuer die naechste Druckdraht abgedruckt sind, und wobei die Daten die abzudruckende Information wie Druckkopfnummer und Druckdrahtnummer enthalten, wobei die Druckdrahtausloes-Abbildungsmittel den Abdruck der in dem Speicher gespeicherten Druckdrahtausloes- Daten mindestens zweimal ueberwacht, so dass es eine schnellere Auswertung des Druckdrahtausloes-Abbildung-Printouts ermoeglicht.

14. Drucker-Teilsystem nach Anspruch 7, dadurch gekennzeichnet, dass die Druckvorrichtung einen Vorlagenantrieb-Motor, einen Abdruckantrieb- Motor und mindestens einen Farbbandantrieb-Motor einschliesst, wobei der Vorlagenantrieb-Motor und der Abdruckantrieb-Motor jeweils zugeordnete Emitter-Glieder aufweisen, und worin das Steuerwerk und die Abfuehlmittel als Schnittstellen mit dem Steuerwerk und der Druckvorrichtung so wirken, dass sie den Vorlagenantrieb-Motor, den Abdruckantrieb-Motor, und den Farbbandantrieb-Motor steuern und weiterhin zum Abfuehlen des Zustands der einzelnen Druckelemente wie die Abdruckemitter und die Vorlagenemitter und dergleichen betriebbar sind.

FIG. 1

FIG. 15

LOCAL WORK STATION
PRINTER APPLICATION

HOST
SYSTEM

INTERFACE CABLE

REMOTE WORK STATION
PRINTER APPLICATION

HOST
SYSTEM

COMMUNICATION
LINK

CONTROLLER

INTERFACE
CABLE

FIG. 3

CABLE
CONNECTORS
AND ADDRESS
SWITCHES

CABLE
CONNECTOR

FIG. 4

HOST
SYSTEM

TWINAX
CABLE

TWINAX
CABLE

CABLE LENGTH

**0 027 899**

INFORMATION STREAM

| DATA FRAME | DATA FRAME | FRAME SYNC | BIT SYNC |

FIG. 5

CONTROLLER — RECEIVE →  2    FIG. 6

FILL BITS—ALWAYS 000 --
— PARITY BIT FOR EVEN PARITY
— END OF MESSAGE—111--
— COMMAND MODIFIER
— COMD. OR DATA
— SYNC BIT

FILL BITS—ALWAYS 000 —
— PARITY BIT FOR EVEN PARITY
— ADDRESS 000 THROUGH 110 --
— COMMAND MODIFIER
— COMMAND OR DATA
— SYNC BIT

| 0 | 1 | 2 | 3 | 4 | 5 | 6 | 7 | 8 | 9 | 10 | 11 | 12 | 13 | 14 | 15 | | 0 | 1 | 2 | 3 | 4 | 5 | 6 | 7 | 8 | 9 | 10 | 11 | 12 | 13 | 14 | 15 | |

| 0 0 0 P 1 1 1 X X X X X X X X 1 | | 0 0 0 P @ @ @ X X X X X X X X 1 | FRAME-SYNC PATTERN |

LAST FRAME    ADDITIONAL FRAMES    FIRST FRAME

TRANSMIT →  CONTROLLER    FIG. 7

FILL BITS ·ALWAYS 000 --
— PARITY BIT FOR EVEN PARITY
— END OF MESSAGE—111—
— STATUS
— SYNC BIT

FILL BITS—ALWAYS 000 --
— PARITY BIT FOR EVEN PARITY
— ADDRESS—000 THROUGH 110 —
— STATUS
— SYNC BIT

| 0 | 1 | 2 | 3 | 4 | 5 | 6 | 7 | 8 | 9 | 10 | 11 | 12 | 13 | 14 | 15 | | 0 | 1 | 2 | 3 | 4 | 5 | 6 | 7 | 8 | 9 | 10 | 11 | 12 | 13 | 14 | 15 |

| 0 0 0 P 1 1 1 X X X X X X X X 1 | | 0 0 0 P @ @ @ X X X X X X X X 1 | FRAME-SYNC PATTERN |

LAST FRAME    ADDITIONAL FRAMES    FIRST FRAME

3

0 027 899

─END OF MESSAGE -III-                    -ADDRESS-000 THRU 110-

0 1 2 3 4 5 6 7 8 9 10 11 12 13 14 15      0 1 2 3 4 5 6 7 8 9 1 11 12 13 14 15

0 0 0|P|1 1 1|X X X X X X X X|1|   |0 0 0|P|⑥ ⑪ ⑥|X X X X X X X X|1|

‎ ‎ ‎ ‎ ‎LAST FRAME          ADDITIONAL FRAMES    8      IST FRAME

### FIG. 8

```
┌──────────┐              INFORMATION STREAM
│  HOST    │    ┌──────┬─────────┬─────────┬────────────┬──────┐
│ SYSTEM   │────┤ DATA │ FORMAT  │ FORMAT  │OPERATIONAL │ SYNC ├──▶
│          │    │      │COMMAND  │COMMAND  │ COMMAND    │      │
└──────────┘    └──────┴─────────┴─────────┴────────────┴──────┘
     1                                                              2
```

### FIG. 9

## SAMPLE TRANSFER SEQUENCE FOR PRINTING DATA

CONTROLLER                                    PRINTER

1 ─────────────── POLL -FOR STATUS- ──────────────────▶
2 ◀────────────── STATUS -2 FRAMES- ───────────────────
3 ─────────────── WRITE DATA ─────────────────────────▶
4 ─────────────── POLL -FOR STATUS- ──────────────────▶
5 ◀────────────── STATUS -2 FRAMES- ───────────────────
6 ─────────────── ACTIVATE WRITE ─────────────────────▶
7 ─────────────── DATA -UP TO 256 FRAMES- ────────────▶

1,4: POLL COMMAND REQUESTS PRINTER STATUS
2,5: RESPONSE STATUS FRAMES INFORM CONTROLLER OF PRINTER AVAILABILITY
  3: WRITE DATA COMMAND PREPARES PRINTER FOR PRINTING OPERATION
  6: ACTIVATE WRITE COMMAND STARTS PRINTING OPERATION
  7: CONTROLLER SENDS DATA & EMBEDDED FORMATTING COMMANDS TO PRINTER

### FIG. 10

4

0 027 899

OPERATIONAL COMMAND

POLL -X0-

| 0 | 0 | 0 | X | X | X | X | X | X | X | 1 | 0 | 0 | 0 | 0 | 1 |

0                                                           15

NOT USED     ACKNOWLEDGE

LINE PARITY RESET

**FIG. 11**

FORMATTING COMMAND

NEW LINE-15-

| 0 | 0 | 0 | X | X | X | X | 0 | 0 | 0 | 1 | 0 | 1 | 0 | 1 | 1 |

0                                                           15

**FIG. 12**

POLL STATUS FRAME 1

| 0 | 1 | 2 | 3 | 4 | 5 | 6 | 7 | 8 | 9 | 10 | 11 | 12 | 13 | 14 | 15 |

FILL

PARITY

PRINTER ADDRESS

BUSY

LINE PARITY

UNIT NOT AVAILABLE

OUTSTANDING STATUS

EXCEPTION STATUS

CURRENT PREVIOUS RESPONSE LEVEL

SYNC BIT

**FIG. 13**

POLL STATUS FRAME 2

| 0 | 1 | 2 | 3 | 4 | 5 | 6 | 7 | 8 | 9 | 10 | 11 | 12 | 13 | 14 | 15 |

FILL

PARITY

END OF MESSAGE

INVALID SCS CONTROL CHARACTER

INVALID SCS PARAMETER

RECEIVE BUFFERS FULL

PRINT COMPLETE

CANCEL REQUEST

THERMAL CHECK

NOT USED

GRAPHIC CHECK

SYNC BIT

**FIG. 14**

5

STATUS                                    26

0   OFF LINE
E   END OF FORMS                   (56)            (57)
D   NO LINE ACTIVITY            ATTENTION         READY
C   ADDRESS NOT REC.
B   LINE CHECK                  DENSITY
A   DATA CLEARED
9   GRAPHIC CHECK               10A6   10 CPI AT 6 LPI
8   RIBBON JAM-                 10A8   10 CPI AT 8 LPI
7   COVER OR PLATEN             15A6   15 CPI AT 6 LPI
    OPEN                        15A8   15 CPI AT 8 LPI
                                10CC   HOST CONTROLLED
                                15CC   HOST CONTROLLED

DENSITY              ONE LINE  LED            I POWER
[60]   [51]  [52]    [53]      [59]
DISPLAY SPACE STOP/  START    DISPLAY
             RESET                          58-
CANCEL                        SHIFT
[54]                          [55]                0
NEW PAGE

FIG.16

ON LINE
E        BUFFER PRINT
D           TEST
C                    2
B                    3
A                    4
9                    5
8                    6
                     7

FIG. 17

6

FIG. 18

0 027 899

FIG. 19

FIG. 20

FIG. 21

FIG. 22

FIG. 23

FIG. 24

FIG. 25

CK LINES

CONTROL LINES

MP A

200

HEAD IMAGE GENERATOR

210

MP B

ADDRESS

DATA

RANDOM ACCESS MEMORY

217

220

DATA

WIRE IMAGE DATA

FIG. 26

3

1 2 3 4 5 6 7 8 9

1
2
3
4
5
6
7
8

FIG. 27

FIG. 28

HEAD 1

4        8

PROGRAMABLE HEAD SPACING

HEAD 2

1        5        2        6        3        7        4        3

FIG. 29

0 027 899

0 027 899

FIG. 30A

12

FIG. 31

| FIG. 30A | FIG. 30B |
|----------|----------|

CONTROL ADAPTER –CTA–

211

CTA STORAGE 232
–READ ONLY STORAGE–

SIG

CONTROL MICROPROCESSOR –CTM–
STG
210
DBI DBO ABO

STATUS REGISTER 225

COMMAND REGISTER 226

CMA/CTA DECODE 228

INPUT/OUTPUT STACK 227

FIG. 30B

CONTROL & SENSE

DECODE 233

CTA DECODE 213

HEAD LATCH

PRINTER CONTROL 234

PRINTER SENSE 237

HEAD LATCH

MOTORS PRINT HEAD FORMS 235

RIBBON

EMITTERS PRINT FORMS 236

RIBBON

212

PRINT WIRE ACTUATORS 35

13

**0 027 899**

FIG. 32

14

COMMUNICATIONS MICROPROCESSOR —CMM—

FIG. 33

```
        ┌──────────────┐
        │ POWER ON     │
        │ DIAGNOSTICS  │
        └──────┬───────┘
               │
        ┌──────▼───────┐
        │ LOAD SELECTED│
        │ LANGUAGE     │
        └──────┬───────┘
               │
          ┌────▼────┐
         ╱  OFF      ╲        NO    ┌──────────────┐
        ╱ LINE OPERA- ╲─────────────│ PROCESS      │
        ╲   TION      ╱             │ INTERFACE DATA│
         ╲────┬────╱               └──────┬───────┘
           YES│                            │
        ┌──────▼───────┐                   │
        │ COMMUNICATE  │- - - - - - - - - →│
        │ WITH CTM     │                   │
        └──────┬───────┘                   │
               │                           │
        ┌──────▼───────┐                   │
        │ OPERATOR     │- - - - - - - - - →│
        │ PANEL PROCESSING                 │
        └──────┬───────┘                   │
               │                           │
        ┌──────▼───────┐                   │
        │ PROCESS FORMS│- - - - - - - - - →│
        │ CONTROL DATA │                   │
        └──────┬───────┘                   │
               │                           │
        ┌──────▼────────────┐              │
        │ PROCESS PRINT BUFFERS            │
        │ ALSO SNA COMMANDS │- - - - - - →│
        └───────────────────┘              │
                                           │
                                    ┌──────▼───────┐
                                    │ ERROR        │
                                    │ PROCESSING   │
                                    └──────────────┘
```

**0 027 899**

CONTROL MICROPROCESSOR —CTM—    FIG. 34

16

**0 027 899**

FIG. 35A

201a    COMMUNICATIONS INTERFACE

17

COMMUNICATIONS INTERFACE  201a                FIG. 35 B

—EVEN— CMM WRITE LOW            BUS    G
—ODD— CMM WRITE HIGH                          H

CMM AHS, CMM SAR 0, CMM DBX

SEL                                    204a
WRITE HI
WRITE LO          1K X 9
                  RANDOM ACCESS MEMORY
                  —EVEN—      —ODD—
DBI              DBO          DBO          SAR
0 -7, P          0 -7, P      3 -15, P     1 - 9

                    Vcc
                  ⎍⎍⎍⎍              CMM STG

                    Vcc
                  ⎍⎍⎍⎍              CMM STG

                                  CMM DBO

                                  CMM SAR
SOFTWARE RESET
DIAG MODE, DESM, DIAG X/R BIT CLOCK        265
START ADDR CMPR
DIAG X/R BINARY DATA              DIAGNOSTIC
LINE SYNC                             &
                                  HARDWARE
                                    SENSE

| FIG. 35A | FIG. 35B | FIG. 35C | FIG. 35D | FIG. 35E | FIG. 35F | FIG. 35G | FIG. 35H |
| FIG. 35I | FIG. 35J | FIG. 35K | FIG. 35L | FIG. 35M | FIG. 35N | FIG. 35O | FIG. 35P |

FIG. 36

                                        E    I    F

                  BUS

# FIG. 35 C   COMMUNICATIONS ADAPTER -CMA- 202a

BUS

CMM DB0

```
COMMUNICATIONS
MICROPROCESSOR
      I
200b   CMM
```

DIAGNOSTIC TEST POINT
CMM START CLOCK
POWER ON RESET

16
MHz
OSC

200a

CMM A80

```
COMMUNICATIONS
MICROPROCESSOR
      II
200a   CMM
```

DIAGNOSTIC TEST POINT
CMM SINGLE CYCLE

CMM DBI 0-7

CMM SA5

MAIN PAGE DISABLE

CMM STG 0-15, P0, P1

CMM STG

CMM DBI

K

D

MD

BUS

S

# FIG. 35 D.

COMMUNICATIONS ADAPTER –CMA– 202a

BUS

CMM DBO 0-7, P

DBO

CMM SELECT 001, 110, 111 STG

16 MHZ OSC

ENABLE DBO

ABO    + ABO    CMM ABO 0-7

+ SAR    CMM SAR 0-12

SAR

CMM SEL STG
CMM CS, SS
CMM WRITE HI, LO
CMM RST STG
CMM DBX
CMM AHS

6K ROS
000
001 MAIN
010

205a

CMM

–P CHEK
–CMA CS
+ ABO
–DBO

HEAD/FORMS OVERCURRENT RESET    Z

DBI

LOGIC
IN/OUT
WRAP

208a

MODE SW

PANEL SW

LANG

ALARM ON
ATTENTION
READY
LATCH DISPLAY
BLANK DISPLAY

207a

LANGUAGE
JUMPERS

A    C    206a    B

BUS

FIG.35E

CONTROL ADAPTER
-CTA-

DIAGNOSTIC TESTPOINTS

CTM START CLOCK
CTM SING CYC

CTM AHS
CTM DBX
CTM SAR 0
CTM SEL STG

CTM RST STG

CTM ERROR

CTM CONTROL STROBE-1-

CTM SS-1-

DIAGNOSTIC
TESTPOINT

CTM ABO 0-7

TO HIG SAR

16 MHZ OSC

ST CLK
SING CYC

SS &
RST CS     ABO  DBI  SAR  STG IN

CTM
CONTROL
MICROPROCESSOR
I

210b

210a

CTM
CONTROL MICRO-
PROCESSOR II

SEL          DBO

210a

CS       ABO

CTA
ADDRESS
DECODE

228a

ABO   DBI   DBO

EN

64 X 9
STACK

227a

RD      CTA DBI

COMMAND
REGISTER

LD      CMA DBO

226a

POWER ON RESET

CMM SEL STG -1-

CMM CS -1-

CMM ABO 0-7

CMM DBO 0-7

HIG HEAD DATA 0-7

CMM DBI 0-7

HIG ERROR, HIG PRINT FEEDBACK -2-

SEL STG

CS

ABO

CMA
ADDRESS
DECODE

228b

BUS

21

## FIG. 35F

# FIG. 35G

HEAD LATCH

213a

HEAD LATCH - ENABLE

DECODE
FEEDBACK
CHECK
ADDRESS
269

CTM AB0 4
CTM AB0 5
CTM AB0 6
CTM AB0 7

ADDRESS
DECODE

268

CTM CONTROL STROBE

FIRE

A

LATCH
WIRE FIRE

A

RESET

LATCH
PEDESTAL

POWER ON RESET

CTM ERROR

Q

V    P

O

D

BUS

0 027 899

FIG. 35 H

HEAD LATCH

213a

LATCHES
HEADS
1, 2, 3

266a

24 WIRES OUT

A  CTM DBI 0

270

LATCHES
HEADS
4, 5, 6

266b

24 WIRES OUT

-PEDESTAL DRIVE

285

LATCHES
HEADS
7, 8, 9

266c

24 WIRES OUT

CTM DATA BUS OUT

T

U

BUS

TO ACTUATOR
DRIVER CARDS

24

FIG. 35 I

FIG. 35 J

FIG. 35 K

# 0 027 899

COMMUNICATIONS STORAGE  215a

216a                          PAGES 1 & 2

4K CMA ROS

RST

SEL B
SEL A
STG        SAR

CMM SAR -10-

CMM DB0 -9-

HIG SAR -10-
CMM RST STG
HIG RST STG
CMM SEL 110
HIG SEL 110
CMM SEL 111
HIG SEL 111
CMM WRITE HIGH

CMM WRITE LOW

4 BITS

CMM SEL 001

8 BITS

CMM DBX
CMM AHS
POWER ON RESET
CMM CS
CMM AB0

V  T  H  I

R  Q

M  W  G  Y  L  D  BUS

FIG. 35 L

FIG. 35 M

FIG. 35 N

FROM POWER
SUPPLY

FROM RIBBON
CONTROL CARD

Z

D

CONTROL &
SENSE
212a

JUMPERS

233a

MUX

237a

4

POWER ON RESET
THERMAL SHUTDOWN
HEAD OVERCURRENT
FORMS OVERCURRENT
TRACTOR OPEN
COVER OPEN
HIGH VOLTAGE GOOD
RIBBON ERROR
HEAD BUSY
LINEAR EMITTER C -PRINT-
LINEAR EMITTER B -TURN AROUND-
LINEAR EMITTER A -MARGIN-
FORMS BUSY
E OF EMITTER
FORMS EMITTER A
FORMS EMITTER B

HEAD ENCODER

RIBBON BUSY

FROM FRAME
HARDWARE

FROM FORMS
AMPLIFIER CARD

FROM EMITTER CARD

FROM HEAD FORMS DRIVE CARD

FIG. 35 O

FIG. 35 P

**FIG. 37**

READ ONLY STORAGE & RANDOM ACCESS MEMORY LOCATIONS
USED IN COMMUNICATION STORAGE

| | |
|---|---|
| 0000 | |
| | MAIN |
| 0800 | |
| | OVERLAYS<br>MAIN    1    2    3    4<br>80    81    82   83   84 |
| 1000 | |
| | |
| 1800 | |
| | |
| 2000 | |
| | |
| 2800 | |
| | |
| 3000 | |
| | |
| 3800 | |
| | |

12 K BYTES OF
READ ONLY STORAGE
INSTRUCTION

2 K BYTES OF WIRE IMAGE
READ ONLY STORAGE

I/F RANDOM ACCESS MEM.

NOT USED

THIS 4 K WIRED
AS 0000 0FFF

3 K OF WIRE IMAGE
RANDOM ACCESS MEMORY
WITH 2 TEXT BUFFERS
& SCRATCH PAD

NOT USED

0 027 899

```
        ( ENTRY FOR WIRE FIRE MAPPING TEST )
                         |
                         v
                ┌─────────────────┐
                │ SKIP TO NEW PAGE│
                └─────────────────┘
                         |
                         v
                      CHAR-
                   ACTER IMAGES
  RECORD  <── YES ──  BEEN MOD-
CHARACTER FONT         IFIED
     |                   |NO
     |                   v
     └──────────>┌──────────────────────┐
                 │ BLANK NEXT TEXT BUFFER│
                 └──────────────────────┘
                         |
                         v<───────────────────┐
        ┌──────────────────────────────────┐  │
        │ STORE CHARACTER THAT WILL FIRE ONLY WIRE │
        │ UNDER TEST IN TEXT BUFFER -1 THRU 8-     │
        └──────────────────────────────────┘  │
                         |                     │
                         v                     │
        ┌──────────────────────────────────┐  │
        │ STORE 'XY' IN TEXT BUFFER WHERE   │  │
        │      X = HEAD NUMBER              │  │
        │      Y = WIRE NUMBER              │  │
        └──────────────────────────────────┘  │
                         |                     │
                         v                     │
        ┌──────────────────────────┐           │
        │ PRINT TEXT BUFFER 2 TIMES │           │
        └──────────────────────────┘           │
                         |                     │
                         v                     │
                      WIRE                     │
                 8 COMPLETED ── NO ────────────┘
                  PRINTING
                     |YES
                     v
        ( RETURN TO OFFLINE OPERAT. )
```

FIG. 38

34

FIG. 39